(19) Europäisches Patentamt
European Patent Office
Office européen des brevets

(11) EP 4 379 416 A1

(12) **EUROPEAN PATENT APPLICATION**
published in accordance with Art. 153(4) EPC

(43) Date of publication:
**05.06.2024 Bulletin 2024/23**

(21) Application number: **22849223.7**

(22) Date of filing: **11.07.2022**

(51) International Patent Classification (IPC):
***G01S 7/481*** *(2006.01)* ***G01S 17/894*** *(2020.01)*

(52) Cooperative Patent Classification (CPC):
**G01S 7/481; G01S 17/894**

(86) International application number:
**PCT/JP2022/027242**

(87) International publication number:
**WO 2023/008159 (02.02.2023 Gazette 2023/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.07.2021 US 202163227142 P**

(71) Applicant: **Nuvoton Technology Corporation Japan**
**Nagaokakyo City, Kyoto 617-8520 (JP)**

(72) Inventors:
- **NAKANO, Shingo**
  **Nagaokakyo City, Kyoto 617-8520 (JP)**
- **ASANO, Takuya**
  **Nagaokakyo City, Kyoto 617-8520 (JP)**
- **HAYASHI, Shigeo**
  **Nagaokakyo City, Kyoto 617-8520 (JP)**

(74) Representative: **Novagraaf International SA**
**Chemin de l'Echo 3**
**1213 Onex, Geneva (CH)**

(54) **THREE-DIMENSIONAL RANGING MODULE AND THREE-DIMENSIONAL RANGING SYSTEM**

(57) A three-dimensional ranging module (1) includes: a light source (10) that emits a laser beam; a lens module (20) including: a lens (21) that collects light resulting from the laser beam emitted being reflected off an object; an imaging element (23) that receives the light collected by the lens (21); and a lens tube (22) surrounding a space between the lens (21) and the imaging element (23) and supporting the lens (21); and a lens cover (30) positioned between the lens module (20) and the object and transparent to a wavelength range of the laser beam. In a cross section obtained when the lens tube (22) is cut along a plane including an optical axis (A1) of the lens (21), a first surface (221) of the lens tube (22) that faces the object includes a first slope portion sloping away from the lens cover (30) with an increase in distance from the optical axis (A1).

FIG. 3

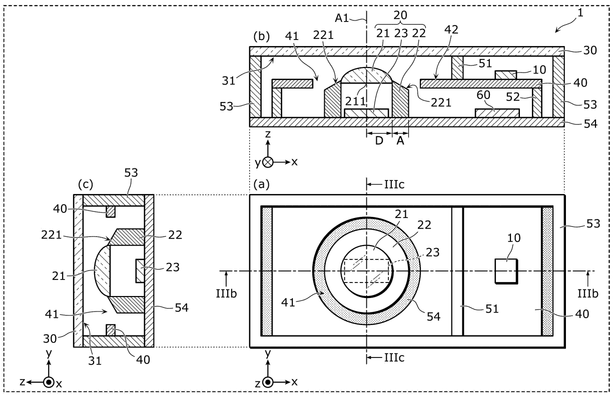




EP 4 379 416 A1

## Description

[Technical Field]

The present disclosure relates to a three-dimensional ranging module and a three-dimensional ranging system.

[Background Art]

A ranging imaging device (a Time of Flight (ToF) camera) that measures a distance to an object by using ToF has been known.

For example, in Patent Literature (PTL) 1, a ToF camera includes a three-dimensional ranging module that includes a light source, a lens module, and a lens base that holds the lens module. The ToF camera measures a distance to an object by the lens module receiving light emitted from the light source and calculating the distance from a time difference between when the light is emitted and when the light is received.

[Citation List]

[Patent Literature]

[PTL 1]
Japanese Unexamined Patent Application Publication No. 2019-191173

[Summary of Invention]

[Technical Problem]

By the way, a three-dimensional ranging module often includes a lens cover between an object and a lens module in order to protect the lens module. In this case, a distance may be inaccurately calculated.

In view of this, the present disclosure provides a three-dimensional ranging module, for instance, that reduces inaccurate calculation of distances.

[Solution to Problem]

A three-dimensional ranging module according to the present disclosure includes: a light source that emits a laser beam; a lens module that includes: a lens that collects light resulting from the laser beam emitted being reflected off an object; an imaging element that receives the light collected by the lens; and a lens tube that surrounds a space between the lens and the imaging element and supports the lens; and a lens cover positioned between the lens module and the object and transparent to a wavelength range of the laser beam. In a cross section obtained when the lens tube is cut along a plane that includes an optical axis of the lens, a first surface of the lens tube includes a first slope portion that slopes away from the lens cover with an increase in distance from the optical axis, the first surface facing the object.

A three-dimensional ranging module according to the present disclosure includes: a light source that emits a laser beam; a lens that collects light resulting from the laser beam emitted being reflected off an object; an imaging element that receives the light collected by the lens; a lens cover positioned between the lens and the object and transparent to a wavelength range of the laser beam; and a member that includes an opening in which the lens is provided when the lens is viewed through the lens cover in a direction of an optical axis of the lens. A relation of $(H1+H2)\cdot\tan\theta \leq B$ is satisfied, where in a cross section obtained when the lens is cut along a plane that includes the optical axis, B denotes a distance between an outer edge of the lens and an outer edge of the opening, H1 denotes a distance between the lens cover and a center of the lens, H2 denotes a distance between the lens cover and a second surface of the member, the second surface facing the lens cover, and $\theta$ denotes an angle between the optical axis and a line that connects the center of the lens and an outer edge of the imaging element.

A three-dimensional ranging module according to the present disclosure includes: a light source that emits a laser beam; a lens module that includes: a lens that collects light resulting from the laser beam emitted being reflected off an object; an imaging element that receives the light collected by the lens; and a lens tube that surrounds a space between the lens and the imaging element and supports the lens; and a lens cover positioned between the lens module and the object and transparent to a wavelength range of the laser beam. A third surface of the lens cover includes a third slope portion that slopes away from the lens module with an increase in distance from an optical axis of the lens, the third surface facing the lens module.

A three-dimensional ranging system according to the present disclosure includes: the three-dimensional ranging module. The three-dimensional ranging module includes: a calculator that calculates a distance from the light source to the object, based on a time of flight of the laser beam.

Note that these general and specific aspects may be implemented using a system, a method, an integrated circuit, a computer program, a computer-readable recording medium such as a CD-ROM, or any combination of systems, methods, integrated circuits, computer programs, or recording media.

[Advantageous Effects of Invention]

According to a three-dimensional ranging module, for instance, according to an aspect of the present disclosure, inaccurate calculation of discloses can be reduced.

[Brief Description of Drawings]

[FIG. 1]
FIG. 1 shows a range image in which an intense flare region is generated.
[FIG. 2]
FIG. 2 is a block diagram illustrating an example of a configuration of a three-dimensional ranging module, according to Embodiment 1.
[FIG. 3]
FIG. 3 illustrates a top view and two cross-sectional views of the three-dimensional ranging module, according to Embodiment 1.
[FIG. 4]
FIG. 4 is an enlarged cross-sectional view of a lens tube and therearound, according to Embodiment 1.
[FIG. 5]
FIG. 5 is a cross-sectional view illustrating behavior of a laser beam, according to Embodiment 1.
[FIG. 6]
FIG. 6 illustrates influence on the flare quantity when a slope angle of a first slope portion is changed, according to Embodiment 1.
[FIG. 7]
FIG. 7 illustrates a relation between distances from three-dimensional ranging module 1 to an object and another object, according to Embodiment 1.
[FIG. 8]
FIG. 8 is a cross-sectional view illustrating other behavior of a laser beam, according to Embodiment 1.
[FIG. 9]
FIG. 9 is another diagram illustrating influence on the flare quantity when a slope angle of the first slope portion is changed, according to Embodiment 1.
[FIG. 10]
FIG. 10 is another diagram illustrating influence on the flare quantity when a slope angle of the first slope portion is changed, according to Embodiment 1.
[FIG. 11]
FIG. 11 is another diagram illustrating influence on the flare quantity when a slope angle of the first slope portion is changed, according to Embodiment 1.
[FIG. 12]
FIG. 12 is another diagram illustrating influence on the flare quantity when a slope angle of the first slope portion is changed, according to Embodiment 1.
[FIG. 13]
FIG. 13 is another diagram illustrating influence on the flare quantity when a slope angle of the first slope portion is changed, according to Embodiment 1.
[FIG. 14]
FIG. 14 is a diagram for explaining effects of the first slope portion being linear, according to Embodiment 1.
[FIG. 15]
FIG. 15 is another diagram for explaining effects of the first slope portion being linear, according to Embodiment 1.
[FIG. 16]
FIG. 16 is another diagram for explaining effects of the first slope portion being linear, according to Embodiment 1.
[FIG. 17]
FIG. 17 illustrates a top view and two cross-sectional views of a three-dimensional ranging module according to Variation 1 of Embodiment 1.

[FIG. 18]

FIG. 18 illustrates a top view of a lens tube and a lens and cross-sectional views of the lens tube, according to Variation 1 of Embodiment 1.

[FIG. 19]

FIG. 19 illustrates a relation between δ and β according to Variation 1 of Embodiment 1.

[FIG. 20]

FIG. 20 illustrates a top view and two cross-sectional views of a three-dimensional ranging module according to Variation 2 of Embodiment 1.

[FIG. 21]

FIG. 21 is a cross-sectional view showing behavior of a laser beam according to Variation 2 of Embodiment 1.

[FIG. 22]

FIG. 22 is a cross-sectional view showing other behavior of a laser beam according to Variation 2 of Embodiment 1.

[FIG. 23]

FIG. 23 illustrates a cross-sectional view of a three-dimensional ranging module 1c according to Variation 3 of Embodiment 1.

[FIG. 24]

FIG. 24 is a diagram illustrating influence on the flare quantity when a slope angle of a first slope portion is changed, according to Variation 3 of Embodiment 1.

[FIG. 25]

FIG. 25 is another diagram illustrating influence on the flare quantity when a slope angle of the first slope portion is changed, according to Variation 3 of Embodiment 1.

[FIG. 26]

FIG. 26 is another diagram illustrating influence on the flare quantity when a slope angle of the first slope portion is changed, according to Variation 3 of Embodiment 1.

[FIG. 27]

FIG. 27 is another diagram illustrating influence on the flare quantity when a slope angle of the first slope portion is changed, according to Variation 3 of Embodiment 1.

[FIG. 28]

FIG. 28 is another diagram illustrating influence on the flare quantity when a slope angle of the first slope portion is changed, according to Variation 3 of Embodiment 1.

[FIG. 29]

FIG. 29 illustrates a top view and a cross-sectional view of a three-dimensional ranging module according to Embodiment 2.

[FIG. 30]

FIG. 30 is a diagram illustrating influence on the flare quantity when D, B, H1, and H2 are changed, according to Embodiment 2.

[FIG. 31]

FIG. 31 is another diagram illustrating influence on the flare quantity when D, B, H1, and H2 are changed, according to Embodiment 2.

[FIG. 32]

FIG. 32 is another diagram illustrating influence on the flare quantity when D, B, H1, and H2 are changed, according to Embodiment 2.

[FIG. 33]

FIG. 33 is another diagram illustrating influence on the flare quantity when D, B, H1, and H2 are changed, according to Embodiment 2.

[FIG. 34]

FIG. 34 illustrates a top view and two cross-sectional views of a three-dimensional ranging module according to Variation 1 of Embodiment 2.

[FIG. 35]

FIG. 35 illustrates a top view of a substrate according to Variation 1 of Embodiment 2.

[FIG. 36]

FIG. 36 illustrates a cross-sectional view of a three-dimensional ranging module according to Sixth Example.

[FIG. 37]

FIG. 37 illustrates a top view and a cross-sectional view of a three-dimensional ranging module according to Variation 2 of Embodiment 2.

[FIG. 38]

FIG. 38 illustrates a cross-sectional view of a three-dimensional ranging module according to Embodiment 3.

[FIG. 39]
FIG. 39 is a diagram illustrating influence on the flare quantity when a slope angle of a third slope portion is changed, according to Embodiment 3.
[FIG. 40]
FIG. 40 is another diagram illustrating influence on the flare quantity when a slope angle of the third slope portion is changed, according to Embodiment 3.
[FIG. 41]
FIG. 41 illustrates a top view and two cross-sectional views of a three-dimensional ranging module according to Variation 1 of Embodiment 3.
[FIG. 42]
FIG. 42 illustrates a cross-sectional view showing behavior of light in the three-dimensional ranging module according to Variation 1 of Embodiment 3.
[FIG. 43]
FIG. 43 is a diagram illustrating influence on the flare quantity when a slope angle of a third slope portion is changed, according to Variation 1 of Embodiment 3.
[FIG. 44]
FIG. 44 is another diagram illustrating influence on the flare quantity when a slope angle of the third slope portion is changed, according to Variation 1 of Embodiment 3.
[FIG. 45]
FIG. 45 illustrates a top view and cross-sectional views of a three-dimensional ranging module according to Variation 2 of Embodiment 3.
[FIG. 46]
FIG. 46 illustrates a relation between $\delta$ and $\zeta$ according to Variation 2 of Embodiment 3.
[FIG. 47]
FIG. 47 illustrates a top view and two cross-sectional views of a three-dimensional ranging module according to Variation 3 of Embodiment 3.
[FIG. 48]
FIG. 48 illustrates a cross-sectional view of a three-dimensional ranging module according to Variation 4 of Embodiment 3.
[FIG. 49]
FIG. 49 illustrates a top view and a cross-sectional view of a three-dimensional ranging module according to Embodiment 4.
[FIG. 50]
FIG. 50 illustrates a cross-sectional view of a three-dimensional ranging module according to Embodiment 5.

[Description of Embodiments]

(Findings Leading to Aspects of the Present Disclosure)

The inventors of the present application found that three-dimensional ranging modules had problems as follows.
A three-dimensional ranging module often includes a lens cover between an object and a lens module. When a ranging imaging device that includes such a three-dimensional ranging module is used outdoors, a lens cover is provided in order to protect a lens module that includes a lens and a lens tube that supports the lens. When the three-dimensional ranging module itself is to be made less noticeable, a lens cover that is, for example, transparent to a wavelength range of infrared light and opaque to visible light, which are emitted by the light source, is used.
When light emitted to measure a distance is reflected off an object and returns, if the distance to the object is short and the object has a surface having a high reflectance (particularly when the object has a concave shape, the concave shape has a focal point, and its focal distance and the distance to the object coincide with each other), the object is observed as a bright spot having high luminance.
More specific description is given with reference to FIG. 1.
FIG. 1 shows a range image in which an intense flare region is generated. More specifically, (a) of FIG. 1 is a range image in which intense flare does not occur, whereas (b) of FIG. 1 is a range image in which intense flare occurs. Here, range images show that a portion having a darker color is more distant. Note that a region shown white is a region for which a distance thereto cannot be calculated due to light that has returned from an object being too weak since the object is far away or a reflectance of the object is extremely low. As illustrated in (b) of FIG. 1, since an object (object X) that includes a surface having a high reflectance is disposed in a center of the image, intense flare occurs.
Light emitted from a light source for distance measurement is reflected off an object (object X), and the reflected light directly enters a lens of a lens module through a lens cover and forms an image at a point on an imaging element included in a three-dimensional ranging module.

Out of the reflected light from object X, light that does not directly enter the lens but is reflected off (scattered by) a surface (an upper surface) of a lens tube that faces object X may be again reflected off a surface (a lower surface) of the lens cover that faces the lens module, may enter the lens, and may form an image on the imaging element. At this time, the light that enters the lens by being again reflected off the lower surface forms an image on another point on the imaging element which is different from the point at which light that directly enters the lens forms an image. This state is expressed as a state in which intense flare occurs. In (b) of FIG. 1, a ring-shaped intense flare region is generated due to intense flare.

On the other hand, on the point at which the intense flare forms an image, light reflected off another object (object Y) different from object X, or stated differently, light that reaches the imaging element in a direction different from the direction in which the light that has entered by being again reflected off the lower surface of the lens cover also directly enters the lens and forms an image. Thus, a distance is calculated at the point on which intense flare forms an image, based on times of flight of light rays from different two locations.

For a three-dimensional ranging module, the reflectance of a lens tube and the reflectance of a lens cover are normally designed to be low in order to avoid stray light, and thus the intensity of intense flare is relatively low. However, intensity of reflected light has a relation in which the intensity is lower in inverse proportion to a square of the distance ratio. Thus, if object Y is distant from object X, intensity of reflected light from object Y is significantly low. Accordingly, the intensity of intense flare from object X may be higher than the intensity of reflected light from object Y.

At this time, a distance is calculated for a direction in which object Y is positioned, based on intense flare from object X that is stronger light, which results in a problem that distances are inaccurately calculated (an intense flare region is generated).

In view of this, the present disclosure provides a three-dimensional ranging module that reduces inaccurate calculation of distances.

A three-dimensional ranging module according to an aspect of the present disclosure includes: a light source that emits a laser beam; a lens module that includes: a lens that collects light resulting from the laser beam emitted being reflected off an object; an imaging element that receives the light collected by the lens; and a lens tube that surrounds a space between the lens and the imaging element and supports the lens; and a lens cover positioned between the lens module and the object and transparent to a wavelength range of the laser beam. In a cross section obtained when the lens tube is cut along a plane that includes an optical axis of the lens, a first surface of the lens tube includes a first slope portion that slopes away from the lens cover with an increase in distance from the optical axis, the first surface facing the object.

According to this, when the laser beam reflected off the object that corresponds to a bright spot is reflected off the first surface (the first slope portion), light (intense flare) that reaches the lens and the imaging element is reduced. Accordingly, the quantity of intense flare that reaches the lens and the imaging element is reduced, and thus a three-dimensional ranging module that reduces inaccurate calculation of distances can be produced.

For example, the first slope portion may be provided over an entirety of the first surface.

According to this, when the laser beam reflected off the object that corresponds to a bright spot is reflected off the first surface (the first slope portion), the laser beam is readily reflected off the first surface (the first slope portion) in a direction opposite from the lens and the imaging element. Accordingly, the quantity of intense flare that reaches the lens and the imaging element is further reduced, and thus a three-dimensional ranging module that further reduces inaccurate calculation of distances can be produced.

For example, a full width at half maximum of a scattering angle of the first surface at which the laser beam is scattered may be at least 45 degrees.

According to this, the laser beam reflected off the object that corresponds to a bright spot undergoes diffuse reflection on the first surface (the first slope portion). Thus, light (intense flare) that reaches the lens and the imaging element is further reduced. Accordingly, the quantity of intense flare that reaches the lens and the imaging element is further reduced, and thus a three-dimensional ranging module that further reduces inaccurate calculation of distances can be produced.

For example, in the cross section, an angle between the first slope portion and a surface of the lens cover may be at least 30 degrees, the surface facing the lens module.

According to this, the angle between the first slope portion and the surface of the lens cover that faces the lens module is sufficiently large, and thus light (intense flare) that reaches the lens and the imaging element is further reduced. Accordingly, the quantity of intense flare that reaches the lens and the imaging element is further reduced, and thus a three-dimensional ranging module that further reduces inaccurate calculation of distances can be produced.

For example, in the cross section, the first slope portion may be linear.

According to this, the quantity of intense flare that reaches the lens and the imaging element is further reduced, and thus a three-dimensional ranging module that further reduces inaccurate calculation of distances can be produced.

For example, in a view in a direction of the optical axis, a contour of the lens tube may be analogous to a contour of the imaging element, and a degree of a slope of the first slope portion from a plane perpendicular to the optical axis may have a positive correlation with a distance between the optical axis and an outer edge of the lens tube.

According to this, the quantity of intense flare that reaches the imaging element is further reduced, and thus a three-dimensional ranging module that further reduces inaccurate calculation of distances can be produced.

For example, a full width at half maximum of a scattering angle of the first surface at which the laser beam is scattered may be at most 7 degrees.

According to this, the laser beam reflected off the object that corresponds to a bright spot is reflected off the first surface (the first slope portion) in a state in which diffuse reflection is reduced. Also in this case, light (intense flare) that reaches the lens and the imaging element is further reduced. Accordingly, the quantity of intense flare that reaches the lens and the imaging element is further reduced, and thus a three-dimensional ranging module that further reduces inaccurate calculation of distances can be produced.

For example, when the lens is viewed from a side of the lens cover closer to the object, an angle between the first slope portion and a plane perpendicular to the optical axis may be at least $\varepsilon/2$, where $\varepsilon$ denotes a maximum angle of an angle between the optical axis and a direction in which a front side of the lens is visible.

When the laser beam reflected off an object that corresponds to a bright spot is reflected off the first surface (the first slope portion) in a state in which diffuse is reduced, light (intense flare) that reaches the lens and the imaging element may occur due to reflection of light inside the three-dimensional ranging module. Since the angle between the first slope portion and the plane perpendicular to the optical axis of the lens is within the above angle range, the laser beam reflected off the object is reflected off an element (such as a light-blocking member, for example) included in the three-dimensional ranging module and does not readily reach the lens or the imaging element. Thus, the quantity of intense flare that reaches the lens and the imaging element is further reduced, and thus a three-dimensional ranging module that further reduces inaccurate calculation of distances can be produced.

For example, the three-dimensional ranging module may further include: a member that includes an opening in which the lens is provided when the lens is viewed through the lens cover in a direction of the optical axis of the lens. A relation of $(H1+H2)\cdot\tan\theta \leq B$ may be satisfied, where in the cross section obtained when the lens tube is cut along the plane that includes the optical axis of the lens, B denotes a distance between an outer edge of the lens and an outer edge of the opening, H1 denotes a distance between the lens cover and a center of the lens, H2 denotes a distance between the lens cover and a second surface of the member, the second surface facing the lens cover, and $\theta$ denotes an angle between the optical axis and a line that connects the center of the lens and an outer edge of the imaging element.

According to this, when the laser beam reflected off the object that corresponds to a bright spot undergoes diffuse reflection on the second surface, light (intense flare) that reaches the lens and the imaging element is reduced. Accordingly, the quantity of intense flare that reaches the lens and the imaging element is reduced as a whole, and thus a three-dimensional ranging module that reduces inaccurate calculation of distances can be produced.

For example, a third surface of the lens cover may include a third slope portion that slopes away from the lens module with an increase in distance from the optical axis, the third surface facing the lens module.

According to this, when the laser beam reflected off the object that corresponds to a bright spot is reflected off the third surface (the third slope portion), light (intense flare) that reaches the lens and the imaging element is reduced. Accordingly, the quantity of intense flare that reaches the lens and the imaging element is reduced, and thus a three-dimensional ranging module that reduces inaccurate calculation of distances can be produced.

For example, a three-dimensional ranging module according to an aspect of the present disclosure includes: a light source that emits a laser beam; a lens that collects light resulting from the laser beam emitted being reflected off an object; an imaging element that receives the light collected by the lens; a lens cover positioned between the lens and the object and transparent to a wavelength range of the laser beam; and a member that includes an opening in which the lens is provided when the lens is viewed through the lens cover in a direction of an optical axis of the lens. A relation of $(H1+H2)\cdot\tan\theta \leq B$ is satisfied, where in a cross section obtained when the lens is cut along a plane that includes the optical axis, B denotes a distance between an outer edge of the lens and an outer edge of the opening, H1 denotes a distance between the lens cover and a center of the lens, H2 denotes a distance between the lens cover and a second surface of the member, the second surface facing the lens cover, and $\theta$ denotes an angle between the optical axis and a line that connects the center of the lens and an outer edge of the imaging element.

According to this, when the laser beam reflected off the object that corresponds to a bright spot undergoes diffuse reflection on the second surface, light (intense flare) that reaches the lens and the imaging element is reduced. Accordingly, the quantity of intense flare that reaches the lens and the imaging element is reduced as a whole, and thus a three-dimensional ranging module that reduces inaccurate calculation of distances can be produced.

For example, in a view in the direction of the optical axis, a contour of the opening may be barrel-shaped.

According to this, the quantity of intense flare that reaches the lens and the imaging element is further reduced, and thus a three-dimensional ranging module that further reduces inaccurate calculation of distances can be produced.

For example, in the cross section, the second surface may include a second slope portion that slopes away from the lens cover with an increase in distance from the optical axis.

According to this, when the laser beam reflected off the object that corresponds to a bright spot is reflected off the second surface (the second slope portion), the laser beam is readily reflected off the second surface (the second slope portion) in a direction opposite from the lens and the imaging element. Accordingly, the quantity of intense flare that reaches the lens and the imaging element is further reduced, and thus a three-dimensional ranging module that further reduces inaccurate calculation of distances can be produced.

A three-dimensional ranging module according to an aspect of the present disclosure includes: a light source that emits a laser beam; a lens module that includes: a lens that collects light resulting from the laser beam emitted being reflected off an object; an imaging element that receives the light collected by the lens; and a lens tube that surrounds a space between the lens and the imaging element and supports the lens; and a lens cover positioned between the lens module and the object and transparent to a wavelength range of the laser beam. A third surface of the lens cover includes a third slope portion that slopes away from the lens module with an increase in distance from an optical axis of the lens, the third surface facing the lens module.

According to this, when the laser beam reflected off the object that corresponds to a bright spot is reflected off the third surface (the third slope portion), light (intense flare) that reaches the lens and the imaging element is reduced. Accordingly, the quantity of intense flare that reaches the lens and the imaging element is reduced, and thus a three-dimensional ranging module that reduces inaccurate calculation of distances can be produced.

For example, in a view in a direction of the optical axis, the third slope portion may be provided over an entirety of a region in which the third slope portion and the lens module overlap.

According to this, when the laser beam reflected off the object that corresponds to a bright spot is reflected off the third surface (the third slope portion), the laser beam is readily reflected off the third surface (the third slope portion) in a direction opposite from the lens and the imaging element. Accordingly, the quantity of intense flare that reaches the lens and the imaging element is further reduced, and thus a three-dimensional ranging module that further reduces inaccurate calculation of distances can be produced.

For example, a fourth surface of the lens cover may be flat, the fourth surface facing the object.

In an environment in which a three-dimensional ranging module is used, when a person, who is an example of a target a distance to whom is to be measured, sees the three-dimensional ranging module, if the fourth surface of the lens cover has irregularities, the person may feel odd. Accordingly, the odd feeling is eliminated by making the fourth surface flat.

For example, in a view in a direction of the optical axis, a contour of the third slope portion may be analogous to a contour of the imaging element, and a degree of a slope of the third slope portion from a plane perpendicular to the optical axis may have a positive correlation with a distance between the optical axis and an outer edge of the third slope portion.

According to this, the quantity of intense flare that reaches the lens and the imaging element is further reduced, and thus a three-dimensional ranging module that further reduces inaccurate calculation of distances can be produced.

For example, a cavity may be provided in a space between the third surface of the lens cover and a fourth surface of the lens cover, the fourth surface facing the object, and in a cross section obtained when the lens cover is cut along a plane that includes the optical axis, a thickness in a direction of the optical axis from the third surface to the fourth surface excluding the cavity may be constant in a region in which the cavity is provided.

According to this, distortion in a range image obtained by the three-dimensional ranging module can be reduced.

For example, a shape of the third surface may include a lens shape, and an optical axis of the lens cover may coincide with the optical axis of the lens.

According to this, distortion in a range image obtained by the three-dimensional ranging module can be reduced.

A three-dimensional ranging system according to an aspect of the present disclosure includes: the three-dimensional ranging module described above. The three-dimensional ranging module includes: a calculator that calculates a distance from the light source to the object, based on a time of flight of the laser beam.

Since the above three-dimensional ranging module can reduce inaccurate calculate of distances, the three-dimensional ranging system that includes such a three-dimensional ranging module can reduce inaccurate calculation of distances.

The following specifically describes embodiments, with reference to the drawings.

Note that the embodiments described below each show a general or specific example. The numerical values, shapes, materials, elements, the arrangement and connection of the elements, manufacturing processes, and the processing order of the manufacturing processes, for instance, described in the following embodiments are mere examples, and thus are not intended to limit the present disclosure. Out of the elements in the following embodiments, elements not recited in any of the independent claims are described as arbitrary elements.

Further, the drawings are schematic diagrams and do not necessarily give strict illustration. Accordingly, for example, scales are not necessarily the same in the drawings. Note that the same numeral is given to substantially the same structure throughout the drawings, and a redundant description is omitted or simplified.

In the Specification of the present application, a term that indicates a relation between elements such as parallel or perpendicular, a term that indicates the shape of an element such as quadrilateral or circular, and a numerical range are expressions that do not necessarily have only strict meanings, but also cover substantially equivalent ranges that include a difference of about several percent, for example.

In the Specification of the present application, the terms "above/upper" and "below/lower" in a configuration of a three-dimensional ranging module do not indicate upward (vertically upward) and downward (vertically downward) in the absolute recognition of space, but are rather used as terms defined by a relative positional relation based on the stacking order in a stacked configuration. Furthermore, the terms "above" and "below" are used not only when two elements are spaced apart from each other and another element is present therebetween, but also when two elements are in close contact with each other and touch each other.

In the Specification and the drawings of the present application, the x axis, the y axis, and the z axis represent three axes of a three-dimensional orthogonal coordinate system. In the embodiments, a direction parallel to a lens of a three-dimensional ranging module is the z-axis direction, and a plane perpendicular to the z-axis direction is an xy plane. In the embodiments described below, the positive z-axis direction may be stated as upward, and the negative z-axis direction may be stated as downward.

[Embodiment 1]

[Configuration]

First, an example of a configuration of three-dimensional ranging module 1 included in three-dimensional ranging system 100 according to the present embodiment is to be described with reference to FIG. 2.

FIG. 2 is a block diagram illustrating an example of a configuration of three-dimensional ranging module 1 according to the present embodiment. FIG. 2 also illustrates object X in addition to three-dimensional ranging module 1. Object X is an example of a target object, a distance to which is measured.

As illustrated in FIG. 2, three-dimensional ranging system 100 includes three-dimensional ranging module 1, and three-dimensional ranging module 1 includes light source 10, imaging element 23, and control unit 60. Control unit 60 includes drive controller 61, frame controller 62, calculator 63, and range image generator 64.

Three-dimensional ranging module 1 (three-dimensional ranging system 100) measures a distance between three-dimensional ranging module 1 and object X as follows. Three-dimensional ranging module 1 calculates time of flight (ToF) of light emitted from light source 10 being reflected off object X and returning to imaging element 23 as reflected light, from a signal amount based on exposure of imaging element 23, and derives the distance by multiplying the ToF by an appropriate coefficient.

Light source 10 emits pulsed light at timings of a light emission control pulse included in a light emission control signal from drive controller 61 included in control unit 60. Pulsed light may be infrared light when a person is in the vicinity, but may be light other than infrared light when nobody is around.

Imaging element 23 is exposed to reflected light from an object to which pulsed light is emitted, at the timing of an exposure control pulse, and outputs an exposure signal indicating an amount of signal charge generated by the exposure. Imaging element 23 includes a solid imaging element referred to as an image sensor. Imaging element 23 captures images with a resolution of approximately 20,000 to 2 million pixels, for example. Imaging element 23 may include separate portions for obtaining images and measuring distances.

Drive controller 61 outputs a light emission control signal that includes a light emission control pulse that designates timing of light emission, and an exposure control signal that includes an exposure control pulse that designates timing of exposure. Drive controller 61 generates a light emission control signal based on the timing of the light emission control pulse. Imaging element 23 outputs an exposure signal that indicates the amount of signal charge generated by the exposure caused according to the exposure control pulse. Calculator 63 included in control unit 60 outputs distance information by converting the exposure signal into time of flight, based on a proportion, for instance, of the amount of signal charge indicated by the exposure signal. Thus, calculator 63 calculates a distance from light source 10 to an object, based on the time of flight of a laser beam. Frame controller 62 outputs a frame identification signal that relates to distance measurement to drive controller 61 and range image generator 64. Range image generator 64 generates a range image, based on the frame identification signal and the distance information that are obtained.

Three-dimensional ranging module 1 is to be further described with reference to FIG. 3.

FIG. 3 illustrates a top view and two cross-sectional views of three-dimensional ranging module 1 according to the present embodiment.

More specifically, (a) of FIG. 3 is a top view of three-dimensional ranging module 1, whereas (b) of FIG. 3 is a cross-sectional view of three-dimensional ranging module 1 taken along line IIIb-IIIb in (a) of FIG. 3. Part (c) of FIG. 3 is a cross-sectional view of three-dimensional ranging module 1 taken along line IIIc-IIIc in (a) of FIG. 3.

Note that (a) of FIG. 3 shows a top view without lens cover 30 for better visibility. The same applies to top views described later.

As described above, three-dimensional ranging module 1 includes light source 10, imaging element 23, and control unit 60. More specifically, as illustrated in FIG. 3, three-dimensional ranging module 1 includes light source 10, lens module 20, lens cover 30, control unit 60, substrate 40, light-blocking member 51, substrate holding portion 52, casing side portion 53, and casing bottom portion 54.

Light source 10 emits a laser beam, and is a semiconductor laser device.

The laser beam emitted by light source 10 is light in an infrared region and has a peak wavelength of 850 nm or 940 nm, for example. A full width at half maximum of the wavelength range of the laser beam is 3 nm. Light source 10 is a surface-emitting semiconductor laser device and includes a light emission surface having a size of 3.5 mm × 3.5 mm. The output of the laser beam is 1 W. Note that the wavelength range, the full width at half maximum of the wavelength range, the light emission surface, and the output of the laser beam emitted by light source 10 are not limited to those stated above.

Light source 10 may include a member that diffuses (scatters) laser beams. For example, light source 10 includes a light-diffusing glass member, which diffuses a laser beam, and the distribution of the diffused laser beam is controlled.

A laser beam emitted by light source 10 is reflected off object X, passes through lens cover 30, and reaches lens 21 included in lens module 20. More specifically, a portion of the laser beam emitted by light source 10 reaches lens 21.

Lens 21 is an optical member that collects light resulting from a laser beam emitted by light source 10 being reflected off object X. Lens 21 is a plano-convex lens as illustrated in FIG. 3, but may be a lens having another shape as long as lens 21 can collect reflected light as described above.

Lens 21 has a radius of 5 mm and a focal distance of 2 mm, but the radius and the focal distance are not limited thereto. The half angle of view of lens 21 is 70 degrees, but is not limited thereto. Note that the half angle of view is half the value of the angle of view showing a range in which imaging element 23 can capture images. On the flat surface (a lower surface) that lens 21 includes, a point that optical axis A1 of lens 21 passes through is center 211 of lens 21. Light collected by such lens 21 reaches imaging element 23.

Imaging element 23 included in lens module 20 receives light collected by lens 21. Imaging element 23 includes pixels for distance measurement and pixels for images, and more specifically, includes 640×480 or 320×240 pixels for distance measurement and 640×480 or 320×240 pixels for images. The top view illustrated in (a) of FIG. 3 is a drawing viewed in the direction of optical axis A1 of lens 21, and in the top view, the contour of imaging element 23 is quadrilateral, and more specifically, rectangular. The shape of imaging element 23 is a flat plate shape, and is disposed in parallel to the xy plane.

Next, lens tube 22 included in lens module 20 is to be described. Lens tube 22 has a hollow shape with no closed ends and is cylindrical, as illustrated in FIG. 3. A columnar cavity is provided inside lens tube 22. Lens tube 22 surrounds the space between lens 21 and imaging element 23. Stated differently, the space between lens 21 and imaging element 23 is located inside lens tube 22. Lens tube 22 has a shape extending along optical axis A1 of lens 21, and optical axis A1 of lens 21 and the axis of lens tube 22 coincide with each other. As stated above, lens tube 22 has a cylindrical shape, and has an annular-ring cross section cut along a plane perpendicular to optical axis A1. Note that (b) of FIG. 3 corresponds to a cross-sectional view obtained when lens tube 22 is cut along a plane that includes optical axis A1 of lens 21.

For example, the inside radius of lens tube 22 denoted by D is 5 mm, the outside radius of lens tube 22 is at least 6 mm and at most 9 mm, so that the thickness (the wall thickness), which is denoted by A, in a direction orthogonal to optical axis A1 is at least 1 mm and at most 4 mm. Note that in the cross-sectional view illustrated in (b) of FIG. 3, D and A have values as stated above, and furthermore, in the present embodiment, D and A are both constant in a cross-sectional view obtained when lens tube 22 is cut along any plane that includes optical axis A1 of lens 21.

The material included in lens tube 22 is not limited in particular, but is aluminum herein. The surface of lens tube 22 may be able to absorb the wavelength range of laser beams in order to reduce stray light, and may be further able to absorb the wavelength range of laser beams and visible light. The surface is black herein. More specifically, a black layer resulting from black fine particles being applied may be provided on the surface of lens tube 22, and black anodization may be applied onto the surface thereof.

Lens tube 22 is to be further described in more detail, with reference to FIG. 3 and FIG. 4.

FIG. 4 is an enlarged cross-sectional view of lens tube 22 and therearound according to the present embodiment. Note that lens 21 is omitted in FIG. 4, for simplifying the illustration.

Here, a surface (a top surface) of lens tube 22 that faces object X is first surface 221. In a cross section obtained when lens tube 22 is cut along a plane that includes optical axis A1 of lens 21, first surface 221 includes first slope portion 222 that slopes away from lens cover 30 with an increase in distance from optical axis A1. Note that this cross section means a view of a plane that includes optical axis A1 and is orthogonal to a light receiving surface (an upper surface) of imaging element 23. In this manner, first surface 221 includes first slope portion 222 that slopes downward with an increase in distance from optical axis A1. More specifically, first slope portion 222 is provided over the entirety of first surface 221. First slope portion 222 is linear in the cross-sectional view illustrated in (b) of FIG. 3, which is obtained when lens tube 22 is cut along a plane that includes optical axis A1 of lens 21. Note that in the present embodiment, first slope portion 222 is linear in a cross-sectional view obtained when lens tube 22 is cut along any plane as long as the plane includes optical axis A1 of lens 21. Note that the present embodiment is not limited thereto, and first slope portion 222 may be provided on a portion of first surface 221. First surface 221 includes first slope portion 222, and thus first surface 221 can be considered to be sloping macroscopically. Sloping macroscopically implies sloping to a degree to which the slope is visually observed.

As illustrated in FIG. 4, a slope angle that is an angle between first slope portion 222 and a plane perpendicular to optical axis A1 (that is, the xy plane) is denoted by β. β may be greater, but if β is excessively great, the thickness of the tip end of lens tube 22 is insufficient so that the tip end becomes structurally weak. Hence, β may be at most 80 degrees. In the present embodiment, β may be at least 10 degrees and at most 80 degrees, may further be at least 30 degrees and at most 70 degrees, and may yet further be at least 45 degrees and at most 60 degrees. First slope portion 222 is linear in a cross-sectional view obtained when lens tube 22 is cut along any plane as long as the plane includes optical axis A1 of lens 21, and β is constant in any of such cross-sectional views.

First surface 221 is a diffuse reflection surface that diffuses (scatters) laser beams. For example, a full width at half maximum of a scattering angle of first surface 221 at which laser beams are scattered is at least 45 degrees. Note that the full width at half maximum of the scattering angle means when light that is incident from the front undergoes diffuse reflection, an angle between the front direction and a direction in which light having an intensity that is half the intensity of light reflected in the front direction out of the light that has undergone diffuse reflection. In uniform diffuse reflection, a full width at half maximum of the light intensity is 60 degrees.

The full width at half maximum of a scattering angle of first surface 221 at which laser beams are scattered may be at least 45 degrees and at most 60 degrees, and may further be at least 50 degrees and at most 60 degrees. If the full width at half maximum of the scattering angle of first surface 221 at which laser beams are scattered is in the above ranges, first surface 221 can sufficiently diffuse (scatter) laser beams.

Furthermore, as illustrated in FIG. 4, imaging element 23 is surrounded by inner side surface 223 of lens tube 22.

As illustrated in FIG. 3, lens 21 is supported by lens tube 22. For example, lens 21 may be placed with the flat surface of lens 21 being in contact with an upper edge of lens tube 22 (an upper edge of first surface 221), or lens 21 may be housed and fixed in the columnar cavity inside lens tube 22.

Next, lens cover 30 is to be described. Lens cover 30 is a plate-shaped member located between lens module 20 and object X, and has a thickness of 1 mm. Lens cover 30 is provided, covering light source 10 and lens module 20. Lens cover 30 may be transparent to the wavelength range of laser beams (or stated differently, the wavelength range in the infrared region).

Transmittance of lens cover 30 for the wavelength range may be at least 60%, may further be at least 80%, or may yet further be at least 90%, but the transmittance is not limited thereto. Furthermore, transmittance of lens cover 30 for the wavelength range in the visible light region may be at most 50%, may further be at most 30%, or may yet further be at most 10%, but the transmittance is not limited thereto. The transmittance of lens cover 30 for the wavelength range in the visible light region is in the above ranges, and thus the inside of three-dimensional ranging module 1 cannot be seen by a person in the vicinity when three-dimensional ranging module 1 is used. This is expected to yield effects of, for instance, enhancing the appearance of three-dimensional ranging module 1 and not giving stress to a person in the vicinity so that he/she will not feel being monitored.

Such lens cover 30 is made of PMMA (acrylic resin), for example. In this case, transmittance of lens cover 30 for wavelengths of laser beams (here, 850 nm and 940 nm) is 92%, and transmittance thereof for a wavelength range in the visible light region is at most 1%. Lens cover 30 may include third surface 31 that is a lower surface facing lens module 20 and a fourth surface that is an upper surface facing object X, and anti-reflection films may be provided on third surface 31 (the lower surface) and the fourth surface (the upper surface). For example, a front reflectance of the two anti-reflection films for the wavelength range of laser beams is at most 1%. Note that the material included in lens cover 30 is not limited to the one stated above, and may be glass, for example. Further, a full width at half maximum of a scattering angle of third surface 31 at which laser beams are scattered is at most 7 degrees.

In the present embodiment, third surface 31 of lens cover 30 is parallel to the xy plane, and thus an angle between first slope portion 222 and third surface 31 coincides with β stated above.

Light source 10 and lens module 20 are disposed inside the casing defined by such lens cover 30, casing side portion 53, and casing bottom portion 54. Note that the size of the casing defined by lens cover 30, casing side portion 53, and casing bottom portion 54 is, for example, 84 mm (in the x-axis direction) × 40 mm (in the y-axis direction) × 30 mm (in the z-axis direction).

Casing bottom portion 54 is a substrate on which lens module 20 is disposed. As illustrated in FIG. 3, lens module 20 and control unit 60 are disposed above and in contact with casing bottom portion 54 that is a substrate. Further, imaging element 23 can be considered to be stacked above casing bottom portion 54. In this manner, casing bottom portion 54 is a mounting substrate on which lens module 20 is mounted. A black resist is provided on a surface of casing bottom portion 54 on which lens module 20 is mounted, and a front reflectance of the surface for the wavelength range of laser beams is at most 10%. Casing bottom portion 54 is made of glass epoxy material, but the material is not limited thereto.

Casing side portion 53 is provided above and in contact with casing bottom portion 54, and is disposed, surrounding light source 10 and lens module 20 in the top view. Thus, casing side portion 53 has a quadrilateral frame shape in the top view. The material included in casing side portion 53 is not limited in particular, but is aluminum herein. Further, a black layer resulting from black fine particles being applied may be provided on the surface of casing side portion 53, and black anodization may be applied onto the surface thereof.

Substrate 40 is an example of a member having opening 41 in which lens 21 is provided when lens 21 is viewed through lens cover 30 in the direction of optical axis A1 of lens 21, or stated differently, in the top view. Substrate 40 includes second surface 42 that is an upper surface facing lens cover 30 and a lower surface facing casing bottom portion 54.

The shape of opening 41 is circular in the top view in the present embodiment, but is not limited thereto. The diameter of opening 41 may have a size that allows lens 21 to be provided inside opening 41, and the size may allow lens module 20 to be provided inside opening 41. For example, the diameter of opening 41 may be at most 10 mm and greater than the outside diameter of lens tube 22.

Substrate 40 is a substrate member on which light source 10 is provided. As illustrated in FIG. 3, light source 10 is provided above and in contact with substrate 40. Thus, substrate 40 is a mounting substrate on which light source 10 is mounted. A dark blue resist is provided on the surface of substrate 40 on which light source 10 is mounted. Substrate 40 is made of glass epoxy material, but the material is not limited thereto. Substrate 40 is held by substrate holding portion 52.

Substrate holding portion 52 is a member provided above and in contact with casing bottom portion 54, and supporting substrate 40 in contact with the lower surface of substrate 40.

Substrate holding portion 52 has a quadrilateral frame shape in the top view and holds an edge portion of substrate 40. The material included in substrate holding portion 52 is not limited in particular, but is aluminum herein. A black layer resulting from black fine particles being applied is provided on the surface of substrate holding portion 52.

Light-blocking member 51 is a member provided above and in contact with substrate 40. Light-blocking member 51 is provided between light source 10 and lens module 20. Light-blocking member 51 is an elongated quadrilateral member in the top view illustrated in (a) of FIG. 3. The material included in light-blocking member 51 is not limited in particular, but is aluminum herein. A black layer resulting from black fine particles being applied is provided on the surface of light-blocking member 51.

Light-blocking member 51 is a member for preventing a laser beam emitted by light source 10 from reaching imaging element 23 by being reflected off the inside of three-dimensional ranging module 1 (that is the inside of the casing defined by lens cover 30, casing side portion 53, and casing bottom portion 54). As illustrated in FIG. 3, the inside of three-dimensional ranging module 1 (that is, the inside of the casing) is separated into two spaces by light-blocking member 51, substrate 40, and substrate holding portion 52. In one of the two spaces, lens module 20 and control unit 60 are disposed, and in the other of the two spaces, light source 10 is disposed.

Furthermore, behavior of a laser beam emitted by light source 10 when the laser beam is reflected off object X is to be described with reference to FIG. 5.

FIG. 5 is a cross-sectional view illustrating behavior of a laser beam according to the present embodiment. Note that the cross-sectional view illustrated in FIG. 5 corresponds to (b) of FIG. 3.

A description is given, assuming that reflected light L is light resulting from a laser beam being reflected off object X, which is emitted by light source 10. In FIG. 5, one of two rays of reflected light L overlaps optical axis A1 illustrated in FIG. 3, for instance, and thus optical axis A1 is omitted. In the subsequent drawings, optical axis A1 may be omitted for the same reason.

As illustrated in FIG. 5, H denotes a distance from center 211 of lens 21 to third surface 31 that is the lower surface of lens cover 30. In other words, H denotes a length in the z-axis direction from the flat surface of lens 21 to third surface 31.

As described in (Findings Leading to Aspects of the Present Disclosure) above, when, for instance, object X includes a surface having a high reflectance, object X is observed as a bright spot by imaging element 23. Thus, object X corresponds to a bright spot. In FIG. 5, object X (a bright spot) is positioned in the direction of optical axis A1 (the z-axis direction). More specifically, the direction that connects object X and imaging element 23 and the direction of optical axis A1 (the z-axis direction) are parallel to each other.

In the following, two rays of reflected light L are to be described.

First, one of two rays of reflected light L directly enters lens 21 of lens module 20 through lens cover 30 and forms an image at a point on imaging element 23.

The other of the two rays of reflected light L does not directly enter lens 21, is reflected off (scattered by) first surface 221 of lens tube 22, is again reflected off third surface 31 of lens cover 30, enters lens 21, and forms an image at another point on imaging element 23. Intense flare occurs at the other point. $\theta$ denotes an angle between a direction in which the other ray out of the two rays of reflected light L travels and the direction of optical axis A1 (the z-axis direction). Thus, θ denotes an incidence angle of the other of the two rays of reflected light L incident on imaging element 23.

Furthermore, the quantity of intense flare (hereinafter, referred to as flare quantity) is calculated by following the procedure described below.

As described above, object X (a bright spot) is positioned in the direction of optical axis A1 (the z-axis direction). The flare quantity is proportional to (the area of first surface 221 of lens tube 22) / (the area of lens 21 in the top view × reflectance of first surface 221 × reflectance of third surface 31), based on the above-described one of the two rays of reflected light L.

As described above, β denotes a slope angle of first slope portion 222. First surface 221 is a diffuse reflection surface that diffuses (scatters) laser beams.

R1 denotes a front reflectance of first surface 221, and R2 denotes a front reflectance of third surface 31. R1 of first surface 221 is 1%, for example.

As illustrated in FIG. 5, the other of the two rays of reflected light L reaches first surface 221. The incidence angle at this time is β. The light that has reached first surface 221 undergoes diffuse reflection. Furthermore, light that has undergone diffuse reflection at a reflection angle of θ+β is further reflected off third surface 31, passes through lens 21, and is incident on imaging element 23. As described above, θ denotes an incidence angle of the light reflected off third surface 31 incident on imaging element 23.

Here, the flare quantity is expressed by Expression (1).

[Math 1]

$$\int \{R1 \times \cos\beta \times \cos^2(\theta + \beta)\} \times \{R2\}\, dA \quad \text{Expression (1)}$$

Expression (1) is based on an empirical approximation in diffuse reflection on the assumption that the full width at half maximum is 45 degrees when light is obliquely incident at an incidence angle of β.

Note that when θ is small, light reflected off third surface 31 may be again reflected off first surface 221 (more specifically, first surface 221 on the positive side of the x axis illustrated in FIG. 5) and may not reach lens 21. This is a so-called vignetting state caused by first surface 221 of lens tube 22. A flare quantity corresponding to the case where θ in Expression (1) is less than θ1 that satisfies Expression (2) is subtracted from the flare quantity calculated by Expression (1).

[Math 2]

$$\tan\theta 1 = A / (2H + A\tan\beta) \quad \text{Expression (2)}$$

Further, when θ is large, light reflected off third surface 31 may be again reflected off first surface 221 (more specifically, first surface 221 on the negative side of the x axis illustrated in FIG. 5) and may not reach lens 21. This is also a so-called vignetting state caused by first surface 221 of lens tube 22. A flare quantity corresponding to the case where θ in Expression (1) is greater than θ2 that satisfies Expression (3) is subtracted from the flare quantity calculated by Expression (1).

[Math 3]

$$\tan\theta 2 = (2D + A) / (2H + A\tan\beta) \quad \text{Expression (3)}$$

The flare quantity is calculated as described above. Next, influence on the flare quantity when β that denotes a slope angle of first slope portion 222 is changed is to be examined.

FIG. 6 illustrates influence on the flare quantity when a slope angle of first slope portion 222 is changed, according to the present embodiment.

Note that in FIG. 6, flare quantities are calculated for three-dimensional ranging modules according to First, Second, Third, and Fourth Examples in which β is 15 degrees, 30 degrees, 45 degrees, and 60 degrees, respectively, and each of which corresponds to three-dimensional ranging module 1 according to the present embodiment. In addition, a three-dimensional ranging module in which β is 0 degrees shown in FIG. 6 is a three-dimensional ranging module according to a first example to be considered, and does not correspond to three-dimensional ranging module 1 according to the present embodiment. The three-dimensional ranging module according to the first example to be considered has the same configuration as that of three-dimensional ranging module 1 according to the present embodiment, except that β is 0 degrees, that is, first surface 221 is parallel to the xy plane.

Part (a) of FIG. 6 illustrates flare quantities when θ that denotes an incidence angle is changed for the three-dimensional ranging modules according to First to Fourth Examples and the first example to be considered. Part (b) of FIG. 6 illustrates a range image when β is 0 degrees. Further, (b) of FIG. 6 illustrates object X closer to three-dimensional ranging module 1 and object Y farther from three-dimensional ranging module 1. Note that as described in (Findings Leading to Aspects of the Present Disclosure), object X includes a surface having a high reflectance.

When β is 0 degrees, that is, in the three-dimensional ranging module according to the first example to be considered, the flare quantity shows the following behavior.

When θ is at least 0 degrees and less than 27 degrees, that is, when θ is smaller than θ1 that satisfies Expression (2), the flare quantity increases due to a principal factor of less reflected light L being reflected off first surface 221 of lens tube 22 with an increase in θ.

When θ is at least 27 degrees and less than 68 degrees, reflected light L is not reflected off first surface 221 of lens tube 22, but a diffuse reflectance decreases with an increase in θ, and the flare quantity decreases.

When θ is at least 68 degrees and less than 72 degrees, that is, when θ is greater than θ2 that satisfies Expression (3), the flare quantity decreases due to a main factor of more reflected light L being reflected off first surface 221 of lens tube 22.

Furthermore, when θ is an angle that is at least a half angle of view of lens 21, reflected light L does not form an image on imaging element 23, and thus a flare quantity is at most the minimum limit of detection. Note that the half angle of view is half the value of an angle of view showing a range in which imaging element 23 can capture images, and is 70 degrees in the present embodiment.

Furthermore, behavior of a flare quantity is similar, irrespective of the value of β. Thus, the flare quantity once increases with an increase in θ from 0 degrees, and thereafter decreases. When θ is sufficiently large, the flare quantity becomes the minimum limit of detection or less.

The three-dimensional ranging module according to the first example to be considered in which first surface 221 does not include first slope portion 222 (that is, β is 0 degrees) is to be compared with the three-dimensional ranging modules according to First to Fourth Examples in which first surface 221 includes first slope portion 222 (that is, β is 15 degrees or more). In comparison to the three-dimensional ranging module according to the first example to be considered in which first surface 221 does not include first slope portion 222, the flare quantities are lower with the three-dimensional ranging modules according to First to Fourth Examples in which first surface 221 includes first slope portion 222.

Further, it is shown that a flare quantity is lower as β is greater. In the range image illustrated in (b) of FIG. 6, a ring-shaped intense flare region is generated, yet as illustrated in (a) of FIG. 6, a range image in which the generation of the intense flare region is reduced can be obtained by increasing β. The greater β is, the smaller an angle that indicates a peak value of the flare quantity is.

Furthermore, a distance between three-dimensional ranging module 1 and object X and a distance between three-dimensional ranging module 1 and object Y in a case where intense flare occurs are to be described with reference to FIG. 7.

FIG. 7 illustrates a relation between distances from three-dimensional ranging module 1 to object X and object Y, according to the present embodiment. Here, object X and object Y are assumed to have the same reflectance to facilitate calculation.

In FIG. 7, the vertical axis indicates a value (a distance ratio) obtained by dividing a distance between three-dimensional ranging module 1 and object Y by a distance between three-dimensional ranging module 1 and object X, whereas the horizontal axis indicates an incidence angle of θ.

At this time, the case where a value indicated by the vertical axis is greater than a curve corresponding to a value of β shown in FIG. 7 is the case where the flare quantity based on reflected light L that is reflected off object X is greater than the quantity of light resulting from a laser beam being reflected off object Y, directly entering lens 21, and incident on imaging element 23. Thus, the case where the value indicated by the vertical axis is greater than the curve corresponding to the value of β illustrated in FIG. 7 is the case where the distance is inaccurately calculated.

As illustrated in FIG. 7, a range in which inaccurate calculation occurs is smaller as β is greater. Thus, as compared with the three-dimensional ranging module according to the first example to be considered in which β that denotes a slope angle of first slope portion 222 is 0 degrees, the three-dimensional ranging modules according to First to Fourth Examples in which β that denotes a slope angle of first slope portion 222 is greater can reduce inaccurate calculation of distances.

For example, it is assumed that object Y is sky (upper air), and the distance between three-dimensional ranging module 1 and object Y is infinite. At this time, since the distance between three-dimensional ranging module 1 and object Y is infinite, if the flare quantity is the detection limit or more, the distance is inaccurately calculated.

Note that the above has described the case where object X (a bright spot) is positioned in the direction of optical axis A1 (the z-axis direction). Here, the case where a direction that connects object X (a bright spot) and three-dimensional ranging module 1 is in a position in which the direction forms an angle with the direction of optical axis A1 (the z-axis direction) is to be further described with reference to FIG. 8.

FIG. 8 is a cross-sectional view illustrating other behavior of a laser beam, according to the present embodiment. Note that the cross-sectional view illustrated in FIG. 8 corresponds to (b) of FIG. 3.

Here, a direction that connects object X (a bright spot) and three-dimensional ranging module 1 is in a position in which the direction forms an angle with the direction of optical axis A1 (the z-axis direction), and more specifically, $\alpha$ denotes an angle between a direction that connects object X and imaging element 23 and the direction of optical axis A1 (the z-axis direction).

In the following, two rays of reflected light L are to be described.

First, one of two rays of reflected light L directly enters lens 21 of lens module 20 through lens cover 30 and forms an image at a point on imaging element 23. At this time, the incidence angle is $\alpha$.

The other of the two rays of reflected light L dose not directly enter lens 21, but reaches first surface 221. The incidence angle at this time is $\beta$-$\alpha$. The light that has reached first surface 221 undergoes diffuse reflection. Furthermore, light that has undergone diffuse reflection at a reflection angle of $\theta$+$\beta$ is further reflected off third surface 31, passes through lens 21, and is incident on imaging element 23. The incidence angle of the light incident on imaging element 23, which is reflected off third surface 31, is $\theta$.

Here, influence on the flare quantity when the values of $\alpha$ and $\beta$ change is to be examined with reference to FIG. 9 to FIG. 12, using the same method as the calculation method for (a) of FIG. 6.

FIG. 9 to FIG. 12 are other diagrams illustrating influence on the flare quantity when a slope angle of first slope portion 222 is changed, according to the present embodiment.

Here, the three-dimensional ranging modules according to First to Fourth Examples and the first example to be considered are used, similarly to (a) of FIG. 6. In FIG. 9, $\alpha$ is 0 degrees, whereas $\alpha$ is 15 degrees in FIG. 10, $\alpha$ is 30 degrees in FIG. 11, and $\alpha$ is 45 degrees in FIG. 12. Note that FIG. 9 is the same drawing as (a) of FIG. 6.

In all of FIG. 9 to FIG. 12, behaviors of flare quantities are similar, irrespective of the value of $\beta$. Thus, the flare quantity once increases with an increase in $\theta$ from 0 degrees and thereafter decreases. When $\theta$ is sufficiently large, the flare quantity becomes the minimum limit of detection or less. As is clear from FIG. 9 to FIG. 12, even if the value of $\alpha$ changes, the change does not greatly influence the flare quantities.

Next, influence on the flare quantity when A that denotes the thickness of lens tube 22 is changed is to be examined with reference to FIG. 13.

FIG. 13 is another diagram illustrating influence on the flare quantity when a slope angle of first slope portion 222 is changed, according to the present embodiment.

Here, influence on the flare quantity when the values of A and $\beta$ change is to be examined, using the same method as the calculation method for (a) of FIG. 6. Further, the three-dimensional ranging modules according to First to Fourth Examples and the first example to be considered are used, similarly to (a) of FIG. 6. In FIG. 13, (a) shows the case where A is 1 mm, (b) shows the case where A is 2 mm, and (c) shows the case where A is 4 mm.

In FIG. 13, a dash-dot line and a two-dot chain line each showing a certain level of flare quantity are shown over (a) through (c) of FIG. 13.

The greater A that denotes the thickness of lens tube 22 is, the greater an angle ($\theta$) showing a peak value of the flare quantity is. Thus, intense flare occurs at a position more distant from optical axis A1 as A that denotes the thickness of lens tube 22 is greater.

As illustrated in FIG. 13, the greater $\beta$ is, the less influence is given to the flare quantity even if A that denotes the thickness of lens tube 22 is changed. When $\beta$ is 30 degrees or more, even if A is changed, the influence given on the flare quantity is sufficiently small, and when $\beta$ is 45 degrees or more, even if A is changed, hardly any influence is given on the flare quantity.

When a comparison is made for the same three-dimensional ranging module, the flare quantity is about the same at the same angle of $\theta$ in a range of $\theta$ from 0 degrees to an angle indicating a peak value of the flare quantity. For example, in the three-dimensional ranging module according to First Example in which $\beta$ is 15 degrees, the flare quantity has approximately the same value irrespective of the value of A, and is approximately 7 to 8, specifically.

As described above, first slope portion 222 is linear in a cross section obtained when lens tube 22 is cut along a plane that includes optical axis A1 of lens 21. Effects of first slope portion 222 being linear are to be described with reference to FIG. 14 to FIG. 16.

FIG. 14 to FIG. 16 are diagrams for explaining effects of first slope portion 222 being linear, according to the present embodiment. More specifically, (a) in each of FIG. 14 to FIG. 16 is an enlarged cross-sectional view showing a portion of lens 21 and a portion of lens tube 22. In FIG. 14 to FIG. 16, (b) illustrates influence on the flare quantity when the slope angle of first slope portion 222 is changed, and the same method as the calculation method for (a) of FIG. 6 is used. Further, the three-dimensional ranging modules according to First to Fourth Examples and the first example to be considered are used, similarly to (a) of FIG. 6. Note that in (b) in each of FIG. 14 to FIG. 16, the flare quantities are calculated, assuming that D that denotes the inside radius is 5 mm, A that denotes the thickness is 2 mm, and H that denotes the distance is 2 mm.

FIG. 14 to FIG. 16 each illustrate five examples in which the value of β is changed.

FIG. 14 shows illustrations that relate to the three-dimensional ranging modules according to First to Fourth Examples and the first example to be considered. Thus, FIG. 14 includes a cross-sectional view of a three-dimensional ranging module with linear first slope portion 222.

FIG. 15 illustrates five examples in which first surface 221 that is a surface (an upper surface) of lens tube 22 facing object X has a concave shape (that is curving in and recessed in the z-axis negative direction) in each of the three-dimensional ranging modules according to First to Fourth Examples and the first example to be considered.

In FIG. 15, the slope angle of first surface 221 is greater as closer to lens 21 from the outer side of lens tube 22. On first surface 221, the slope angle is 0 degrees at the outer edge portion of lens tube 22. On first surface 221, β denotes a slope angle that is an angle between a plane perpendicular to optical axis A1 (that is, the xy plane) and a direction that connects an edge portion of lens tube 22 closer to lens 21 (that is, on the inner side of lens tube 22) and the outer edge portion of lens tube 22. The slope angle at a certain point on first surface 221 is proportional to a distance between the certain point and the outer edge portion of lens tube 22. Thus, when β is 0 degrees in the first example to be considered, first surface 221 is linear.

FIG. 16 illustrates five examples in which first surface 221 that is a surface (an upper surface) of lens tube 22 facing object X has a convex shape (that is curving out and projecting in the z-axis positive direction) in each of the three-dimensional ranging modules according to First to Fourth Examples and the first example to be considered.

In FIG. 16, the slope angle of first surface 221 is smaller as closer to lens 21 from the outer side of lens tube 22. On first surface 221, the slope angle is 0 degrees at the inner edge portion of lens tube 22. On first surface 221, β denotes a slope angle that is an angle between a plane perpendicular to optical axis A1 (that is, the xy plane) and a direction that connects an edge portion of lens tube 22 closer to lens 21 (that is, on the inner side of lens tube 22) and the outer edge portion of lens tube 22. A slope angle at a certain point on first surface 221 is proportional to a distance between the certain point and the inner edge portion of lens tube 22. Thus, when β is 0 degrees in the first example to be considered, first surface 221 is linear.

As illustrated in (b) in each of FIG. 14 to FIG. 16, with the three-dimensional ranging module that includes first slope portion 222 that is linear in the cross section, which is the example illustrated in FIG. 14, the flare quantities can be reduced as compared with the examples illustrated in FIG. 15 and FIG. 16, in a range of β from 15 degrees to 60 degrees, inclusive.

[Manufacturing Method]

Here, a method for manufacturing three-dimensional ranging module 1 according to the present embodiment is to be briefly described.

First, lens 21 is connected to lens tube 22. On casing bottom surface 54 on which imaging element 23 and control unit 60 are disposed (mounted), lens tube 22 and lens 21 are disposed above where imaging element 23 is disposed.

Furthermore, light source 10 is disposed (mounted) on substrate 40. The position of opening 41 of substrate 40 is determined to overlap the positions of lens tube 22 and lens 21, and substrate 40 is disposed above casing bottom portion 54 with substrate holding portion 52 being provided therebetween, after which lines are connected. Furthermore, light-blocking member 51 is disposed. Finally, lens cover 30 is disposed above casing bottom portion 54 with casing side portion 53 being provided therebetween.

[Advantageous Effects and Others]

Three-dimensional ranging module 1 according to the present embodiment includes light source 10, lens module 20, and lens cover 30. Light source 10 emits a laser beam. Lens module 20 includes: lens 21 that collects light resulting from the laser beam emitted being reflected off an object; imaging element 23 that receives the light collected by lens 21; and lens tube 22 that surrounds a space between lens 21 and imaging element 23 and supports lens 21. Lens cover 30 is positioned between lens module 20 and the object and transparent to a wavelength range of the laser beam. In a cross section obtained when lens tube 22 is cut along a plane that includes optical axis A1 of lens 21, first surface 221 of lens tube 22 includes first slope portion 222 that slopes away from lens cover 30 with an increase in distance from optical axis A1, first surface 221 facing the object.

Accordingly, when the laser beam reflected off object X that corresponds to a bright spot is reflected off first surface 221 (first slope portion 222), light (intense flare) that reaches lens 21 and imaging element 23 is reduced. As described with reference to, for example, (a) of FIG. 6, the three-dimensional ranging module according to the first example to be considered in which first surface 221 does not include first slope portion 222 (that is, β is 0 degrees) is to be compared with the three-dimensional ranging modules according to First to Fourth Examples in which first surface 221 includes first slope portion 222 (that is, β is at least 15 degrees). As compared with the three-dimensional ranging module according to the first example to be considered in which first surface 221 does not include first slope portion 222, the flare quantity is lower with the three-dimensional ranging modules according to First to Fourth Examples in which first surface 221 includes first slope portion 222. The three-dimensional ranging modules according to First to Fourth Examples each correspond to three-dimensional ranging module 1 according to the present embodiment. In this manner, the quantity of intense flare that reaches lens 21 and imaging element 23 is reduced, and thus three-dimensional ranging module 1 that reduces inaccurate calculation of distances can be produced.

Further, first slope portion 222 is provided over an entirety of first surface 221.

Accordingly, when the laser beam reflected off object X that corresponds to a bright spot is reflected off first surface 221 (first slope portion 222), the laser beam is readily reflected off first surface 221 (first slope portion 222) in a direction opposite from lens 21 and imaging element 23. Thus, the quantity of intense flare that reaches lens 21 and imaging element 23 is further reduced, and thus three-dimensional ranging module 1 that further reduces inaccurate calculation of distances can be produced.

Further, a full width at half maximum of a scattering angle of first surface 221 at which the laser beam is scattered is at least 45 degrees.

Accordingly, the laser beam reflected off object X that corresponds to a bright spot undergoes diffuse reflection on first surface 221 (first slope portion 222). Thus, light (intense flare) that reaches lens 21 and imaging element 23 is further reduced. Thus, the quantity of intense flare that reaches lens 21 and imaging element 23 is further reduced, and thus three-dimensional ranging module 1 that further reduces inaccurate calculation of distances can be produced.

In the cross section, an angle between first slope portion 222 and a surface of lens cover 30 is at least 30 degrees, the surface facing lens module 20.

Accordingly, the angle between the first slope portion and the surface of the lens cover that faces the lens module is sufficiently large. For example, as described with reference to (a) of FIG. 6, the greater β is, the less the flare quantity is. By setting β to at least 30 degrees, light (intense flare) that reaches lens 21 and imaging element 23 is further reduced. Thus, the quantity of intense flare that reaches lens 21 and imaging element 23 is further reduced, and thus three-dimensional ranging module 1 that further reduces inaccurate calculation of distances can be produced.

Further, as described with reference to FIG. 13, when β is 30 degrees or more, the influence given on the flare quantity is sufficiently small even if A is changed, and when β is 45 degrees or more, hardly any influence is given on the flare quantity even if A is changed. Accordingly, the degree of freedom for designing the shape of lens tube 22 improves.

In the cross section, first slope portion 222 is linear.

Accordingly, as illustrated in FIG. 14 to FIG. 16, the quantity of intense flare that reaches lens 21 and imaging element 23 is further reduced as compared with the case where first slope portion 222 is curving, and thus three-dimensional ranging module 1 that further reduces inaccurate calculation of distances can be produced.

Three-dimensional ranging system 100 includes three-dimensional ranging module 1 described above. Three-dimensional ranging module 1 includes: calculator 63 that calculates a distance from light source 10 to the object, based on a time of flight of the laser beam.

Since three-dimensional ranging module 1 described above can reduce inaccurate calculate of distances, three-dimensional ranging system 100 that includes such three-dimensional ranging module 1 can reduce inaccurate calculation of distances.

[Variation 1 of Embodiment 1]

Next, Variation 1 of Embodiment 1 is to be described. Variation 1 of Embodiment 1 is different from Embodiment 1 in the shape of lens tube 22a and the shape of opening 41a. In the following, different points from Embodiment 1 are mainly described, and description of common points is omitted or simplified.

[Configuration]

An example of a configuration of three-dimensional ranging module 1a according to Variation 1 of Embodiment 1 is to be described with reference to FIG. 17.

FIG. 17 illustrates a top view and two cross-sectional views of three-dimensional ranging module 1a according to this variation.

More specifically, (a) of FIG. 17 is a top view of three-dimensional ranging module 1a, (b) of FIG. 17 is a cross-sectional view of three-dimensional ranging module 1a taken along line XVIIb-XVIIb in (a) of FIG. 17, and (c) of FIG. 17 is a cross-sectional view of three-dimensional ranging module 1a taken along line XVIIc-XVIIc in (a) of FIG. 17.

Three-dimensional ranging module 1a according to this variation has the same configuration as that of three-dimensional ranging module 1 according to Embodiment 1, except that lens module 20a is included instead of lens module 20, and substrate 40a is included instead of substrate 40.

Lens module 20a has the same configuration as that of lens module 20, except that lens tube 22a is included instead of lens tube 22.

Lens tube 22a has the same configuration as that of lens tube 22, except its shape.

Lens tube 22a has a hollow shape with no closed ends and a squared cylindrical shape. A columnar cavity is provided inside lens tube 22a. Lens tube 22a has a shape extending along optical axis A1 of lens 21, and optical axis A1 of lens 21 and the axis of lens tube 22a coincide with each other. As described above, since lens tube 22a has a squared cylindrical shape, the contour is quadrilateral and a portion corresponding to the columnar cavity is circular, in a cross section cut along a plane perpendicular to optical axis A1. Stated differently, in the top view illustrated in (a) of FIG. 17, that is, a view in the direction of optical axis A1, the contour of lens tube 22a is quadrilateral and is analogous to the contour of imaging element 23.

Here, a surface (an upper surface) of lens tube 22a that faces object X is first surface 221a. In a cross section obtained when lens tube 22a is cut along a plane that includes optical axis A1 of lens 21, first surface 221a includes first slope portion 222a that slopes away from lens cover 30 with an increase in distance from optical axis A1. Thus, first surface 221a includes first slope portion 222a that slopes downward with an increase in distance from optical axis A1. More specifically, first slope portion 222a is provided over the entirety of first surface 221a. First slope portion 222a is linear in the cross-sectional view illustrated in (b) of FIG. 17, which is obtained when lens tube 22a is cut along a plane that includes optical axis A1 of lens 21. Note that in this variation, first slope portion 222a is linear in a cross-sectional view obtained when lens tube 22a is cut along any plane as long as the plane includes optical axis A1 of lens 21. Note that first slope portion 222a may be provided on a portion of first surface 221a.

As illustrated in FIG. 4, a slope angle that is an angle between first slope portion 222a and a plane perpendicular to optical axis A1 (that is, the xy plane) is $\beta$. In this variation, $\beta$ may be at least 10 degrees and at most 80 degrees, may further be at least 30 degrees and at most 70 degrees, and may yet further be at least 45 degrees and at most 60 degrees.

Substrate 40a has the same configuration as that of substrate 40, except that opening 41a is included, instead of opening 41.

Opening 41a has a quadrilateral shape in the top view in this variation. In the top view, opening 41a may have a size that allows lens 21 and lens tube 22a to be provided inside opening 41a, and thus the size may allow lens module 20a to be provided inside opening 41a.

Furthermore, a slope angle of first slope portion 222a included in first surface 221a is to be described, with reference to FIG. 18.

FIG. 18 includes a top view of lens tube 22a and lens 21 and cross-sectional views of lens tube 22a, according to this variation.

More specifically, (a) of FIG. 18 is a top view of lens tube 22a and lens 21, and (b) of FIG. 18 is a cross-sectional view of lens tube 22a taken along line XVIIIb-XVIIIb in (a) of FIG. 18. Part (c) of FIG. 18 is a cross-sectional view of lens tube 22a taken along line XVIIIc-XVIIIc in (a) of FIG. 18, and (d) of FIG. 18 is a cross-sectional view of lens tube 22a taken along line XVIIId-XVIIId in (a) of FIG. 18.

As described above, in a view in the direction of optical axis A1, the contour of lens tube 22a is quadrilateral, and is analogous to the contour of imaging element 23. At this time, an angle of slope of first slope portion 222a from a plane perpendicular to optical axis A1 is denoted by $\beta$ that is a slope angle of first slope portion 222a. The degree of the slope (that is, $\beta$) has a positive correlation with a distance between optical axis A1 and the outer edge of lens tube 22a. In other words, in the top view, $\beta$ of first slope portion 222a in a direction that connects optical axis A1 and a point on the outer edge of lens tube 22a has a positive correlation with a distance between optical axis A1 and the outer edge of lens tube 22a.

Here, the y-axis positive direction is a reference direction. An angle between the reference direction and line XVIIIb-XVIIIb and line XVIIIc-XVIIIc is denoted by $\delta$.

For example, in (b) of FIG. 18, $\delta$ is 0, A denoting the thickness of lens tube 22a is 1 mm, $\beta$ is 15 degrees, and the half angle of view is 14 degrees.

For example, in (c) of FIG. 18, $\delta$ is greater than 0, A denoting the thickness of lens tube 22a is 4 mm, $\beta$ is 30 degrees, and the half angle of view is 30 degrees.

In this manner, A is greater and thus the distance between optical axis A1 and the outer edge of lens tube 22a is longer in (c) of FIG. 18 than in (b) of FIG. 18. Accordingly, $\beta$ is greater in (c) of FIG. 18 than in (b) of FIG. 18. In the cross-sectional view illustrated in (d) of FIG. 18, first surface 221a is curving out and projecting in the z-axis positive direction.

FIG. 19 illustrates a relation between $\delta$ and $\beta$ according to this variation. A changes with a change in $\delta$. Thus, a distance between optical axis A1 and the outer edge of lens tube 22a changes. Along with this, the value of $\beta$ also changes.

Here, a description is given with again reference to (a) and (c) of FIG. 13 referred to in Embodiment 1. FIG. 13 shows that the greater A denoting the thickness of lens tube 22 is, the greater the flare quantity is and the greater angle an angle ($\theta$) indicating a peak value of the flare quantity shifts to. Furthermore, the flare quantity is less as $\beta$ is greater.

In this variation, in the top view (that is, a drawing from above), the contour of lens tube 22a is analogous to the contour of imaging element 23, and the degree (β) of a slope of first slope portion 222a from a plane perpendicular to optical axis A1 has a positive correlation with the distance between optical axis A1 and the outer edge of lens tube 22a. Thus, in this variation, β increases with A denoting the thickness of lens tube 22a. Considering a relation between A and β illustrated in FIG. 13, when β increases with A, an angle (θ) at which intense flare occurs can be increased while a peak value of the flare quantity is maintained constant. Thus, an angle at which intense flare occurs can be set to an angle outside an angle of view. Accordingly, the flare quantity can be evenly reduced within a plane, and inaccurate calculation of distances can be reduced.

[Advantageous Effects and Others]

In three-dimensional ranging module 1a according to this variation, in a view in a direction of optical axis A1, a contour of lens tube 22a is analogous to a contour of imaging element 23. A degree of a slope of first slope portion 222a from a plane perpendicular to optical axis A1 has a positive correlation with a distance between optical axis A1 and an outer edge of lens tube 22a.

As shown in FIG. 13, the greater A denoting the thickness of lens tube 22 is, the greater the flare quantity is and the greater angle an angle (θ) indicating a peak value shifts to. Here, β increases with A denoting the thickness of lens tube 22a. Accordingly, an angle (θ) at which intense flare occurs can be increased while peak values of flare quantities are maintained constant. Thus, an angle at which intense flare occurs can be set to an angle outside an angle of view. In this manner, the quantity of intense flare that reaches imaging element 23 is more uniformly reduced within a plane, and thus three-dimensional ranging module 1a that uniformly reduces inaccurate calculation of distances with respect to angle δ can be produced.

[Variation 2 of Embodiment 1]

Next, Variation 2 of Embodiment 1 is to be described. Variation 2 of Embodiment 1 is different from Embodiment 1 in that first surface 221b reflects light (makes so-called specular reflection) in a state in which diffusion (scattering) of light is reduced. In the following, different points from Embodiment 1 are mainly described, and description of common points is omitted or simplified.

An example of a configuration of three-dimensional ranging module 1b according to Variation 2 of Embodiment 1 is to be described with reference to FIG. 20.

FIG. 20 illustrates a top view and two cross-sectional views of three-dimensional ranging module 1b according to this variation.

More specifically, (a) of FIG. 20 is a top view of three-dimensional ranging module 1b, whereas (b) of FIG. 20 is a cross-sectional view of three-dimensional ranging module 1b taken along line XXb-XXb in (a) of FIG. 20. Further, (c) of FIG. 20 is a cross-sectional view of three-dimensional ranging module 1b taken along line XXc-XXc in (a) of FIG. 20.

Three-dimensional ranging module 1b according to this variation has the same configuration as that of three-dimensional ranging module 1 according to Embodiment 1, except that lens module 20b is included instead of lens module 20.

Lens module 20b has the same configuration as that of lens module 20, except that lens tube 22b is included instead of lens tube 22.

Lens tube 22b has the same configuration as that of lens tube 22, except that first surface 221b that is a surface (an upper surface) of lens tube 22b that faces object X is included instead of first surface 221.

As described above, first surface 221 according to Embodiment 1 is a diffuse reflection surface that diffuses (scatters) a laser beam, but first surface 221b is a reflection surface that reduces occurrence of diffusion (scattering) of a laser beam. More specifically, a full width at half maximum of a scattering angle of first surface 221b at which laser beams are scattered is at most 7 degrees. Note that a full width at half maximum of a scattering angle of first surface 221b at which laser beams are scattered may be at most 7 degrees, may further be at most 5 degrees, and may yet further be at most 3 degrees.

Furthermore, behavior of a laser beam emitted from light source 10 when the laser beam is reflected off object X is to be described with reference to FIG. 21 and FIG. 22.

FIG. 21 and FIG. 22 are cross-sectional views each showing behavior of a laser beam according to this variation. Note that the cross-sectional views illustrated in FIG. 21 and FIG. 22 each correspond to (b) of FIG. 20. Note that similarly to Embodiment 1, β denotes a slope angle that is an angle between first slope portion 222b and a plane perpendicular to optical axis A1 (that is, the xy plane).

In FIG. 21, object X (a bright spot) is positioned in the direction of optical axis A1 (the z-axis direction). More specifically, a direction that connects object X and imaging element 23 and the direction of optical axis A1 (the z-axis direction) are parallel to each other.

In FIG. 22, a direction that connects object X (a bright spot) and three-dimensional ranging module 1b is in a position where the direction forms an angle with the direction of optical axis A1 (the z-axis direction), and more specifically, an angle between a direction that connects object X and imaging element 23 and the direction of optical axis A1 (the z-axis direction) is $\alpha$.

First, FIG. 21 is to be described.

First, one of two rays of reflected light L directly enters lens 21 through lens cover 30 and forms an image at a point on imaging element 23.

The other of the two rays of reflected light L does not directly enter lens 21, but reaches first surface 221b that includes first slope portion 222b. The incidence angle at this time is $\beta$. The light that has reached first surface 221b is reflected. The reflection angle of the reflected light is $\beta$. The reflected light does not reach lens 21 or is not further incident on imaging element 23.

In this manner, when object X (a bright spot) is positioned in the direction of optical axis A1 (the z-axis direction), intense flare does not occur.

Next, FIG. 22 is to be described. Note that FIG. 22 is to be described further using reflected light L1 and $\theta 3$ that denotes an incidence angle of reflected light L1 incident on imaging element 23.

Reflected light L1 is defined as light resulting from a laser beam emitted from light source 10 being reflected off object Y. Further, such reflected light L1 directly enters lens 21 through lens cover 30 and forms an image at a point on imaging element 23. The incidence angle of such reflected light L1 incident on imaging element 23 is $\theta 3$.

Reflected light L illustrated in FIG. 22 is light reflected off object X (a bright spot) and reaches first surface 221b without directly entering lens 21. The incidence angle at this time is $\alpha$-$\beta$. The light that has reached first surface 221b is reflected at a reflection angle of $\alpha$-$\beta$. Furthermore, the reflected light is incident on third surface 31 at an incidence angle of $\alpha$-2$\beta$, is reflected at a reflection angle of $\alpha$-2$\beta$, passes through lens 21, and is incident on imaging element 23. A point on imaging element 23 where this light is incident is the same as the point (the above one point) on imaging element 23 on which reflected light L1 stated above is incident. Thus, intense flare is generated at the one point at this time.

FIG. 22 illustrates a center point on the upper surface of imaging element 23 through which optical axis A1 passes, and auxiliary line 80 that is a dash-dot line passing through an upper edge of lens tube 22b. An angle between such auxiliary line 80 and optical axis A1 corresponds to a half angle of view, and is illustrated as $\theta 4$.

As illustrated in FIG. 22, when $\alpha$ is greater than the half angle of view ($\theta 4$), intense flare occurs at the one point.

As illustrated in FIG. 21, in three-dimensional ranging module 1b according to this variation, a full width at half maximum of a scattering angle of first surface 221b at which laser beams are scattered is at most 7 degrees.

Accordingly, the laser beam reflected off object X that corresponds to a bright spot is specularly reflected off first surface 221b (first slope portion 222b). Also in this case, light (intense flare) that reaches lens 21 and imaging element 23 is further reduced. Thus, the quantity of intense flare that reaches lens 21 and imaging element 23 is further reduced, and thus three-dimensional ranging module 1b that further reduces inaccurate calculation of distances can be produced. Thus, when object X is positioned in the direction of optical axis A1, intense flare does not occur. However, as illustrated in FIG. 22, when an angle between the direction of optical axis A1 and a direction that connects object X and imaging element 23 is $\alpha$, intense flare may occur.

In view of this, the inventors made further examination and arrived at Variation 3 of Embodiment 1 described below.

[Variation 3 of Embodiment 1]

Next, Variation 3 of Embodiment 1 is to be described. In Variation 3 of Embodiment 1, a degree of a slope of first slope portion 222c provided on first surface 221c is different from the degree in Variation 2 of Embodiment 1. In the following, different points from Variation 2 of Embodiment 1 are mainly described, and description of common points is omitted or simplified.

[Configuration]

FIG. 23 illustrates a cross-sectional view of three-dimensional ranging module 1c according to this variation.

Three-dimensional ranging module 1c according to this variation has the same configuration as that of three-dimensional ranging module 1b according to Variation 2 of Embodiment 1, except that lens module 20c is included instead of lens module 20.

Lens module 20c has the same configuration as that of lens module 20b, except that lens tube 22c is included instead of lens tube 22b.

Lens tube 22c has the same configuration as that of lens tube 22b, except that first surface 221c is included instead of first surface 221b.

First surface 221c includes first slope portion 222c that slopes away from lens cover 30. Thus, first surface 221c includes first slope portion 222c that slopes downward with an increase in distance from optical axis A1. More specifically, first slope portion 222c is provided over the entirety of first surface 221c. β denotes a slope angle that is an angle between first slope portion 222c and a plane perpendicular to optical axis A1 (that is, the xy plane).

In this variation, an angle between first slope portion 222c and a plane (that is, the xy plane) perpendicular to optical axis A1, or stated differently, β denoting a slope angle is at least ε/2.

Here, ε is to be described.

First, the case when lens 21 is viewed through lens cover 30 from the side closer to object X is to be considered. Thus, this case is the one when lens 21 is viewed from the upper surface of lens cover 30. As an example, the case where lens 21 is viewed from the positive side of the x axis and the positive side of the z axis (that is, the direction in which reflected light L enters) illustrated in FIG. 23 is to be described.

In this case, ε denotes the maximum angle of an angle between optical axis A1 and a direction in which a front side of lens 21 is visible. More specifically, the expression "a front side of lens 21 is visible" means that the front side of lens 21 is visible without having any obstructing elements other than lens 21, which are included in three-dimensional ranging module 1c. The front side of lens 21 is a point on lens 21 having the greatest value on the positive side of the x axis. Since light-blocking member 51 is provided between light source 10 and lens module 20c, ε denotes the maximum angle of the angle between optical axis A1 and the direction in which the front side of lens 21 is visible in a range in which light-blocking member 51 does not obstruct. Similarly to Variation 2 of Embodiment 1, also in this variation, α denotes an angle between the direction of optical axis A1 (the z-axis direction) and the direction that connects object X and imaging element 23, and an example in which α is ε is illustrated in FIG. 23.

Here, C denotes a distance between inner side surface 223 of lens tube 22c and light-blocking member 51. Furthermore, H0 denotes a distance between third surface 31 of lens cover 30 and second surface 42 that is an upper surface of substrate 40 that faces lens cover 30.

Here, influence on the flare quantity when the values of α and β change is to be examined with reference to FIG. 24 to FIG. 28. Note that flare quantities are calculated for FIG. 24 to FIG. 28 with use of the same method as the calculation method for (a) of FIG. 6, considering that first surface 221c is a specular reflection surface having a scattering full width at half maximum of 3 degrees, D is 5 mm, H0 is 2 mm, and C is infinite. Note that R1 that denotes a front reflectance of first surface 221c is 10%.

FIG. 24 to FIG. 28 illustrate influence on the flare quantity when a slope angle of first slope portion 222c is changed, according to this variation.

Note that in FIG. 28, the flare quantity is calculated for a three-dimensional ranging module according to Fifth Example in which β is 45 degrees and which corresponds to three-dimensional ranging module 1c according to this variation. The three-dimensional ranging modules in which β is 0 degrees, 15 degrees, 30 degrees, and 44 degrees illustrated in FIG. 24 to FIG. 27, respectively, are the three-dimensional ranging modules according to second, third, fourth, and fifth examples to be considered and do not correspond to three-dimensional ranging module 1c according to this variation. The three-dimensional ranging modules according to the second example to be considered to the fifth example to be considered have the same configuration as that of three-dimensional ranging module 1c according to this variation, except for the value of β.

FIG. 24 to FIG. 27 illustrate that flare quantities reach peaks in the three-dimensional ranging modules according to the second example to be considered to the fifth example to be considered. Thus, intense flare occurs.

However, as illustrated in FIG. 28, flare quantities do not reach peaks with the three-dimensional ranging module according to Fifth Example. Thus, intense flare is reduced, and more specifically, intense flare does not occur.

Thus, under a condition that D is 5 mm, H0 is 2 mm, and C is infinite, ε is 90 degrees, and β is a value of at least ε/2, and thus intense flare is reduced. Further, β is a value that satisfies Expression (4).

[Math 4]

$$\beta \geq \{\tan^{-1}(H0/C)\}/2 \quad \text{Expression (4)}$$

[Advantageous Effects and Others]

In three-dimensional ranging module 1c according to this variation, when lens 21 is viewed from a side of lens cover 30 closer to the object, ε denotes a maximum angle of an angle between optical axis A1 and a direction in which a front side of lens 21 is visible. At this time, an angle between first slope portion 222c and a plane perpendicular to optical axis A1 is at least ε/2.

When the laser beam reflected off object X that corresponds to a bright spot is specularly reflected off first surface 221c (first slope portion 222c), light (intense flare) that reaches the lens and the imaging element may occur due to reflection of light inside three-dimensional ranging module 1c. Since the angle between first slope portion 222c and the plane perpendicular to optical axis A1 of lens 21 is within the above angle range, the laser beam reflected off object X is reflected off an element (such as light-blocking member 51, for example) included in three-dimensional ranging module 1c and does not readily reach lens 21 or imaging element 23. Thus, the quantity of intense flare that reaches lens 21 and imaging element 23 is further reduced, and thus three-dimensional ranging module 1c that further reduces inaccurate calculation of distances can be produced.

[Embodiment 2]

Next, Embodiment 2 is to be described. In the following, different points from Embodiment 1 are mainly described, and description of common points is omitted or simplified.

[Configuration]

An example of a configuration of three-dimensional ranging module 1d according to Embodiment 2 is to be described with reference to FIG. 29.

FIG. 29 illustrates a top view and a cross-sectional view of three-dimensional ranging module 1d according to the present embodiment.

More specifically, (a) of FIG. 29 is a top view of three-dimensional ranging module 1d, whereas (b) of FIG. 29 is a cross-sectional view of three-dimensional ranging module 1d taken along line XXIXb-XXIXb in (a) of FIG. 29.

Three-dimensional ranging module 1d according to the present embodiment has the same configuration as that of three-dimensional ranging module 1 according to Embodiment 1 except substrate 40d is included instead of substrate 40.

Note that three-dimensional ranging module 1d includes lens module 20 that include lens tube 22, and thus it can be said that three-dimensional ranging module 1d includes lens tube 22. However, three-dimensional ranging module 1d may not include lens tube 22. In the present embodiment, first surface 221 of lens tube 22 is a diffuse reflection surface that diffuses a laser beam, and includes first slope portion 222. However, the present embodiment is not limited thereto, and first surface 221 may not include first slope portion 222. For example, β may be 0 degrees in the present embodiment.

Substrate 40d is a member having opening 41d in which lens 21 is provided when lens 21 is viewed through lens cover 30 in the direction of optical axis A1 of lens 21, or stated differently, in the top view as illustrated in (a) of FIG. 29. Substrate 40d includes second surface 42d that is an upper surface facing lens cover 30 and a lower surface facing casing bottom portion 54.

The shape of opening 41d is circular in the top view in the present embodiment, but is not limited to a circle. The diameter of opening 41d may have a size that allows lens 21 to be provided inside opening 41d, and the size may allow lens module 20 to be provided inside opening 41d.

Substrate 40d is a substrate member on which light source 10 is provided. Light source 10 is provided above and in contact with substrate 40d. Thus, substrate 40d is a mounting board on which light source 10 is mounted. Note that substrate 40d has the same configuration as that of substrate 40, except its shape.

Second surface 42d included in substrate 40d is a diffuse reflection surface that diffuses (scatters) laser beams. For example, a full width at half maximum of a scattering angle of second surface 42d at which laser beams are scattered may be at least 30 degrees and at most 60 degrees, may further be at least 40 degrees and at most 60 degrees, and may yet further be at least 50 degrees and at most 60 degrees.

Here, a positional relation of elements of three-dimensional ranging module 1d according to the present embodiment is to be further described in more detail.

The cross-sectional view illustrated in (b) of FIG. 29 can be said as a diagram showing a cross section obtained when lens 21 is cut along a plane that includes optical axis A1 of lens 21.

In the cross section, B, H1, H2, and θ5 stated below are defined.

First, B denotes a distance between an outer edge of lens 21 and an outer edge of opening 41d. For example, as illustrated in (b) of FIG. 29, the outer edge of lens 21 is an edge portion of lens 21 having the greatest value on the positive side of the x axis, and the outer edge of opening 41d is an edge portion of opening 41d. Further, the position of the outer edge of lens 21 and the position of inner side surface 223 of lens tube 22 coincide with each other on the x axis in the cross section. The distance between the outer edge of lens 21 and the outer edge of opening 41d can be said as a distance between a point on lens 21 and a point on substrate 40d that are closest to each other.

H1 denotes a distance between lens cover 30 and center 211 of lens 21. In other words, H1 denotes the length in the z-axis direction from the flat surface of lens 21 that is a plano-convex lens to third surface 31.

Furthermore, H2 denotes a distance between lens cover 30 and second surface 42d of substrate 40d that is an example of a member, which faces lens cover 30. In other words, H2 is a length in the z-axis direction from third surface 31 to second surface 42d.

Next, θ5 denotes an angle between optical axis A1 of lens 21 and a line that connects center 211 of lens 21 to an outer edge of imaging element 23. Here, the outer edge of imaging element 23 in the cross section is a point having the smallest value on the negative side of the x axis on the upper surface of imaging element 23, as an example. In (b) of FIG. 29, a line that connects center 211 of lens 21 and the outer edge of imaging element 23 overlaps the travel direction of light reflected off second surface 42d and third surface 31 out of reflected light L.

In the present embodiment, B, H1, H2, and $\theta 5$ defined in this manner satisfy Expression (5) below.

$$(H1+H2) \times \tan\theta 5 \leq B \quad \text{Expression (5)}$$

Here, behavior of reflected light L resulting from a laser beam emitted from light source 10 being reflected off object X is to be described.

Part (b) of FIG. 29 illustrates three rays of reflected light L.

One of the three rays of reflected light L directly enters lens 21 of lens module 20 through lens cover 30 and forms an image at a point on imaging element 23.

Another one of the three rays of reflected light L does not directly enter lens 21, reaches first surface 221, undergoes diffuse reflection, is further reflected off third surface 31, passes through lens 21, and is incident on imaging element 23.

Yet another one of the three rays of reflected light L exhibits behavior as stated below.

This light does not directly enter lens 21, but reaches second surface 42d. The light that has reached second surface 42d undergoes diffuse reflection. Furthermore, light that has undergone diffuse reflection at a reflection angle of $\theta 5$ is further reflected off third surface 31, passes through lens 21, and is incident on imaging element 23. The incidence angle of the light incident on imaging element 23, which is reflected off third surface 31, is $\theta 5$.

Here, influence on the flare quantity when the values of D, B, H1, and H2 change is to be examined with reference to FIG. 30 to FIG. 33, using the same method as the calculation method for (a) of FIG. 6.

FIG. 30 to FIG. 33 illustrate influence on the flare quantity when D, B, H1, and H2 are changed, according to the present embodiment. Note that, A denoting the thickness of lens tube 22 is 0 mm to facilitate calculation, or stated differently, flare quantities due to only light resulting from being reflected off second 42d are calculated.

Here, D is 5 mm in FIG. 30 to FIG. 32, whereas D is 10 mm in FIG. 33. H1 and H2 are 1 mm in FIG. 30, 2 mm in FIG. 31 and FIG. 33, and 4 mm in FIG. 32.

It is meant in FIG. 30 to FIG. 33 that intense flare does not occur in imaging element 23 at $\theta 5$ of an angle less than the half angle of view if the value of the flare quantity is at most the minimum limit of detection.

In FIG. 30 (that is, D is 5 mm and H1 and H2 are 1 mm), the flare quantity is at most the minimum limit of detection when 2<B at a half angle of view of 45 degrees, 3.5<B at a half angle of view of 60 degrees, and 5.5<B at a half angle of view of 70 degrees.

In FIG. 31 (that is, D is 5 mm and H1 and H2 are 2 mm), the flare quantity is at most the minimum limit of detection when 4<B at a half angle of view of 45 degrees, 7<B at a half angle of view of 60 degrees, and 11<B at a half angle of view of 70 degrees.

In FIG. 32 (that is, D is 5 mm and H1 and H2 are 4 mm), the flare quantity is at most the minimum limit of detection when 8<B at a half angle of view of 45 degrees, 14<B at a half angle of view of 60 degrees, and 22<B at a half angle of view of 70 degrees.

With regard to these, when the generalized expression corresponds to Expression (5), or in other words, when Expression (5) is satisfied, the flare quantity is at most the minimum limit of detection and the occurrence of intense flare is reduced.

FIG. 31 and FIG. 33 are to be further compared. This comparison has clarified that a change in flare quantity is small when only D has a different value.

A is required to be 1 mm or more in manufacturing three-dimensional ranging module 1d. As illustrated in (a) of FIG. 13, in the three-dimensional ranging module according to the first example to be considered in which D is 5 mm, A is 1 mm, H1 and H2 are 2mm, and $\beta$ is 0 degrees, a peak value of the flare quantity due to the lens tube is 10. Accordingly, if the peak value of the flare quantity caused by reflection of light off second surface 42d is at most 10, it can be said that the occurrence of intense flare is further reduced than the three-dimensional ranging module according to the first example to be considered. For example, although the graphs for corresponding B are not illustrated in FIG. 30 to FIG. 33, by setting B<2.8 for the half angle of view of 45 degrees, B<5 for the half angle of view of 60 degrees, and B<8 for the half angle of view of 70 degrees, flare caused by second surface 42d is less than flare caused by lens tube 22, and an increase in the occurrence of intense flare as a whole is reduced.

[Advantageous Effects and Others]

Three-dimensional ranging module 1d according to the present embodiment includes light source 10, lens 21, imaging element 23, lens cover 30, and a member (substrate 40d).

Light source 10 emits a laser beam.

Lens 21 collects light resulting from the laser beam emitted being reflected off an object.

Imaging element 23 receives the light collected by lens 21.

Lens cover 30 is positioned between lens 21 and the object and transparent to a wavelength range of the laser beam. The member (substrate 40d) includes opening 41d in which lens 21 is provided when lens 21 is viewed through lens cover 30 in a direction of optical axis A1 of lens 21. In a cross section obtained when lens 21 is cut along a plane that includes optical axis A1, B denotes a distance between an outer edge of lens 21 and an outer edge of opening 41d, and H1 denotes a distance between lens cover 30 and a center of lens 21. Furthermore, in the above cross section, H2 denotes a distance between lens cover 30 and second surface 42d of the member (substrate 40d) that faces lens cover 30, and $\theta$ denotes an angle between optical axis A1 and a line that connects the center of lens 21 and an outer edge of imaging element 23. Then, a relation of $(H1+H2)\cdot\tan\theta \leq B$ is satisfied. Note that second surface 42d is a surface that causes diffuse reflection of light, for example.

Accordingly, when the laser beam reflected off object X corresponding to a bright spot undergoes diffuse reflection on second surface 42d, light (intense flare) that reaches lens 21 and imaging element 23 is reduced. For example, as described above, with the three-dimensional ranging module in which D is 5 mm, A is 1 mm, H1 and H2 are 2mm, and $\beta$ is 0 degrees, the peak value of the flare quantity due to the lens tube is 10. Yet, in the present embodiment, as illustrated in FIG. 30 to FIG. 33, three-dimensional ranging module 1d that achieves a peak value of at most 10 for the flare quantity caused by reflection of light off second surface 42d can be produced. Thus, flare caused by second surface 42d can be made less than flare caused by lens tube 22, and thus three-dimensional ranging module 1d can be produced, with which an increase in occurrence of intense flare as a whole can be reduced and an increase in inaccurate calculation of distances is reduced.

Three-dimensional ranging module 1d includes: light source 10; lens module 20 that includes lens 21, imaging element 23, and lens tube 22 that surrounds a space between lens 21 and imaging element 23 and supports lens 21; lens cover 30; and a member (substrate 40d). In a cross section obtained when lens tube 22 is cut along a plane that includes optical axis A1 of lens 21, first surface 221 of lens tube 22 includes first slope portion 222 that slopes away from lens cover 30 with an increase in distance from optical axis A1, first surface 221 facing the object. A relation of $(H1+H2)\cdot\tan\theta \leq B$ is satisfied.

Accordingly, when the laser beam reflected off object X corresponding to a bright spot is reflected off first surface 221 (first slope portion 222), light (intense flare) that reaches lens 21 and imaging element 23 is reduced. Furthermore, when the laser beam reflected off object X corresponding to a bright spot undergoes diffuse reflection on second surface 42d, light (intense flare) that reaches lens 21 and imaging element 23 is also reduced. Thus, the quantity of intense flare that reaches lens 21 and imaging element 23 is reduced as a whole, and thus three-dimensional ranging module 1d that reduces inaccurate calculation of distances can be produced.

[Variation 1 of Embodiment 2]

Next, Variation 1 of Embodiment 2 is to be described. Variation 1 of Embodiment 2 is different from Embodiment 2 in the shape of opening 41f. In the following, different points from Embodiment 2 are mainly described, and description of common points is omitted or simplified.

[Configuration]

An example of a configuration of three-dimensional ranging module 1f according to Variation 1 of Embodiment 2 is to be described with reference to FIG. 34.

FIG. 34 illustrates a top view and two cross-sectional views of three-dimensional ranging module 1f according to this variation.

More specifically, (a) of FIG. 34 is a top view of three-dimensional ranging module 1f, whereas (b) of FIG. 34 is a cross-sectional view of three-dimensional ranging module 1f taken along line XXXIVb-XXXIVb in (a) of FIG. 34. Further, (c) of FIG. 34 is a cross-sectional view of three-dimensional ranging module 1f taken along line XXXIVc-XXXIVc in (a) of FIG. 34.

Three-dimensional ranging module 1f according to this variation has the same configuration as that of three-dimensional ranging module 1d according to Embodiment 2, except that substrate 40f is included instead of substrate 40d.

Substrate 40f has the same configuration as that of substrate 40d, except that opening 41f is included, instead of opening 41d.

Opening 41f has a quadrilateral shape in the top view in this variation. In the top view, opening 41f may have a size that allows lens 21 and lens tube 22 to be provided inside opening 41f, and thus the size may allow lens module 20 to be provided inside opening 41f.

Note that similarly to Embodiment 2, also in three-dimensional ranging module 1f according to this variation, B, H1, H2, and θ5 satisfy the relation indicated by Expression (5) above.

Three-dimensional ranging module 1f may include substrate 40ff instead of such substrate 40f. Substrate 40ff is to be described with reference to FIG. 35.

FIG. 35 illustrates a top view of substrate 40ff according to this variation.

More specifically, (a) of FIG. 35 is a top view of substrate 40ff, whereas (b) of FIG. 35 is a top view of opening 41ff. Substrate 40ff has the same configuration as that of substrate 40f, except that opening 41ff is included, instead of opening 41f.

Furthermore, B, H1, H2, and θ5 satisfy the relation indicated by Expression (5) above also in three-dimensional ranging module 1f that includes substrate 40ff.

Note that in the top views, the shape of lens 21 is circular, and the shape of imaging element 23 is quadrilateral (rectangular, more specifically). In this case, irrespective of the angle in the rotation direction, if B, H1, H2, and θ5 satisfy the relation indicated by Expression (6) below, opening 41ff is barrel-shaped when viewed in the direction of optical axis A1, or stated differently, in the top view.

$$(H1+H2) \times \tan\theta 5 = B \quad \text{Expression (6)}$$

As described above, opening 41ff in the top view is barrel-shaped, and in other words, opening 41ff has an intermediate shape between the circular shape of lens 21 and the quadrilateral shape of imaging element 23. Part (b) of FIG. 35 illustrates rectangles 231 each having a shape analogous to the shape of imaging element 23 are shown with broken lines, and opening 41ff is provided, in which the outer sides and vertexes of rectangles 231 in contact with lens 21 are inscribed. With such a shape, a probability of occurrence of flare is the same, irrespective of the angle in the rotation direction.

As illustrated in FIG. 31 and FIG. 33, even if D is different, when other conditions are the same, dependency of the flare quantity on the value of B hardly changes. For example, in such a manner that B above satisfies Expression (6), or in other words, if the contour of opening 41ff and lens 21 are sufficiently distant from each other, the occurrence of intense flare caused by reflection of light off second surface 42d of substrate 40ff can be reduced.

Three-dimensional ranging module 1x according to Sixth Example is to be further described with reference to FIG. 36.

FIG. 36 illustrates a cross-sectional view of three-dimensional ranging module 1x according to Sixth Example.

Three-dimensional ranging module 1x according to Sixth Example has the same configuration as that of three-dimensional ranging module 1d according to Embodiment 2, except that substrate 40x is included instead of substrate 40d.

Substrate 40x has the same configuration as that of substrate 40d, except that opening 41x is included instead of opening 41d.

The shape of opening 41x is larger than that of opening 41d in the top view. Thus, B is greater in Sixth Example than in Embodiment 2. Accordingly, as illustrated in FIG. 36, reflected light L is incident on the upper surface of casing bottom portion 54 and reflected, is further reflected off lens cover 30, and reaches the imaging element of lens module 20. Note that most of such light is reflected off the outer lateral surface of the lens tube of lens module 20. Stated differently, vignetting occurs due to the outer lateral surface of the lens tube. Accordingly, the occurrence of intense flare is reduced.

[Advantageous Effects and Others]

In three-dimensional ranging module 1f according to this variation, in a view in the direction of optical axis A1, a contour of opening 41ff is barrel-shaped.

As described above, B satisfies Expression (6) irrespective of an angle in the rotation direction, where B denotes a distance between an outer edge of lens 21 and an outer edge of opening 41ff in a cross section obtained when lens 21 is cut along a plane that includes optical axis A1. Accordingly, the contour of opening 41ff and lens 21 can be uniformly and sufficiently distant from each other, and thus occurrence of intense flare caused by reflection of light off second surface 42d of substrate 40ff can be most efficiently reduced. Hence, the quantity of intense flare that reaches lens 21 and imaging element 23 is further reduced, and thus three-dimensional ranging module 1f that further reduces inaccurate calculation of distances can be produced.

[Variation 2 of Embodiment 2]

Next, Variation 2 of Embodiment 2 is to be described. Variation 2 of Embodiment 2 is different from Embodiment 2 in that second surface 42g of substrate 40g includes second slope portion 422g. In the following, different points from Embodiment 2 are mainly described, and description of common points is omitted or simplified.

[Configuration]

FIG. 37 illustrates a top view and a cross-sectional view of three-dimensional ranging module 1g according to this variation.

More specifically, (a) of FIG. 37 is a top view of three-dimensional ranging module 1g, whereas (b) of FIG. 37 is a cross-sectional view of three-dimensional ranging module 1g taken along line XXXVIIb-XXXVIIb in (a) of FIG. 37.

Three-dimensional ranging module 1g according to this variation has the same configuration as that of three-dimensional ranging module 1d according to Embodiment 2 except that substrate 40g is included instead of substrate 40d.

Substrate 40g includes second surface 42g that is an upper surface that faces lens cover 30.

In a cross section obtained when lens 21 is cut along a plane that includes optical axis A1, or stated differently, in the cross-sectional view illustrated in (b) of FIG. 37, second surface 42g includes second slope portion 422g that slopes away from lens cover 30 with an increase in distance from optical axis A1. Thus, second surface 42g includes second slope portion 422g that slopes downward with an increase in distance from optical axis A1. More specifically, second slope portion 422g is provided over the entirety of second surface 42g around opening 41g. Second slope portion 422g is linear in the cross-sectional view illustrated in (b) of FIG. 37, which is obtained when lens 21 is cut along a plane that includes optical axis A1 of lens 21. Note that in this variation, second slope portion 422g is linear in a cross-sectional view obtained when lens 21 is cut along any plane as long as the plane includes optical axis A1 of lens 21.

As illustrated in (b) of FIG. 37, $\eta$ denotes a slope angle that is an angle between second slope portion 422g and a plane perpendicular to optical axis A1 (that is, the xy plane). In this variation, $\eta$ of a greater angle is better, but if $\eta$ is excessively increased, second slope portion 422g cannot be said as being included in the upper surface but rather in the lateral surface. Accordingly, when $\eta$ has at most approximately 60 degrees, second slope portion 422g is practically considered to be included in the upper surface. Thus, $\eta$ may be at least 1 degree and at most 60 degrees, may further be at least 15 degrees and at most 60 degrees, and may yet further be at least $\tan^{-1}((H1+H2)/(D+A))$ and at most 60 degrees. Second slope portion 422g is linear in a cross-sectional view obtained when lens 21 is cut along any plane as long as the plane includes optical axis A1 of lens 21, and $\eta$ is constant in any of such cross-sectional views.

Note that also in three-dimensional ranging module 1g according to this variation, B, H1, H2, and $\theta 5$ satisfy the relation indicated by Expression (5) above. Here, H2 denotes a distance between lens cover 30 and the uppermost edge portion of second surface 42g (second slope portion 422g).

[Advantageous Effects and Others]

In three-dimensional ranging module 1g according to this variation, in the cross section, second surface 42g includes second slope portion 422g that slopes away from lens cover 30 with an increase in distance from optical axis A1.

Accordingly, when the laser beam reflected off object X that corresponds to a bright spot is reflected off second surface 42g (second slope portion 422g), the laser beam is readily reflected off second surface 42g (second slope portion 422g) in a direction opposite from lens 21 and imaging element 23. Thus, the quantity of intense flare that reaches lens 21 and imaging element 23 is further reduced, and thus three-dimensional ranging module 1g that further reduces inaccurate calculation of distances can be produced. In particular, when the slope angle is at least $\tan^{-1}((H1+H2)/(D+A))$, the flare due to the above cause can be eliminated, which yields great effects.

[Embodiment 3]

Next, Embodiment 3 is to be described. Embodiment 3 is mainly different from Embodiment 1 in that third surface 31h of lens cover 30h includes third slope portion 311h. In the following, different points from Embodiment 1 are mainly described, and description of common points is omitted or simplified.

[Configuration]

An example of a configuration of three-dimensional ranging module 1h according to Embodiment 3 is to be described with reference to FIG. 38.

FIG. 38 illustrates a cross-sectional view of three-dimensional ranging module 1h according to the present embodiment.

Three-dimensional ranging module 1h according to the present embodiment has the same configuration as that of three-dimensional ranging module 1 according to Embodiment 1, except that lens module 20h is included instead of lens module 20, and lens cover 30h is included instead of lens cover 30. Note that three-dimensional ranging module 1h according to the present embodiment includes substrate 40, but the present embodiment is not limited thereto, and substrate 40 may not be included.

Lens module 20h has the same configuration as that of lens module 20, except that lens tube 22h is included instead of lens tube 22.

Lens tube 22h has the same configuration as that of lens tube 22, except its shape.

Lens tube 22h has a hollow shape with no closed ends and is cylindrical. A columnar cavity is provided inside lens tube 22h. Lens tube 22h has a shape extending along optical axis A1 of lens 21, and optical axis A1 of lens 21 and the axis of lens tube 22h coincide with each other. As described above, lens tube 22h has a cylindrical shape, and thus the contour is annular ring-shaped in a cross section cut along the plane perpendicular to optical axis A1.

Here, a surface (an upper surface) of lens tube 22h that faces object X is first surface 221h. Unlike Embodiment 1, first surface 221h is parallel to the xy plane, and does not include a slope portion. First surface 221h is a diffuse reflection surface that diffuses (scatters) laser beams.

Lens cover 30h has the same configuration as that of lens cover 30 except its shape.

Lens cover 30h includes third surface 31h that is a lower surface that faces lens module 20h and fourth surface 32h that is an upper surface that faces object X.

Third surface 31h includes third slope portion 311h that slopes away from lens module 20h with an increase in distance from optical axis A1 of lens 21. Thus, third surface 31h includes third slope portion 311h that slopes upward with an increase in distance from optical axis A1. In the present embodiment, third slope portion 311h is provided over the entirety of third surface 31h, above lens module 20h, or more specifically, above opening 41. More specifically, when viewed in the direction of optical axis A1, third slope portion 311h is provided over the entirety of a region in which third slope portion 311h and lens module 20h overlap in the top view, for example. Third slope portion 311h is linear in the cross-sectional view illustrated in FIG. 38, which is obtained when lens cover 30h is cut along a plane that includes optical axis A1 of lens 21. Note that in the present embodiment, third slope portion 311h is linear in a cross-sectional view obtained when lens cover 30h is cut along any plane as long as the plane includes optical axis A1 of lens 21.

As illustrated in FIG. 38, $\zeta$ denotes a slope angle that is an angle between third slope portion 311h and a plane perpendicular to optical axis A1 (that is, the xy plane). In the present embodiment, $\zeta$ may be at least 5 degrees and at most 45 degrees, may further be at least 10 degrees and at most 45 degrees, and may yet further be at least 20 degrees and at most 45 degrees. Third slope portion 311h is linear in a cross-sectional view obtained when lens cover 30h is cut along any plane as long as the plane includes optical axis A1 of lens 21, and $\zeta$ is constant in any of such cross-sectional views.

On third surface 31h, a point on third slope portion 311h that overlaps optical axis A1 is in a most downward position in the z axis, and is a lowermost end portion of third surface 31h. Here, H3 denotes a distance between the lowermost end portion and center 211 of lens 21. Furthermore, $\Delta H$ denotes a distance in the z-axis direction between third slope portion 311h and the plane passing through the lowermost end portion and perpendicular to optical axis A1 (that is, the xy plane).

Fourth surface 32h of lens cover 30h may include fourth slope portion 321h that slopes upward with an increase in distance from optical axis A1, in a region in which third slope portion 311h is provided. Fourth slope portion 321h is linear similarly to third slope portion 311h. The degrees of slopes of third slope portion 311h and fourth slope portion 321h, that is, slope angles that are angles from third slope portion 311h and fourth slope portion 321h to a plane perpendicular to optical axis A1 (that is, the xy plane) are the same.

Next, behavior of light according to the present embodiment is to be described.

Reflected light L1 is light resulting from a laser beam emitted from light source 10 being reflected off object Y. $\theta 6$ denotes an angle between such reflected light L1 and optical axis A1, and thus $\theta 6$ denotes the incidence angle of reflected light L1 incident on imaging element 23. Such reflected light L1 forms an image on a point on imaging element 23.

Reflected light L illustrated in FIG. 38 does not directly enter lens 21, but passes through fourth slope portion 321h and third slope portion 311h of lens cover 30h, and reaches first surface 221h. Note that when passing through third slope portion 311h and fourth slope portion 321h, reflected light L is refracted.

Furthermore, a portion of light that has reached first surface 221h is reflected at a reflection angle of $\theta 6+2\zeta$. Furthermore, the reflected light reaches and is reflected off third surface 31h (more specifically, third slope portion 311h), passes through lens 21, and is incident on imaging element 23. A point on imaging element 23 on which a portion of this light is incident is the same as the point (the above one point) on imaging element 23 on which reflected light L1 stated above is incident. Thus, intense flare occurs at the one point at this time.

Furthermore, the quantity of intense flare (hereinafter, referred to as flare quantity) is calculated by following the procedure described below.

Similarly to Embodiment 1, object X (a bright spot) is positioned in the direction of optical axis A1 (the z-axis direction). The slope angle of third slope portion 311h is denoted by $\zeta$ as described above. R1 denotes a front reflectance of first surface 221h, and R2 denotes a front reflectance of third surface 31h.

Here, the quantity of reflected light L1 that is light reflected off object Y is expressed by Expression (7).

[Math 5]

$$\int 1\, dD \quad \text{Expression (7)}$$

In Expression (7), loss caused by lens cover 30h and lens 21 is disregarded. Furthermore, the flare quantity is expressed by Expression (8).
[Math 6]

$$\int \{R1 \times \cos(\theta 6 + 2\zeta)\} \times \{R2\}\, dA \quad \text{Expression (8)}$$

Note that when θ6 is small, there are cases where light reflected off third surface 31h is again reflected off first surface 221h (more specifically, first surface 221h on the positive side of the x axis illustrated in FIG. 38), and does not reach lens 21. Thus, this is a so-called light vignetting state caused by first surface 221h of lens tube 22h. The flare quantity corresponding to the one when θ6 in Expression (8) is smaller than θ7 that satisfies Expression (9) is subtracted from the flare quantity calculated by Expression (8).

$$(H3-\Delta H)\tan\theta 7+(H3-\Delta H)\tan(\theta 7+2\zeta) = A \quad \text{Expression (9)}$$

Note that when θ6 is great, there are also cases where light reflected off third surface 31h is again reflected off first surface 221h (more specifically, first surface 221h on the negative side of the x axis illustrated in FIG. 38) and does not reach lens 21. Thus, this is also a so-called light vignetting state caused by first surface 221h of lens tube 22h. The flare quantity corresponding to the one when θ6 in Expression (8) is greater than θ8 that satisfies Expression (10) is subtracted from the flare quantity calculated by Expression (8).

$$(H3-\Delta H)\tan\theta 8 + (H3-\Delta H)\tan(\theta 8+2\zeta) = 2D+A \quad \text{Expression (10)}$$

The flare quantity is calculated as described above. Next, influence on the flare quantity when ζ that denotes a slope angle of third slope portion 311h is changed is to be examined.

FIG. 39 and FIG. 40 illustrate influence on the flare quantity when the slope angle of third slope portion 311h is changed, according to the present embodiment.

Flare quantities are calculated in FIG. 39 for a three-dimensional ranging module that does not include substrate 40 and in FIG. 40 for a three-dimensional ranging module that includes substrate 40. In FIG. 39 and FIG. 40, D is 5 mm, H3 is 2 mm, and A is 2 mm, and in FIG. 40, B is 3 mm.

In FIG. 39, flare quantities are calculated for three-dimensional ranging modules according to Seventh, Eighth, Ninth, and Tenth Examples in which ζ is 5, 10, 15, and 20 degrees, respectively and each of which corresponds to three-dimensional ranging module 1h that does not include substrate 40. The three-dimensional ranging module illustrated in FIG. 39, in which ζ is 0 degrees is a three-dimensional ranging module according to a sixth example to be considered, and thus does not correspond to three-dimensional ranging module 1h according to the present embodiment. The three-dimensional ranging module according to the sixth example to be considered has the same configuration as that of three-dimensional ranging module 1h that does not include substrate 40, except that ζ is 0 degrees, that is, third surface 31h is parallel to the xy plane.

In FIG. 40, flare quantities are calculated for three-dimensional ranging modules according to Eleventh, Twelfth, Thirteenth, and Fourteenth Examples in which ζ is 5, 10, 15, and 20 degrees, respectively, and each of which corresponds to three-dimensional ranging module 1h that includes substrate 40 (that is, three-dimensional ranging module 1h illustrated in FIG. 38). The three-dimensional ranging module illustrated in FIG. 40, in which ζ is 0 degrees, is a three-dimensional ranging module according to a seventh example to be considered, and thus does not correspond to three-dimensional ranging module 1h according to the present embodiment. The three-dimensional ranging module according to the seventh example to be considered has the same configuration as that of three-dimensional ranging module 1h that includes substrate 40, except that ζ is 0 degrees, that is, third surface 31h is parallel to the xy plane.

FIG. 39 and FIG. 40 illustrate flare quantities when θ6 that denotes an incidence angle is changed.

The three-dimensional ranging modules according to the sixth and seventh examples to be considered in which third surface 31h does not include third slope portion 311h (that is, ζ is 0 degrees) are to be compared with the three-dimensional ranging modules according to Seventh to Fourteenth Examples in which third surface 31h includes third slope portion 311h (that is, ζ is at least 5 degrees). As compared with the three-dimensional ranging modules according to the sixth and seventh examples to be considered, the flare quantities are lower with the three-dimensional ranging modules according to Seventh to Fourteenth Examples in which third surface 31h includes third slope portion 311h.

Furthermore, as is clear from both of FIG. 39 and FIG. 40, flare quantities are reduced more as ζ is greater. A comparison between FIG. 39 and FIG. 40 shows that when three-dimensional ranging module 1h does not include substrate 40, flare quantities can be effectively reduced in a range of θ6 from 30 degrees to 70 degrees.

[Advantageous Effects and Others]

Three-dimensional ranging module 1h according to the present embodiment includes light source 10, lens module 20h, and lens cover 30h.

Light source 10 emits a laser beam.

Lens module 20h includes: lens 21 that collects light resulting from the laser beam emitted being reflected off an object; imaging element 23 that receives the light collected by lens 21; and lens tube 22h that surrounds a space between lens 21 and imaging element 23 and supports lens 21.

Lens cover 30h is positioned between lens module 20h and the object and transparent to a wavelength range of the laser beam. Third surface 31h of lens cover 30h includes third slope portion 311h that slopes away from lens module 20h with an increase in distance from optical axis A1 of lens 21, third surface 31h facing lens module 20h.

Accordingly, when the laser beam reflected off object X corresponding to a bright spot is reflected off third surface 31h (third slope portion 311h), light (intense flare) that reaches lens 21 and imaging element 23 is reduced. For example, as explained with reference to FIG. 39 and FIG. 40, as compared with the three-dimensional ranging modules according to the sixth and seventh examples to be considered, the flare quantities are lower with the three-dimensional ranging modules according to Seventh to Fourteenth Examples in which third surface 31h includes third slope portion 311h. Thus, the quantity of intense flare that reaches lens 21 and imaging element 23 is reduced, and thus three-dimensional ranging module 1h that reduces inaccurate calculation of distances can be produced. However, a three-dimensional ranging module that has an excessively large angle of slope ζ is not preferable since a portion that includes a center of a captured image is greatly distorted, so that the distortion level is found to be permissible practically when ζ is at most 45 degrees.

In three-dimensional ranging module 1h according to the present embodiment, in a view in a direction of optical axis A1, third slope portion 311h is provided over an entirety of a region in which third slope portion 311h and lens module 20h overlap.

Accordingly, when the laser beam reflected off object X that corresponds to a bright spot is reflected off third surface 31h (third slope portion 311h), the laser beam is readily reflected off third surface 31h (third slope portion 311h) in a direction opposite from lens 21 and imaging element 23. Hence, the quantity of intense flare that reaches lens 21 and imaging element 23 is further reduced, and thus three-dimensional ranging module 1h that further reduces inaccurate calculation of distances can be produced.

[Variation 1 of Embodiment 3]

Next, Variation 1 of Embodiment 3 is to be described. Variation 1 of Embodiment 3 is different from Embodiment 3 in that fourth surface 32j does not include a fourth slope portion. In the following, different points from Embodiment 3 are mainly described, and description of common points is omitted or simplified.

[Configuration]

An example of a configuration of three-dimensional ranging module 1j according to Variation 1 of Embodiment 3 is to be described with reference to FIG. 41 and FIG. 42.

FIG. 41 illustrates a top view and two cross-sectional views of three-dimensional ranging module 1j according to this variation.

More specifically, (a) of FIG. 41 is a top view of three-dimensional ranging module 1j, whereas (b) of FIG. 41 is a cross-sectional view of three-dimensional ranging module 1j taken along line XLIb-XLIb in (a) of FIG. 41. Part (c) of FIG. 41 is a cross-sectional view of three-dimensional ranging module 1j taken along line XLIc-XLIc in (a) of FIG. 41.

FIG. 42 illustrates a cross-sectional view showing behavior of light in three-dimensional ranging module 1j according to this variation.

Three-dimensional ranging module 1j according to this variation has the same configuration as that of three-dimensional ranging module 1h according to Embodiment 3, except that lens cover 30j is included instead of lens cover 30h. Note that three-dimensional ranging module 1j according to this variation includes substrate 40, but this variation is not limited thereto, and substrate 40 may not be included.

Lens cover 30j includes third surface 31j that is a lower surface that faces lens module 20h and fourth surface 32j that is an upper surface that faces object X.

Note that third surface 31j has the same configuration as that of third surface 31h according to Embodiment 3, and third slope portion 311j included in third surface 31j also has the same configuration as that of third slope portion 311h according to Embodiment 3.

Fourth surface 32j is planar, and thus is a flat surface and does not include a fourth slope portion. Fourth surface 32j is parallel to the xy plane.

Next, behavior of light according to this variation is to be described.

Reflected light L1 shows the same behavior as that of Embodiment 3, and forms an image at a point on imaging element 23.

Reflected light L illustrated in FIG. 42 does not directly enter lens 21, but enters and passes through third slope portion 311j of lens cover 30j. At this time, the angle of incidence on third slope portion 311j is denoted by $\zeta$, and the angle of emergence from third slope portion 311j is denoted by $\gamma$. Light passing through third slope portion 311j reaches first surface 221h.

Furthermore, a portion of light that has reached first surface 221h is reflected at a reflection angle of $\theta 6+2\zeta$. Furthermore, the reflected light reaches and is reflected off third surface 31j (more specifically, third slope portion 311j), passes through lens 21, and is incident on imaging element 23. A point on imaging element 23 where a portion of this light is incident is the same as the point (the above one point) on imaging element 23 on which reflected light L1 stated above is incident. Thus, intense flare occurs at the one point at this time.

Furthermore, the quantity of such intense flare (hereinafter, referred to as flare quantity) is calculated by following the procedure described below.

Similarly to Embodiment 3, object X (a bright spot) is positioned in the direction of optical axis A1 (the z-axis direction). The slope angle of third slope portion 311j is $\zeta$ as described above. R1 denotes a front reflectance of first surface 221h, and R2 denotes a front reflectance of third surface 31j.

Here, the amount of reflected light L1 that is light reflected off object Y is expressed by Expression (7) stated above.

Furthermore, light scattering on the upper surface (first surface 221h) of lens tube 22 is uniform diffuse reflection, and thus does not depend on incidence angle $\gamma$ on the uniform diffuse reflection surface, but depends on only an angle between a line vertical to the upper surface (first surface 221h) of lens tube 22 and the scattering direction. As a result, a flare quantity is expressed by Expression (11).

[Math 7]

$$\int \{R1 \times \cos(\theta 6 + 2\zeta)\} \times \{R2\} dA \quad \text{Expression (11)}$$

Here, when lens cover 30j is made of, for example, glass having an index of refraction of 1.5, $\zeta$ and $\gamma$ satisfy Expression (12).

$$\sin\gamma = \sin\zeta \times (n1/n2) \quad \text{Expression (12)}$$

Note that n1 denotes a refractive index (1.5, for example) of lens cover 30, and n2 denotes a refractive index (1.0) of air. Furthermore, when $\zeta$ is 10 degrees, $\gamma$ denoting the emergence angle is calculated by Expression (13), and is approximately 15 degrees.

$$\mathrm{Asin}(\sin(10) \times 1.0/1.5) \quad \text{Expression (13)}$$

Furthermore, when $\theta 6$ is small, there are cases where light reflected off third surface 31j is again reflected off first surface 221h (more specifically, first surface 221h on the positive side of the x axis illustrated in FIG. 42) and does not reach lens 21. Thus, this is a so-called light vignetting state caused by first surface 221h of lens tube 22h. The flare quantity corresponding to the one when $\theta 6$ in Expression (11) is smaller than $\theta 9$ that satisfies Expression (14) is subtracted from the flare quantity calculated by Expression (11).

$$(H3-\Delta H)\tan\theta 9+(H3-\Delta H)\tan(\theta 9+2\zeta) \approx A \quad \text{Expression (14)}$$

When $\theta 6$ is great, there are also cases where light reflected off third surface 31j is again reflected off first surface 221h (more specifically, first surface 221h on the negative side of the x axis illustrated in FIG. 42) and does not reach lens 21. Thus, this is also a so-called light vignetting state caused by first surface 221h of lens tube 22h. The flare quantity corresponding to the one when θ6 in Expression (11) is greater than θ10 that satisfies Expression (15) is subtracted from the flare quantity calculated by Expression (11).

$$(H3-\Delta H)\tan\theta 10+(H3-\Delta H)\tan(\theta 10+2\zeta) \approx 2D+A \quad \text{Expression (15)}$$

The flare quantity is calculated as described above. Next, influence on the flare quantity when ζ that denotes a slope angle of third slope portion 311j is changed is to be examined.

FIG. 43 and FIG. 44 illustrate influence on the flare quantity when the slope angle of third slope portion 311j is changed, according to this variation.

Flare quantities are calculated in FIG. 43 for a three-dimensional ranging module that does not include substrate 40 and in FIG. 44 for a three-dimensional ranging module that includes substrate 40. In FIG. 43 and FIG. 44, D is 5 mm, H3 is 2 mm, and A is 2 mm, and in FIG. 44, B is 3 mm.

In FIG. 43, flare quantities are calculated for three-dimensional ranging modules according to Fifteenth, Sixteenth, Seventeenth, and Eighteenth Examples in which ζ is 5, 10, 15, and 20 degrees, respectively, and each of which corresponds to three-dimensional ranging module 1j that does not include substrate 40. The three-dimensional ranging module illustrated in FIG. 43, in which ζ is 0 degrees, is a three-dimensional ranging module according to an eighth example to be considered, and thus does not correspond to three-dimensional ranging module 1j according to this variation. The three-dimensional ranging module according to the eighth example to be considered has the same configuration as that of three-dimensional ranging module 1j that does not include substrate 40, except that ζ is 0 degrees, that is, third surface 31j is parallel to the xy plane.

In FIG. 44, flare quantities are calculated for three-dimensional ranging modules according to Nineteenth, Twentieth, Twenty First, and Twenty Second Examples in which ζ is 5, 10, 15, and 20 degrees, respectively, and each of which corresponds to three-dimensional ranging module 1j that includes substrate 40 (that is, three-dimensional ranging module 1j illustrated in FIG. 42). The three-dimensional ranging module shown in FIG. 44, in which ζ is 0 degrees, is a three-dimensional ranging module according to a ninth example to be considered, and thus does not correspond to three-dimensional ranging module 1j according to this variation. The three-dimensional ranging module according to the ninth example to be considered has the same configuration as that of three-dimensional ranging module 1j that includes substrate 40, except that ζ is 0 degrees, that is, third surface 31j is parallel to the xy plane.

FIG. 43 and FIG. 44 illustrate flare quantities when θ6 that denotes an incidence angle is changed. As is clear from both of FIG. 43 and FIG. 44, flare quantities are reduced more as ζ is greater. A comparison between FIG. 43 and FIG. 44 shows that when three-dimensional ranging module 1j does not include substrate 40, flare quantities can be effectively reduced in a range of θ6 from 30 degrees to 70 degrees.

[Advantageous Effects and Others]

In three-dimensional ranging module 1j according to this variation, fourth surface 32j of lens cover 30 is flat, fourth surface 32j facing the object.

In an environment in which three-dimensional ranging module 1j is used, when a person, who is an example of a target a distance to whom is to be measured, sees three-dimensional ranging module 1j, if fourth surface 32j of lens cover 30j has irregularities, the person may feel odd. Accordingly, since fourth surface 32j is flat, such odd feeling is eliminated, and effects equivalent to those yielded by Embodiment 3 are simultaneously obtained. However, a three-dimensional ranging module in which slope ζ has an excessively large angle is not preferable since not only a portion that includes a center of a captured image is greatly distorted, but also an effect of enlarging an image is added to Embodiment 3, so that the levels of the distortion and such an effect are found to be permissible practically when ζ is at most 40 degrees.

[Variation 2 of Embodiment 3]

Next, Variation 2 of Embodiment 3 is to be described. Variation 2 of Embodiment 3 is different from Embodiment 3 in that fourth surface 32k does not include a fourth slope portion and in the shape of third slope portion 311k in the top view. In the following, different points from Embodiment 3 are mainly described, and description of common points is omitted or simplified.

[Configuration]

An example of a configuration of three-dimensional ranging module 1k according to Variation 2 of Embodiment 3 is to be described with reference to FIG. 45.

FIG. 45 illustrates a top view and cross-sectional views of three-dimensional ranging module 1k according to this variation.

More specifically, (a) of FIG. 45 is a top view of three-dimensional ranging module 1k, whereas (b) of FIG. 45 is a cross-sectional view of three-dimensional ranging module 1k taken along line XLVb-XLVb in (a) of FIG. 45. Part (c) of FIG. 45 is a cross-sectional view of three-dimensional ranging module 1k taken along line XLVc-XLVc in (a) of FIG. 45, and (d) of FIG. 45 is a cross-sectional view of three-dimensional ranging module 1k taken along line XLVd-XLVd.

Three-dimensional ranging module 1k according to this variation has the same configuration as that of three-dimensional ranging module 1h according to Embodiment 3, except that lens cover 30k is included instead of lens cover 30h.

Lens cover 30k includes third surface 31k that is a lower surface that faces lens module 20h and fourth surface 32k that is an upper surface that faces object X.

Note that fourth surface 32k has the same configuration as that of fourth surface 32j according to Variation 1 of Embodiment 3.

Third surface 31k includes third slope portion 311k that slopes away from lens module 20h with an increase in distance from optical axis A1 of lens 21. Thus, third surface 31k includes third slope portion 311k that slopes upward with an increase in distance from optical axis A1. When viewed in the direction of optical axis A1, for example, in the top view, third slope portion 311k is provided over the entirety of a region in which third slope portion 311k and lens module 20h overlap. Third slope portion 311k is linear in the cross-sectional view illustrated in FIG. 45, which is obtained when lens cover 30k is cut along a plane that includes optical axis A1 of lens 21. Note that in this variation, third slope portion 311k is linear in a cross-sectional view obtained when lens cover 30k is cut along any plane as long as the plane includes optical axis A1 of lens 21.

As illustrated in (b) and (c) of FIG. 45, $\zeta$ denotes a slope angle that is an angle between third slope portion 311k and a plane perpendicular to optical axis A1 (that is, the xy plane). In this variation, $\zeta$ may be at least 5 degrees and at most 40 degrees, may further be at least 10 degrees and at most 40 degrees, and may yet further be at least 20 degrees and at most 40 degrees.

When viewed in the direction of optical axis A1, that is, in the top view, the contour of third slope portion 311k is analogous to the contour of imaging element 23. As described above, the contour of imaging element 23 is quadrilateral when viewed in the direction of optical axis A1. In (a) of FIG. 45, the contour of third slope portion 311k that is analogous to the contour (a quadrilateral) of imaging element 23 is indicated by the broken-line rectangle.

A degree of a slope of third slope portion 311k from a plane (that is, the xy plane) perpendicular to optical axis A1 is expressed by $\zeta$ that denotes a slope angle of third slope portion 311k. The degree of the slope (that is, $\zeta$) has a positive correlation with a distance between optical axis A1 and an outer edge of third slope portion 311k. The outer edge of third slope portion 311k coincides with the contour (the broken-line rectangle) of third slope portion 311k illustrated in (a) of FIG. 45. Thus, in the top view, $\zeta$ of third slope portion 311k in a direction that connects optical axis A1 and a point on the outer edge of third slope portion 311k has a positive correlation with the distance between optical axis A1 and the outer edge of third slope portion 311k. A tangent of $\zeta$ of third slope portion 311k in the direction that connects optical axis A1 and a point on the outer edge of third slope portion 311k may be proportional to the distance between optical axis A1 and the outer edge of third slope portion 311k.

Here, the y-axis positive direction is assumed to be a reference direction. $\delta$ denotes an angle between this reference direction and each of line XLVb-XLVb and line XLVc-XLVc.

For example, in (b) of FIG. 45, $\delta$ is 0, A denoting the thickness of lens tube 22h is 1 mm, $\zeta$ is 10 degrees, and the half angle of view is 14 degrees.

For example, in (c) of FIG. 45, $\delta$ is greater than 0 degrees, $\zeta$ is 20 degrees, and the half angle of view is greater than 14 degrees and has the maximum value. In the cross-sectional view illustrated in (d) of FIG. 45, third surface 31k is curving out and projecting in the z-axis negative direction.

FIG. 46 illustrates a relation between $\delta$ and $\zeta$ according to this variation. Along with a change in $\delta$, the distance between optical axis A1 and the outer edge of third slope portion 311k changes. Along with this, the value of $\zeta$ also changes. For example, as compared with (b) of FIG. 45, in the case of (c) of FIG. 45 in which the half angle of view is greater, more intense flare due to reflection of light off second surface 42 of substrate 40 occurs. With such a shape, a probability of occurrence of flare is the same, irrespective of the angle in the rotation direction. Accordingly, in (c) of FIG. 45 in which the half angle of view is greater, the quantity of intense flare can be uniformly decreased in the direction at an angle of $\delta$, by increasing $\zeta$.

[Advantageous Effects and Others]

In three-dimensional ranging module 1k according to this variation, in a view in a direction of optical axis A1, a contour of third slope portion 311k is analogous to a contour of imaging element 23. A degree of a slope of third slope portion 311k from a plane perpendicular to optical axis A1 has a positive correlation with a distance between optical axis A1 and an outer edge of third slope portion 311k.

As described above, when the half angle of view is greater (for example, in (c) of FIG. 45), the quantity of intense flare can be uniformly decreased in the direction of angle $\delta$, by increasing $\zeta$. Thus, the quantity of intense flare that reaches lens 21 and imaging element 23 is further uniformly reduced, and thus three-dimensional ranging module 1k that further reduces inaccurate calculation of distances can be produced. However, a three-dimensional ranging module in which slope $\zeta$ has an excessively large angle is not preferable since not only a portion that includes a center of a captured image is greatly distorted, but also an effect of making an amount of enlarging an image different depending on a direction is added to Embodiment 3, so that the levels of the distortion and such an effect are found to be permissible practically when $\zeta$ is at most 40 degrees.

[Variation 3 of Embodiment 3]

Next, Variation 3 of Embodiment 3 is to be described. Variation 3 of Embodiment 3 is different from Variation 1 of Embodiment 3 in that lens cover 30m includes outer lens cover 33m and inner lens cover 34m. In the following, different points from Variation 1 of Embodiment 3 are mainly described, and description of common points is omitted or simplified.

[Configuration]

An example of a configuration of three-dimensional ranging module 1m according to Variation 3 of Embodiment 3 is to be described with reference to FIG. 47.

FIG. 47 illustrates a top view and two cross-sectional views of three-dimensional ranging module 1m according to this variation.

More specifically, (a) of FIG. 47 is a top view of three-dimensional ranging module 1m, whereas (b) of FIG. 47 is a cross-sectional view of three-dimensional ranging module 1m taken along line XLVIIb-XLVIIb in (a) of FIG. 47. Part (c) of FIG. 47 is a cross-sectional view of three-dimensional ranging module 1m taken along line XLVIIc-XLVIIc in (a) of FIG. 47.

Three-dimensional ranging module 1m according to this variation has the same configuration as that of three-dimensional ranging module 1j according to Variation 1 of Embodiment 3, except that lens cover 30m is included instead of lens cover 30j.

Lens cover 30m includes third surface 31m that is a lower surface facing lens module 20h and fourth surface 32m that is an upper surface facing object X.

Lens cover 30m includes outer lens cover 33m and inner lens cover 34m. Thus, lens cover 30m includes two members, namely, outer lens cover 33m and inner lens cover 34m.

The upper surface of outer lens cover 33m corresponds to fourth surface 32m. Outer lens cover 33m is a plate-shaped member located between lens module 20h and object X. Outer lens cover 33m can be said to be the same member as lens cover 30 according to Embodiment 1.

Inner lens cover 34m is a thin plate-shaped member provided between outer lens cover 33m and lens module 20h. Inner lens cover 34m is provided in contact with and connected to the lower surface of outer lens cover 33m. Third surface 31m that is a lower surface of lens cover 30m is a combination of a portion of the lower surface of outer lens cover 33m and the lower surface of inner lens cover 34m.

Inner lens cover 34m is a bent member that is projecting toward lens module 20h (that is, in the z-axis negative direction). Accordingly, third slope portion 311m included in third surface 31m is provided on the lower surface of inner lens cover 34m.

Lens cover 30m having such a configuration has cavity 35 in a space between third surface 31m of lens cover 30m and fourth surface 32m of lens cover 30m that faces object X. Thus, the space between outer lens cover 33m and inner lens cover 34m corresponds to cavity 35.

The thickness of lens cover 30m in a cross section obtained when lens cover 30m is cut along a plane that includes optical axis A1, that is, in the cross-sectional view illustrated in (b) of FIG. 47 is to be described. In the cross-sectional view, in a region in which cavity 35 is provided, the thickness in the direction of optical axis A1 from third surface 31m to fourth surface 32m excluding cavity 35 is constant.

As illustrated in (b) of FIG. 47, T1 denotes the thickness of outer lens cover 33m along a predetermined virtual line extending along optical axis A1, that is, in the z-axis direction, and T2 denotes the thickness of inner lens cover 34m along the predetermined virtual line. A total value of T1 and T2 is constant. Note that in this variation, T1 denoting the thickness of outer lens cover 33m is constant at any position thereof, and thus the value of T2 is also constant.

[Advantageous Effects and Others]

In three-dimensional ranging module 1m according to this variation, cavity 35 is provided in a space between third surface 31m of lens cover 30m and fourth surface 32m of lens cover 30m, fourth surface 32m facing the object. In a cross section obtained when lens cover 30m is cut along a plane that includes optical axis A1, a thickness in a direction of optical axis A1 from third surface 31m to fourth surface 32m excluding cavity 35 is constant in a region in which cavity 35 is provided.

According to this, with three-dimensional ranging module 1m, the quantity of intense flare can be decreased, and furthermore, distortion of a range image that is obtained can be reduced.

[Variation 4 of Embodiment 3]

Next, Variation 4 of Embodiment 3 is to be described. Variation 4 of Embodiment 3 is different from Variation 1 of Embodiment 3 in that lens cover 30n includes a lens shape. Here, the lens shape includes a shape of a lens that is distorted so that the focus is not adjusted on one point even if the surface has a convex shape. In the following, different points from Variation 1 of Embodiment 3 are mainly described, and description of common points is omitted or simplified.

[Configuration]

An example of a configuration of three-dimensional ranging module 1n according to Variation 4 of Embodiment 3 is to be described with reference to FIG. 48.

FIG. 48 illustrates a cross-sectional view of three-dimensional ranging module 1n according to this variation.

Three-dimensional ranging module 1n according to this variation has the same configuration as that of three-dimensional ranging module 1j according to Variation 1 of Embodiment 3, except that lens cover 30n is included instead of lens cover 30j.

Lens cover 30n includes third surface 31n that is a lower surface facing lens module 20h and fourth surface 32n that is an upper surface facing object X.

Fourth surface 32n is planar and thus is a flat surface, and does not include a fourth slope portion. Fourth surface 32n is parallel to the xy plane.

The lens shape is a shape of a plano-convex lens that is convex toward lens module 20h, that is, in the z-axis negative direction. The convex surface of the lens shape is included in third surface 31n and corresponds to third slope portion 311n. Thus, third surface 31n includes third slope portion 311n that slopes away from lens module 20h with an increase in distance from optical axis A1 of lens 21.

Furthermore, optical axis A2 of the lens cover, that is, optical axis A2 of the lens shape coincides with optical axis A1 of the lens of lens module 20h.

[Advantageous Effects and Others]

In three-dimensional ranging module 1n according to this variation, a shape of third surface 31n includes a lens shape, and optical axis A1 of lens cover 30n coincides with optical axis A2 of the lens of third surface 31n.

According to this, with three-dimensional ranging module 1n, the quantity of intense flare can be decreased, and furthermore, distortion of a range image that is obtained can be reduced. In particular, if the lens shape adjusts the focus to one point, distortion of a range image can be further reduced.

[Embodiment 4]

Next, Embodiment 4 is to be described. Embodiment 4 is different from Embodiment 1 mainly in that plural light sources 10 are provided. In the following, different points from Embodiment 1 are mainly described, and description of common points is omitted or simplified.

An example of a configuration of three-dimensional ranging module 1p according to Embodiment 4 is to be described with reference to FIG. 49.

FIG. 49 illustrates a top view and a cross-sectional view of three-dimensional ranging module 1p according to the present embodiment.

More specifically, (a) of FIG. 49 is a top view of three-dimensional ranging module 1p, whereas (b) of FIG. 49 is a cross-sectional view of three-dimensional ranging module 1p taken along line XLIXb-XLIXb in (a) of FIG. 49.

Three-dimensional ranging module 1p according to the present embodiment has the same configuration as that of three-dimensional ranging module 1 according to Embodiment 1, except plural light sources 10 are included, and light-blocking member 51p is included instead of light-blocking member 51.

Three-dimensional ranging module 1p includes four light sources 10. Four light sources 10 are equally distant from optical axis A1. Thus, a distance between one light source 10 and optical axis A1 is the same as the distance between each of remaining three light sources 10 and optical axis A1.

As illustrated in the top view in (a) of FIG. 49, four light sources 10 are positioned, one on each of (i) the positive side of the x axis and the positive side of the y axis, (ii) the positive side of the x axis and the negative side of the y axis, (iii) the negative side of the x axis and the positive side of the y axis, and (IV) the negative side of the x axis and the negative side of the y axis, relative to lens module 20.

Light-blocking member 51p is a member provided above and in contact with substrate 40. Light-blocking member 51p is provided between lens module 20 and four light sources 10. Light-blocking member 51p is a quadrilateral frame-shaped member that surrounds lens module 20 in the top view illustrated in (a) of FIG. 49. Light-blocking member 51p has the same configuration as that of light-blocking member 51, except its shape.

[Embodiment 5]

Next, Embodiment 5 is to be described. Embodiment 5 is different from Embodiment 1 in that lens cover 30h is included instead of lens cover 30. In the following, different points from Embodiment 1 are mainly described, and description of common points is omitted or simplified.

An example of a configuration of three-dimensional ranging module 1q according to Embodiment 5 is to be described with reference to FIG. 50.

FIG. 50 illustrates a cross-sectional view of three-dimensional ranging module 1q according to the present embodiment.

Three-dimensional ranging module 1q according to the present embodiment has the same configuration as that of three-dimensional ranging module 1 according to Embodiment 1, except that lens cover 30h is included instead of lens cover 30.

Accordingly, three-dimensional ranging module 1q includes light sources 10, lens module 20, and lens cover 30h. Light sources 10 emit laser beams. Lens module 20 includes: lens 21 that collects light resulting from the laser beams emitted being reflected off an object; imaging element 23 that receives the light collected by lens 21; and lens tube 22 that surrounds a space between lens 21 and imaging element 23 and supports lens 21. Lens cover 30h is located between lens module 20 and an object, and is transparent to a wavelength range of the laser beams. In a cross section obtained when lens tube 22 is cut along a plane that includes optical axis A1 of lens 21, first surface 221 of lens tube 22 that faces the object includes first slope portion 222 that slopes away from lens cover 30h with an increase in distance from optical axis A1. Third surface 31h of lens cover 30h that faces lens module 20 includes third slope portion 311h that slopes away from lens module 20 with an increase in distance from optical axis A1 of lens 21.

Accordingly, when the laser beams reflected off object X that corresponds to a bright spot are reflected off first surface 221 (first slope portion 222), light (intense flare) that reaches lens 21 and imaging element 23 is reduced. Furthermore, when the laser beams reflected off object X corresponding to a bright spot are reflected off third surface 31h (third slope portion 311h), light (intense flare) that reaches lens 21 and imaging element 23 is reduced. Accordingly, the quantity of intense flare that reaches lens 21 and imaging element 23 is reduced, and thus three-dimensional ranging module 1q that reduces inaccurate calculation of distances can be produced.

In the cross section obtained when lens tube 22 is cut along a plane that includes optical axis A1 of lens 21, an angle between first slope portion 222 and the surface (third surface 31h) of lens cover 30h that faces lens module 20 is at least 30 degrees. More specifically, an angle between first slope portion 222 and third slope portion 311h within third surface 31h is at least 30 degrees. Thus, $\beta+\zeta$ may be at least 30 degrees. In this case, light (intense flare) that reaches lens 21 and imaging element 23 is further reduced. Thus, the quantity of intense flare that reaches lens 21 and imaging element 23 is further reduced, and thus three-dimensional ranging module 1q that further reduces inaccurate calculation of distances can be produced.

[Other Embodiments]

The above has described the three-dimensional ranging modules according to one or more aspects, based on embodiments and variations, yet the present disclosure is not limited to the embodiments or the variations. The scope of the one or more aspects of the present disclosure may also encompasses embodiments as a result of adding, to the embodiments and variations, various modifications that may be conceived by those skilled in the art, and embodiments obtained by combining elements in different embodiments and variations.

Various changes, replacement, addition, and omission, for instance, can be made to the above embodiments and the variations within the scope of the claims and the equivalents thereof.

[Industrial Applicability]

The present disclosure is suitable for ranging imaging devices, and is suitable for video cameras, digital cameras, and ranging systems, for example.

[Reference Signs List]

1, 1a, 1b, 1c, 1d, 1f, 1g, 1h, 1j, 1k, 1m, 1n, 1p, 1q, 1x three-dimensional ranging module
L, L1 reflected light
X, Y object
10 light source
20, 20a, 20b, 20c, 20h lens module
21 lens
22, 22a, 22b, 22c, lens tube
23 imaging element
30, 30h, 30j, 30k, 30m, 30n lens cover
31, 31h, 31j, 31k, 31m, 31n third surface
32h, 32j, 32k, 32n fourth surface
33m outer lens cover
34m inner lens cover
35 cavity
40, 40a, 40d, 40f, 40ff, 40g, 40x substrate
41, 41a, 41d, 41f, 41ff, 41g, 41x opening
42, 42d, 42g second surface
51, 51p light-blocking member
52 substrate holding portion
53 casing side portion
54 casing bottom portion
60 control unit
61 drive controller
62 frame controller
63 calculator
64 range image generator
80 auxiliary line
A1, A2 optical axis
100 three-dimensional ranging system
211 center
221, 221a, 221b, 221c, 221h first surface
222, 222a, 222b, 222c first slope portion
223 inner side surface
231 rectangle
311h, 311j, 311k, 311m, 311n third slope portion
321h fourth slope portion
422g second slope portion

## Claims

**1.** A three-dimensional ranging module comprising:

a light source that emits a laser beam;
a lens module that includes:

a lens that collects light resulting from the laser beam emitted being reflected off an object;

an imaging element that receives the light collected by the lens; and
a lens tube that surrounds a space between the lens and the imaging element and supports the lens; and

a lens cover positioned between the lens module and the object and transparent to a wavelength range of the laser beam,
wherein in a cross section obtained when the lens tube is cut along a plane that includes an optical axis of the lens, a first surface of the lens tube includes a first slope portion that slopes away from the lens cover with an increase in distance from the optical axis, the first surface facing the object.

2. The three-dimensional ranging module according to claim 1, wherein the first slope portion is provided over an entirety of the first surface.

3. The three-dimensional ranging module according to claim 1 or 2,
wherein a full width at half maximum of a scattering angle of the first surface at which the laser beam is scattered is at least 45 degrees.

4. The three-dimensional ranging module according to claim 3, wherein in the cross section, an angle between the first slope portion and a surface of the lens cover is at least 30 degrees, the surface facing the lens module.

5. The three-dimensional ranging module according to any one of claims 1 to 4,
wherein in the cross section, the first slope portion is linear.

6. The three-dimensional ranging module according to any one of claims 1 to 5,
wherein in a view in a direction of the optical axis,

a contour of the lens tube is analogous to a contour of the imaging element, and
a degree of a slope of the first slope portion from a plane perpendicular to the optical axis has a positive correlation with a distance between the optical axis and an outer edge of the lens tube.

7. The three-dimensional ranging module according to claim 1 or 2,
wherein a full width at half maximum of a scattering angle of the first surface at which the laser beam is scattered is at most 7 degrees.

8. The three-dimensional ranging module according to claim 7, wherein when the lens is viewed from a side of the lens cover closer to the object,
an angle between the first slope portion and a plane perpendicular to the optical axis is at least $\varepsilon/2$, where $\varepsilon$ denotes a maximum angle of an angle between the optical axis and a direction in which a front side of the lens is visible.

9. The three-dimensional ranging module according to any one of claims 1 to 8, further comprising:

a member that includes an opening in which the lens is provided when the lens is viewed through the lens cover in a direction of the optical axis of the lens,
wherein a relation of $(H1+H2)\cdot\tan\theta \leq B$ is satisfied, where in the cross section obtained when the lens tube is cut along the plane that includes the optical axis of the lens,

B denotes a distance between an outer edge of the lens and an outer edge of the opening,
H1 denotes a distance between the lens cover and a center of the lens,
H2 denotes a distance between the lens cover and a second surface of the member, the second surface facing the lens cover, and
$\theta$ denotes an angle between the optical axis and a line that connects the center of the lens and an outer edge of the imaging element.

10. The three-dimensional ranging module according to any one of claims 1 to 9,
wherein a third surface of the lens cover includes a third slope portion that slopes away from the lens module with an increase in distance from the optical axis, the third surface facing the lens module.

11. A three-dimensional ranging module comprising:

a light source that emits a laser beam;
a lens that collects light resulting from the laser beam emitted being reflected off an object;
an imaging element that receives the light collected by the lens;
a lens cover positioned between the lens and the object and transparent to a wavelength range of the laser beam; and
a member that includes an opening in which the lens is provided when the lens is viewed through the lens cover in a direction of an optical axis of the lens,
wherein a relation of $(H1+H2)\cdot\tan\theta \leq B$ is satisfied, where in a cross section obtained when the lens is cut along a plane that includes the optical axis,

B denotes a distance between an outer edge of the lens and an outer edge of the opening,
H1 denotes a distance between the lens cover and a center of the lens,
H2 denotes a distance between the lens cover and a second surface of the member, the second surface facing the lens cover, and
$\theta$ denotes an angle between the optical axis and a line that connects the center of the lens and an outer edge of the imaging element.

**12.** The three-dimensional ranging module according to claim 11, wherein in a view in the direction of the optical axis, a contour of the opening is barrel-shaped.

**13.** The three-dimensional ranging module according to claim 11 or 12,
wherein in the cross section, the second surface includes a second slope portion that slopes away from the lens cover with an increase in distance from the optical axis.

**14.** A three-dimensional ranging module comprising:

a light source that emits a laser beam;
a lens module that includes:

a lens that collects light resulting from the laser beam emitted being reflected off an object;
an imaging element that receives the light collected by the lens; and
a lens tube that surrounds a space between the lens and the imaging element and supports the lens; and

a lens cover positioned between the lens module and the object and transparent to a wavelength range of the laser beam,
wherein a third surface of the lens cover includes a third slope portion that slopes away from the lens module with an increase in distance from an optical axis of the lens, the third surface facing the lens module.

**15.** The three-dimensional ranging module according to claim 14, wherein in a view in a direction of the optical axis, the third slope portion is provided over an entirety of a region in which the third slope portion and the lens module overlap.

**16.** The three-dimensional ranging module according to claim 14 or 15,
wherein a fourth surface of the lens cover is flat, the fourth surface facing the object.

**17.** The three-dimensional ranging module according to any one of claims 14 to 16,
wherein in a view in a direction of the optical axis,

a contour of the third slope portion is analogous to a contour of the imaging element, and
a degree of a slope of the third slope portion from a plane perpendicular to the optical axis has a positive correlation with a distance between the optical axis and an outer edge of the third slope portion.

**18.** The three-dimensional ranging module according to any one of claims 14 to 17,

wherein a cavity is provided in a space between the third surface of the lens cover and a fourth surface of the lens cover, the fourth surface facing the object, and
in a cross section obtained when the lens cover is cut along a plane that includes the optical axis, a thickness in a direction of the optical axis from the third surface to the fourth surface excluding the cavity is constant in a region in which the cavity is provided.

**19.** The three-dimensional ranging module according to any one of claims 14 to 18,

wherein a shape of the third surface includes a lens shape, and
an optical axis of the lens cover coincides with the optical axis of the lens.

**20.** A three-dimensional ranging system comprising:

the three-dimensional ranging module according to any one of claims 1 to 19,
wherein the three-dimensional ranging module includes:
a calculator that calculates a distance from the light source to the object, based on a time of flight of the laser beam.

FIG. 1

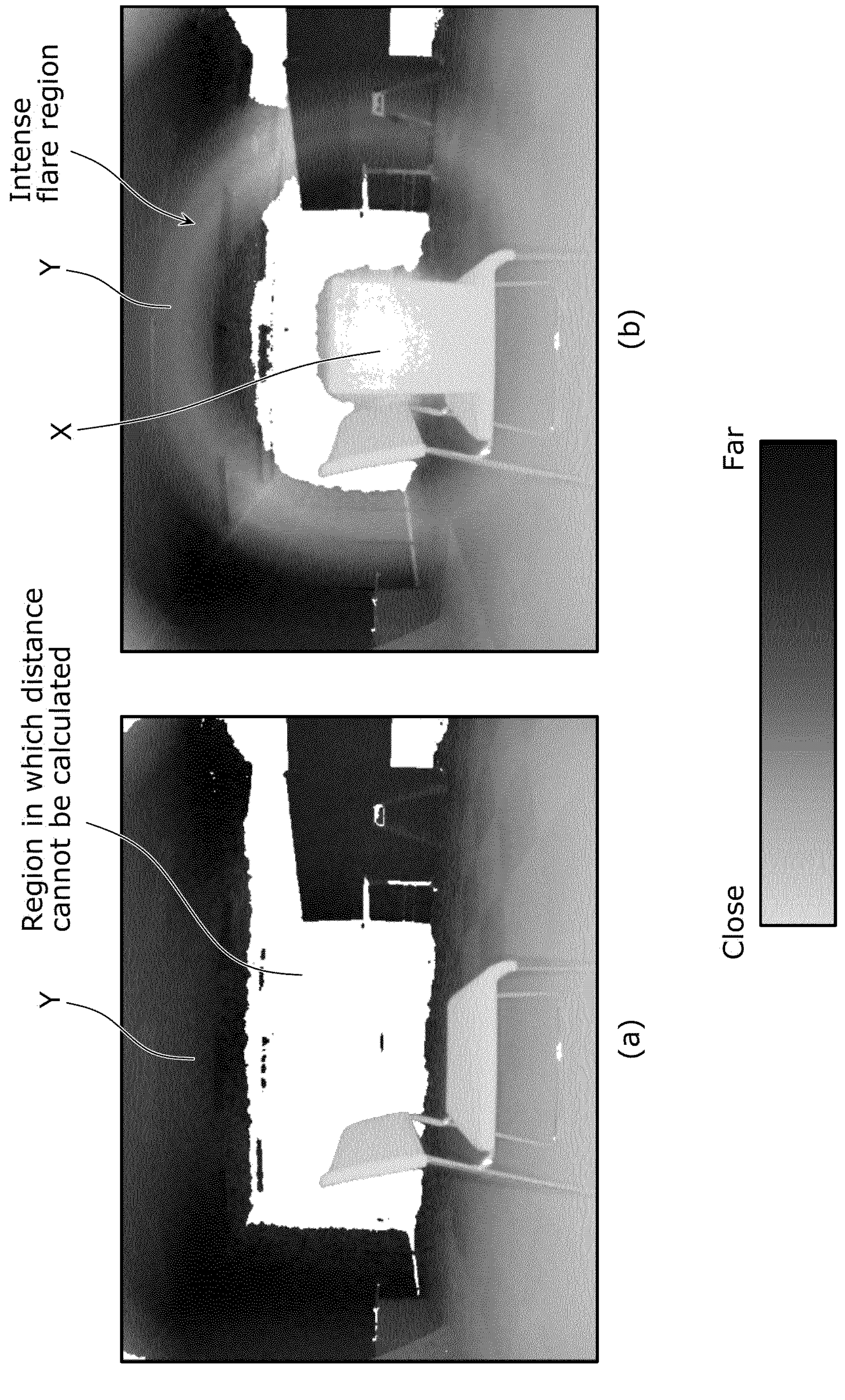
Y
Region in which distance
cannot be calculated
(a)
X
Y
Intense
flare region
(b)
Close
Far

FIG. 2

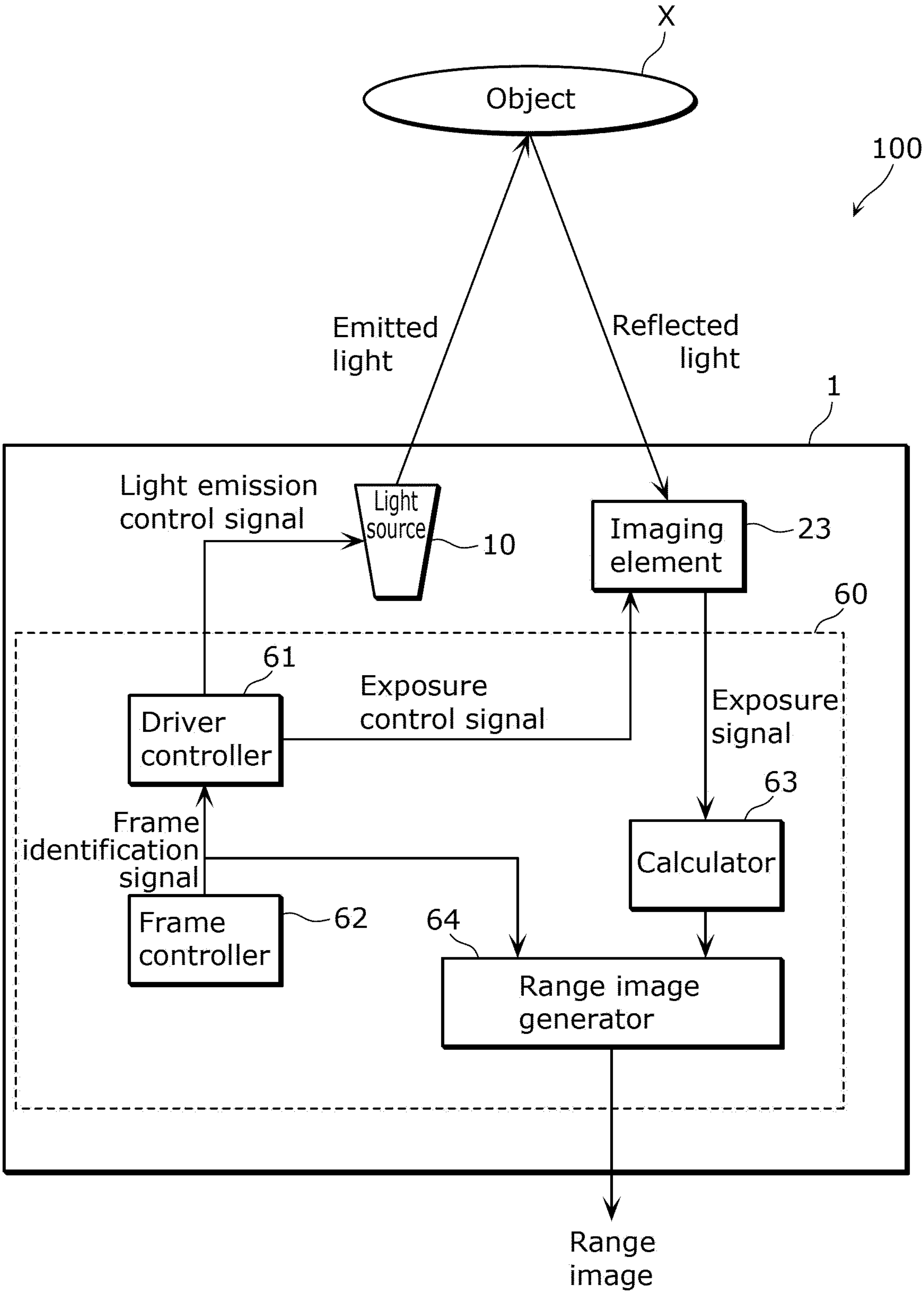
X
Object
100
Emitted light
Reflected light
1
Light emission control signal
Light source
10
Imaging element
23
60
61
Exposure control signal
Driver controller
Exposure signal
63
Frame identification signal
Calculator
Frame controller
62
64
Range image generator
Range image

FIG. 3

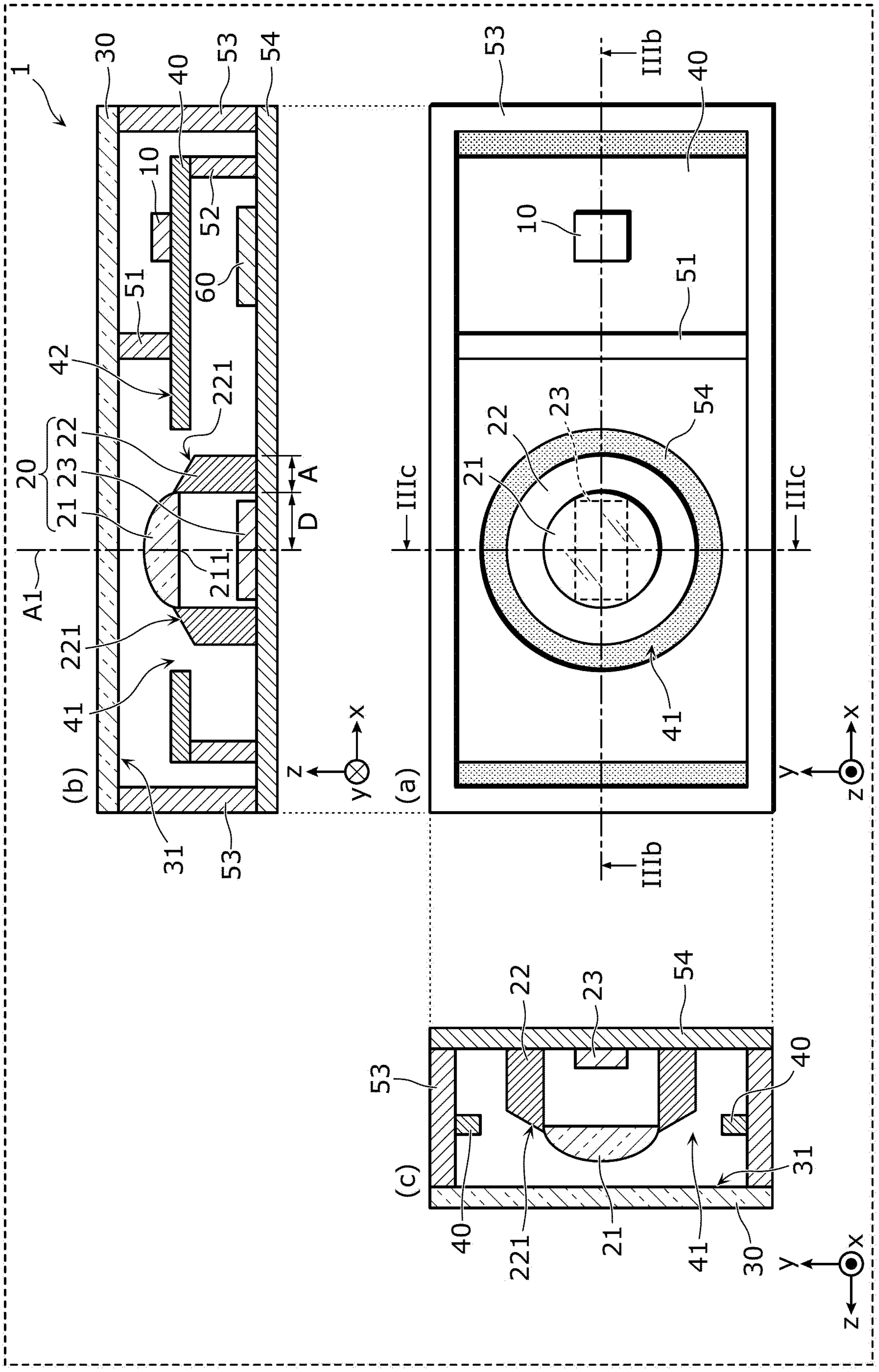

(a)
(b)
(c)
1
10
20
21
22
23
30
31
40
41
42
51
52
53
54
60
211
221
A1
A
D
IIIb
IIIc
x
y
z

FIG. 4

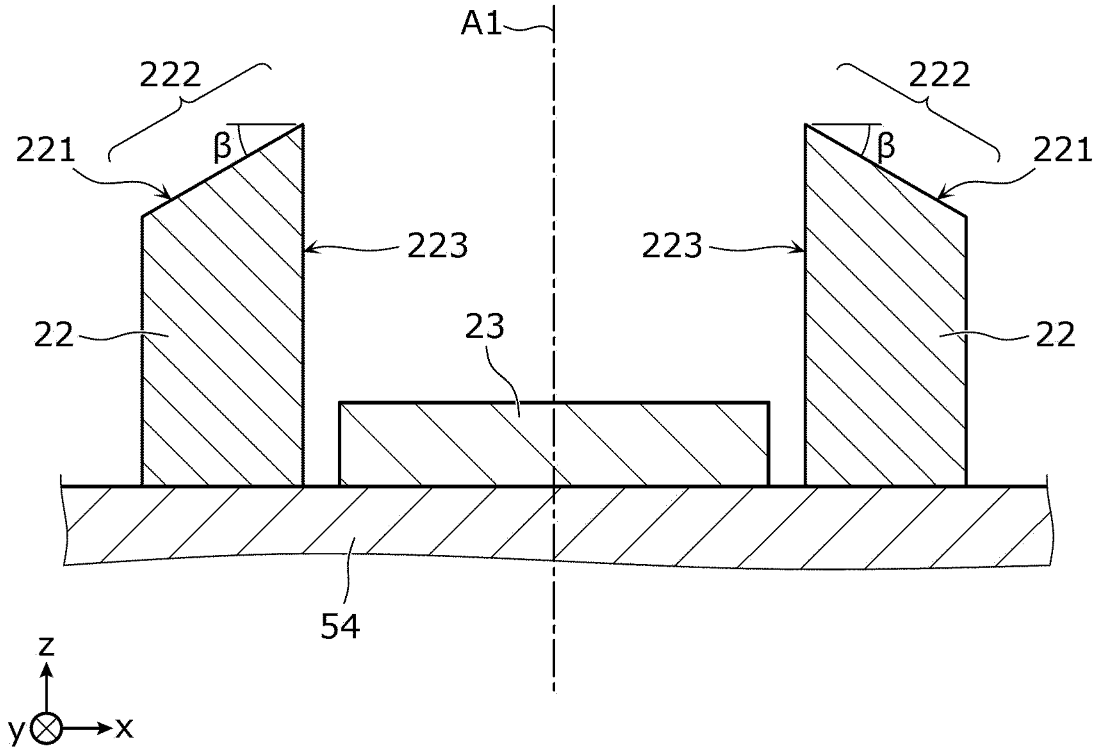

FIG. 5

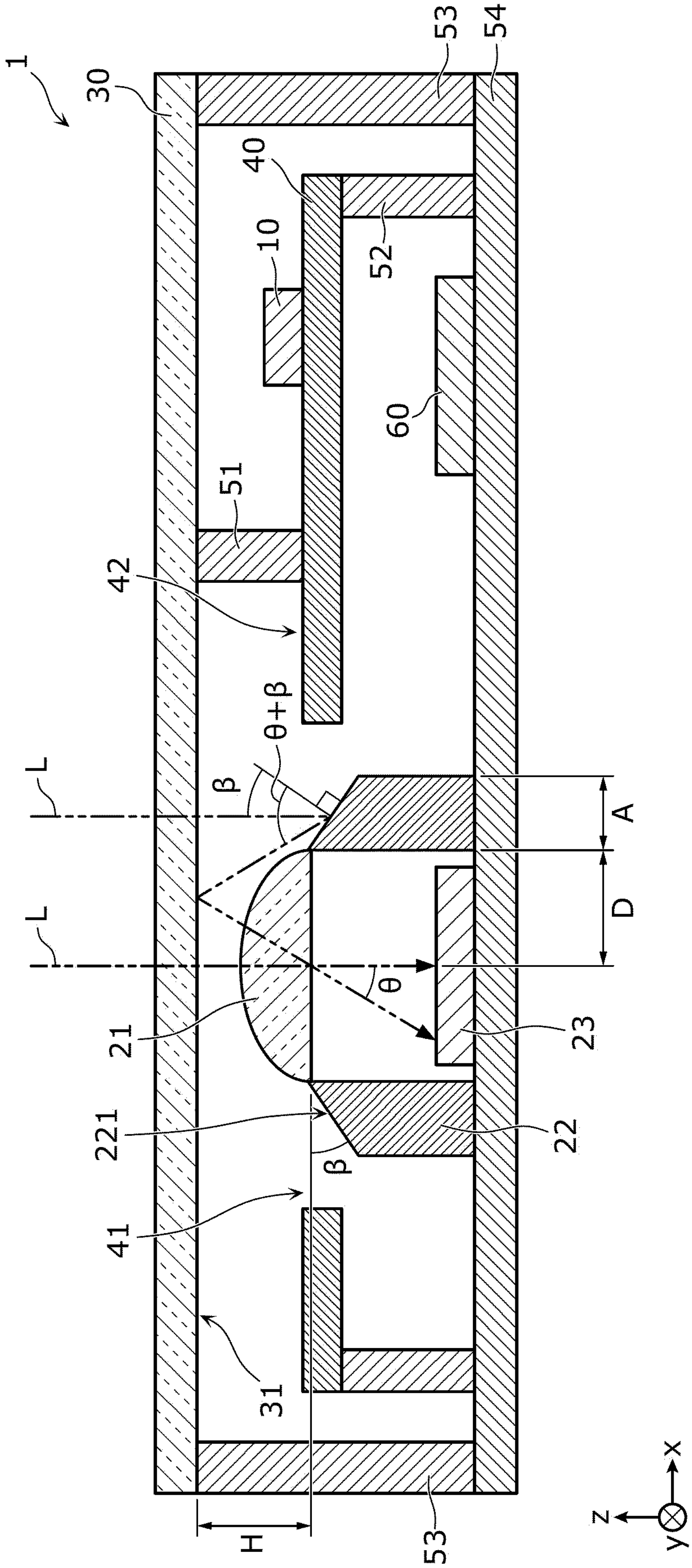

FIG. 6

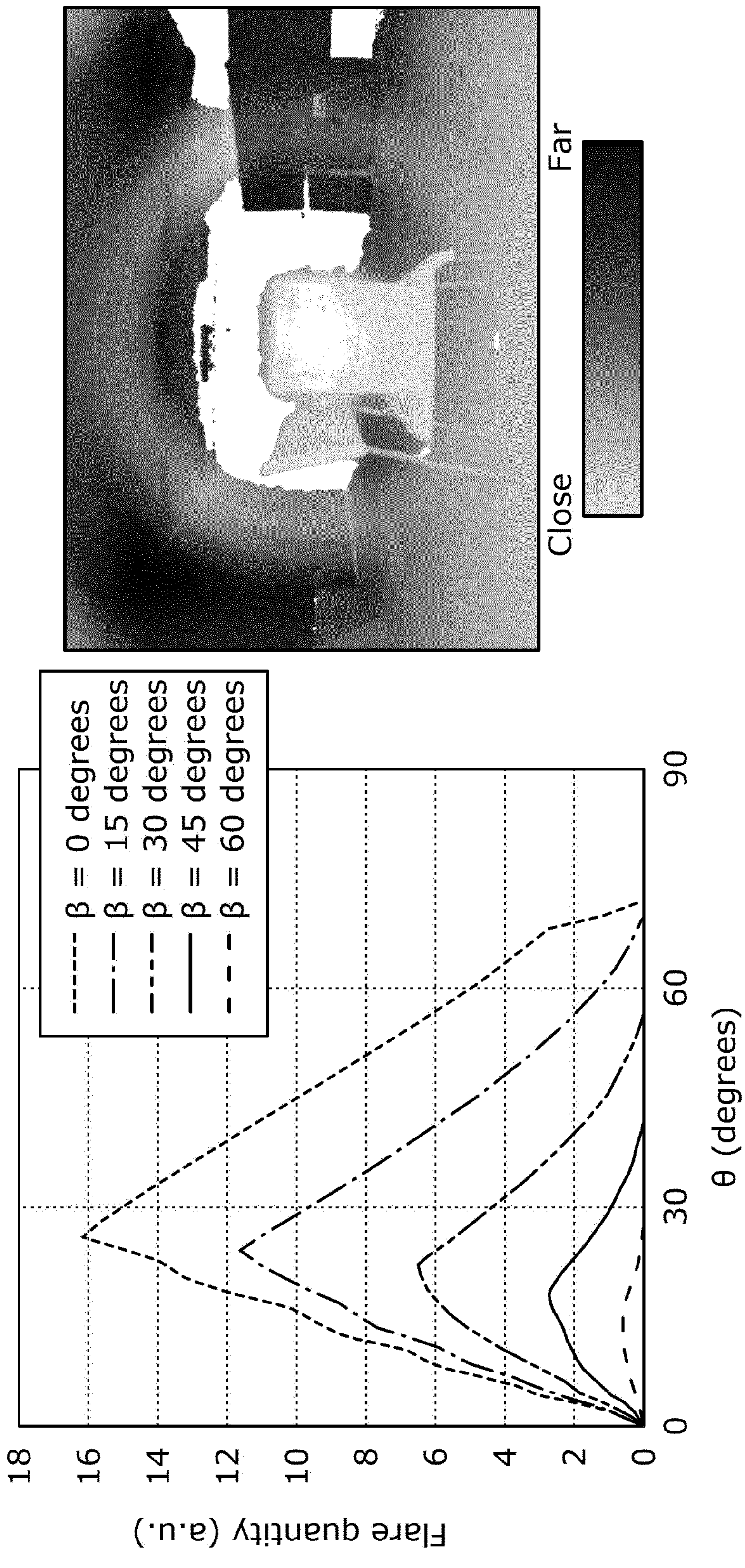

Flare quantity (a.u.)
θ (degrees)
0
2
4
6
8
10
12
14
16
18
30
60
90
β = 0 degrees
β = 15 degrees
β = 30 degrees
β = 45 degrees
β = 60 degrees
Close
Far


(a)

(b)

FIG. 7

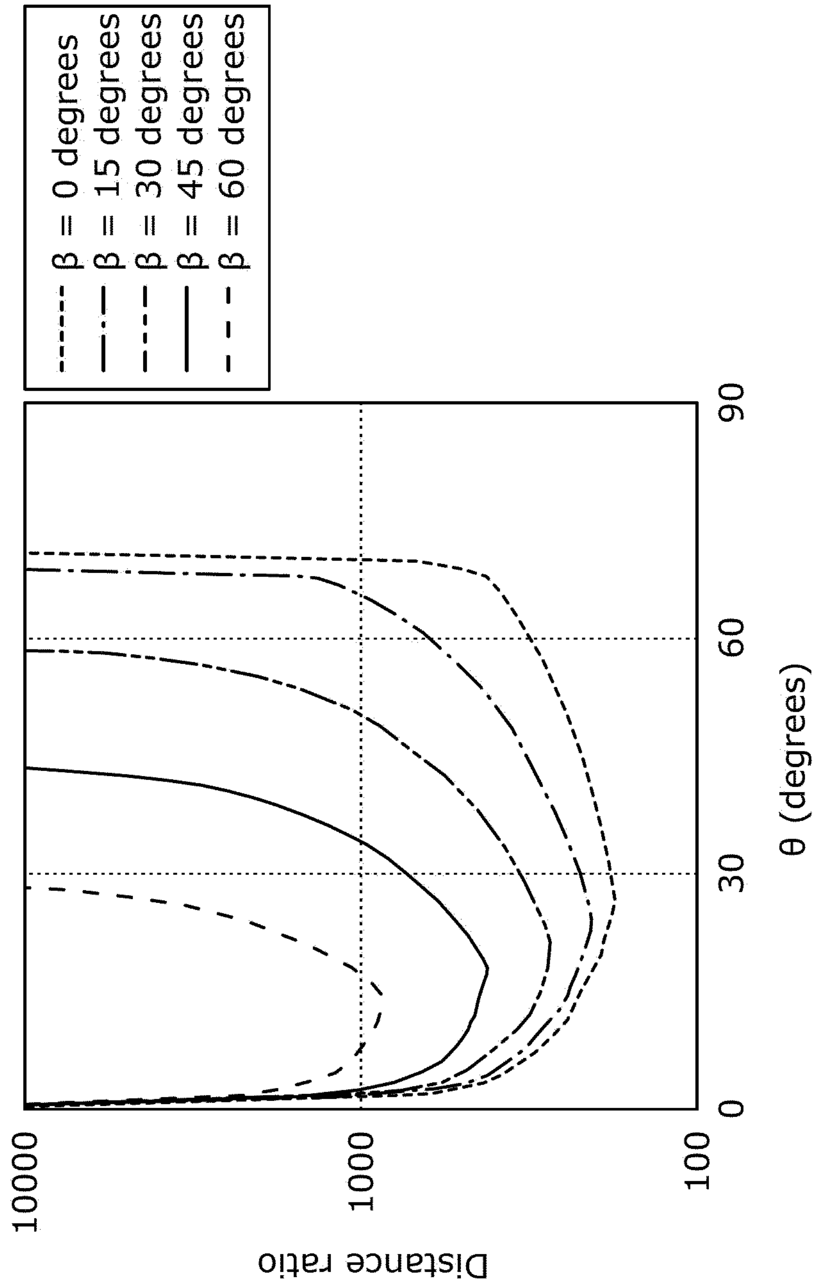
β = 0 degrees
β = 15 degrees
β = 30 degrees
β = 45 degrees
β = 60 degrees
Distance ratio
10000
1000
100
0
30
60
90
θ (degrees)

FIG. 8

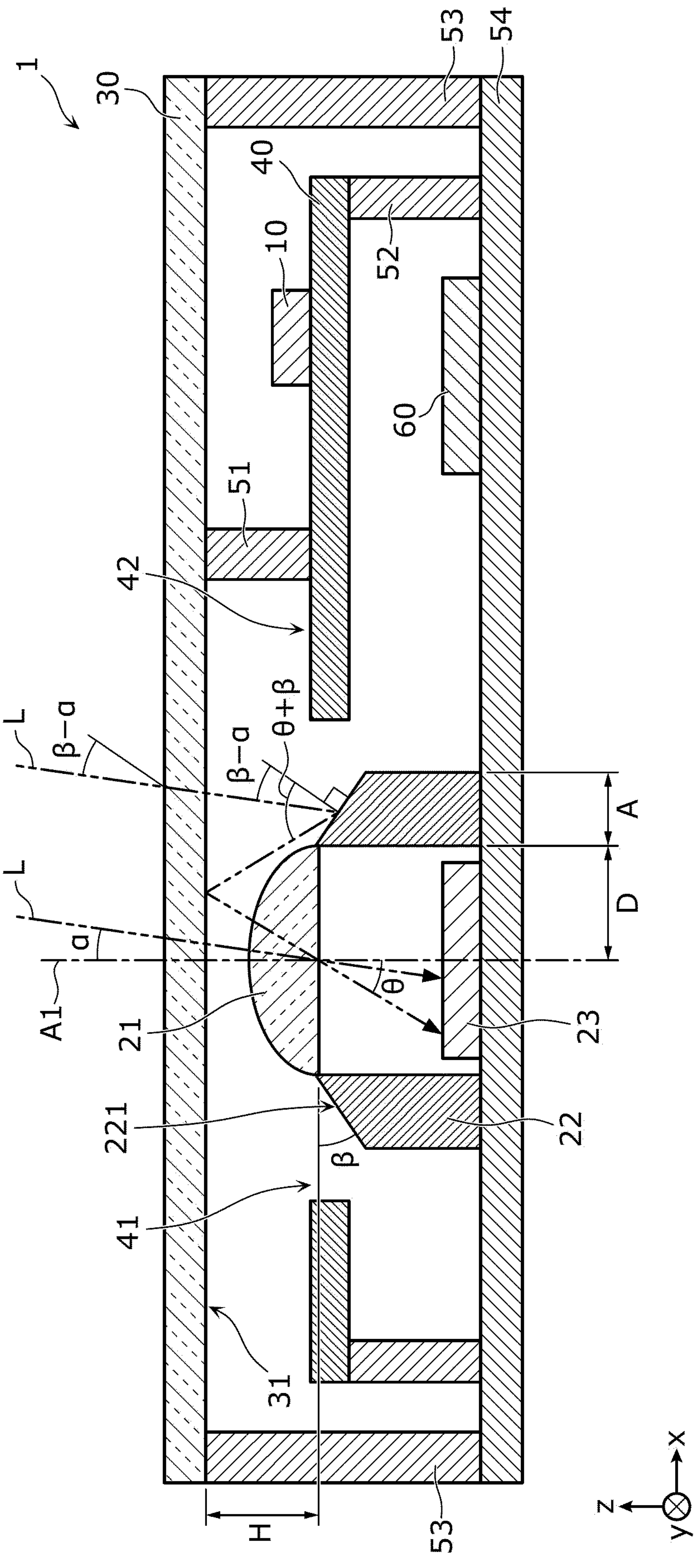

FIG. 9

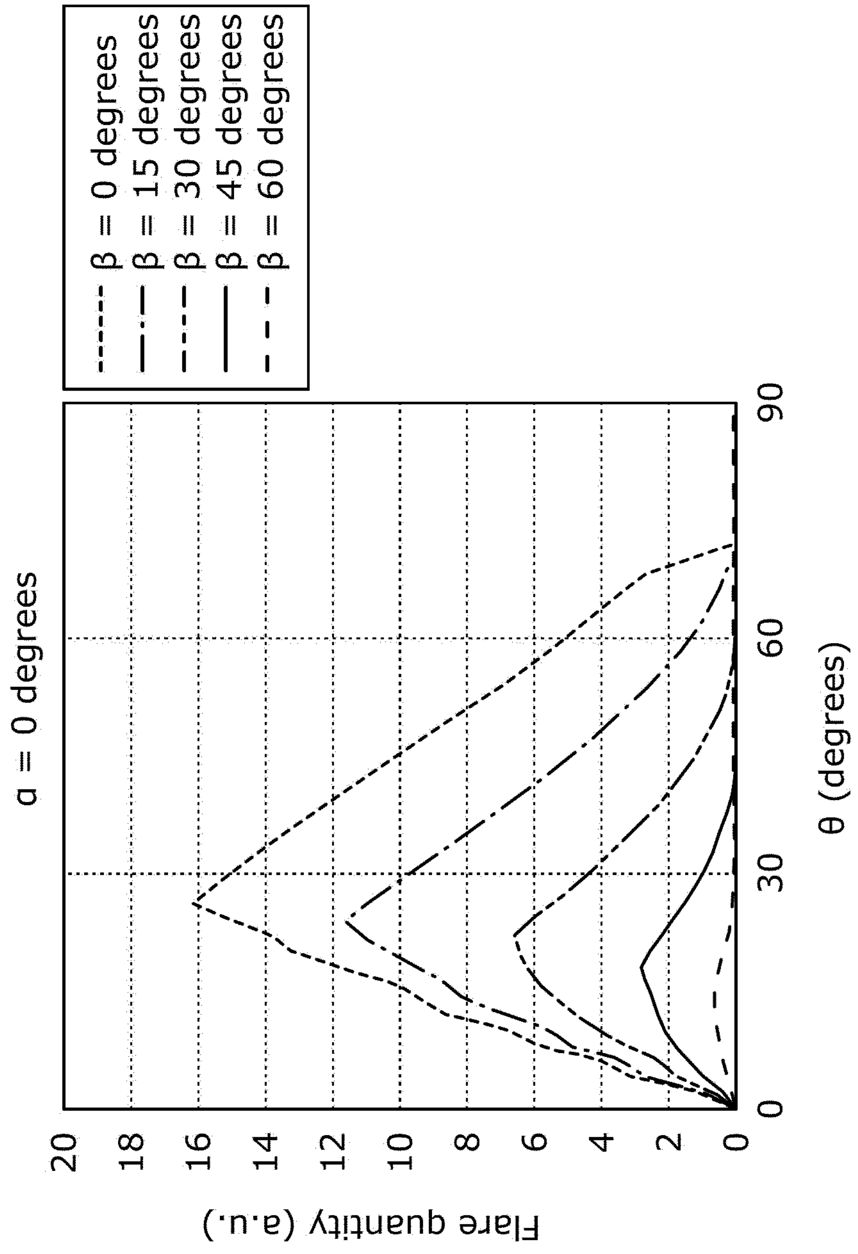
α = 0 degrees
Flare quantity (a.u.)
θ (degrees)
0
2
4
6
8
10
12
14
16
18
20
0
30
60
90
β = 0 degrees
β = 15 degrees
β = 30 degrees
β = 45 degrees
β = 60 degrees

FIG. 10

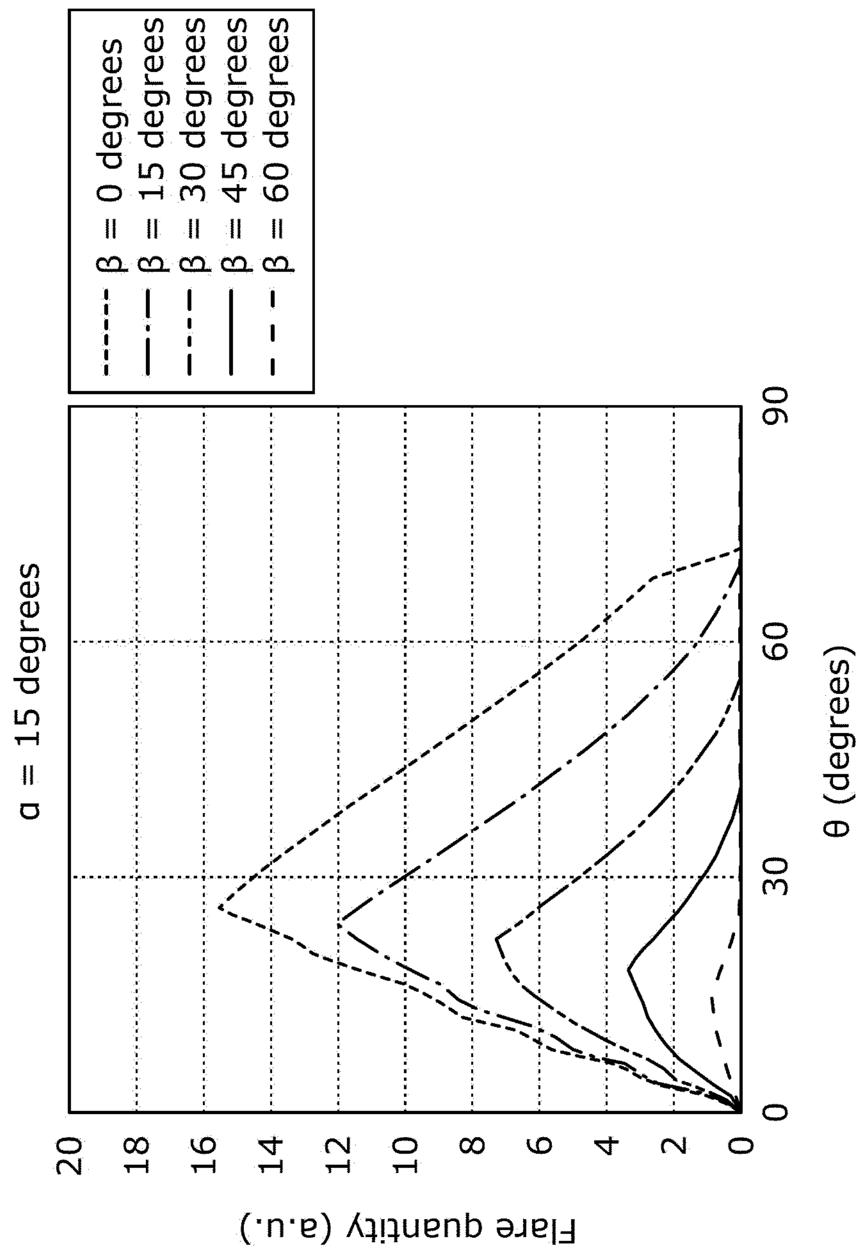
α = 15 degrees
β = 0 degrees
β = 15 degrees
β = 30 degrees
β = 45 degrees
β = 60 degrees
Flare quantity (a.u.)
0
2
4
6
8
10
12
14
16
18
20
0
30
60
90
θ (degrees)

FIG. 11

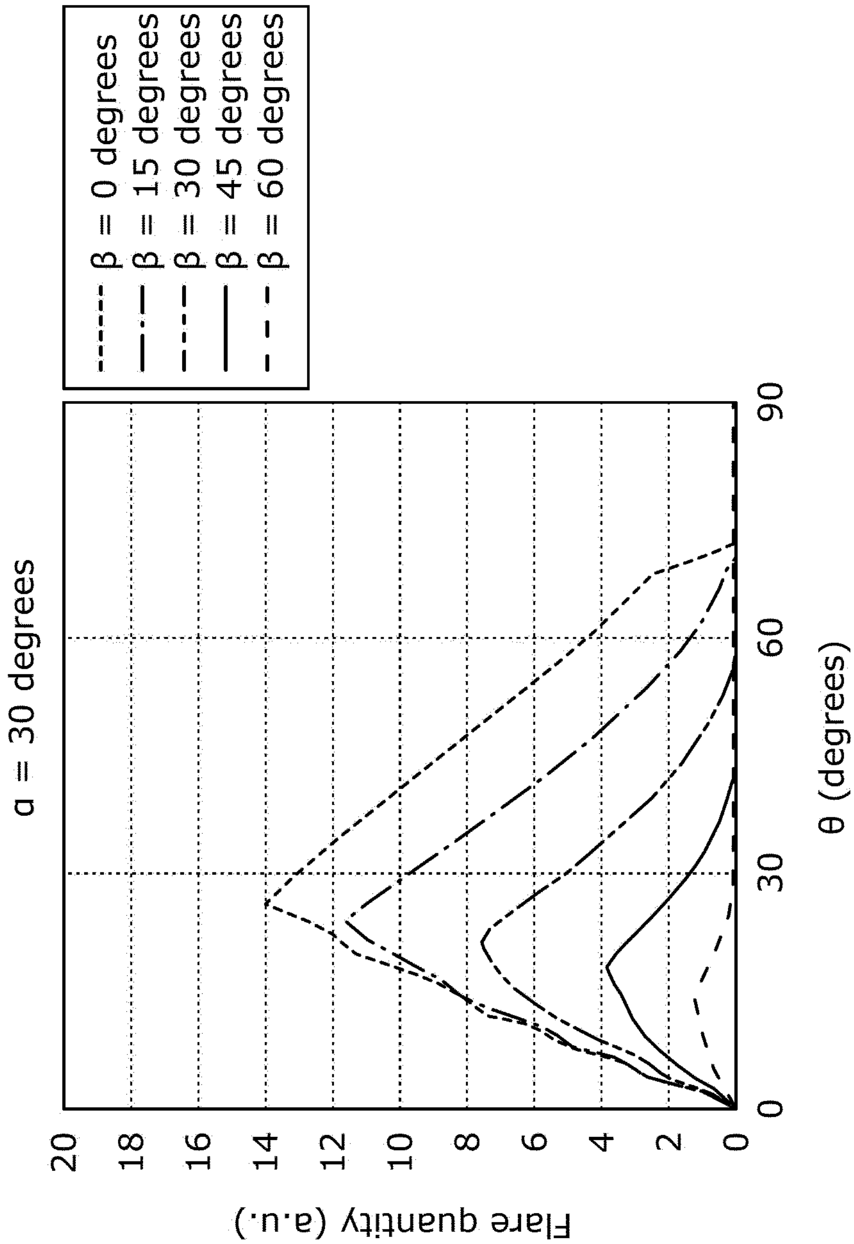
α = 30 degrees
Flare quantity (a.u.)
20
18
16
14
12
10
8
6
4
2
0
0
30
60
90
θ (degrees)
β = 0 degrees
β = 15 degrees
β = 30 degrees
β = 45 degrees
β = 60 degrees

FIG. 12

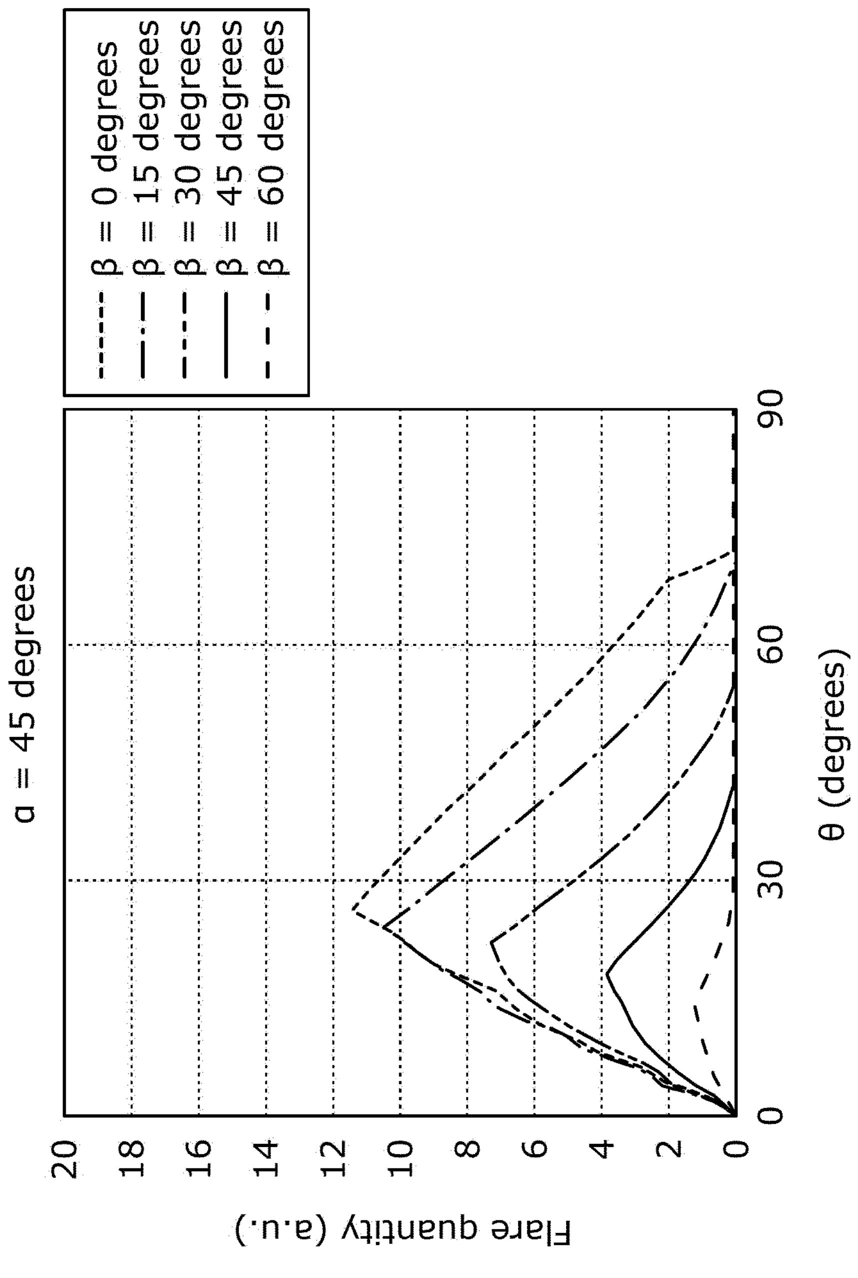
α = 45 degrees
Flare quantity (a.u.)
θ (degrees)
0
2
4
6
8
10
12
14
16
18
20
0
30
60
90
β = 0 degrees
β = 15 degrees
β = 30 degrees
β = 45 degrees
β = 60 degrees

FIG. 13

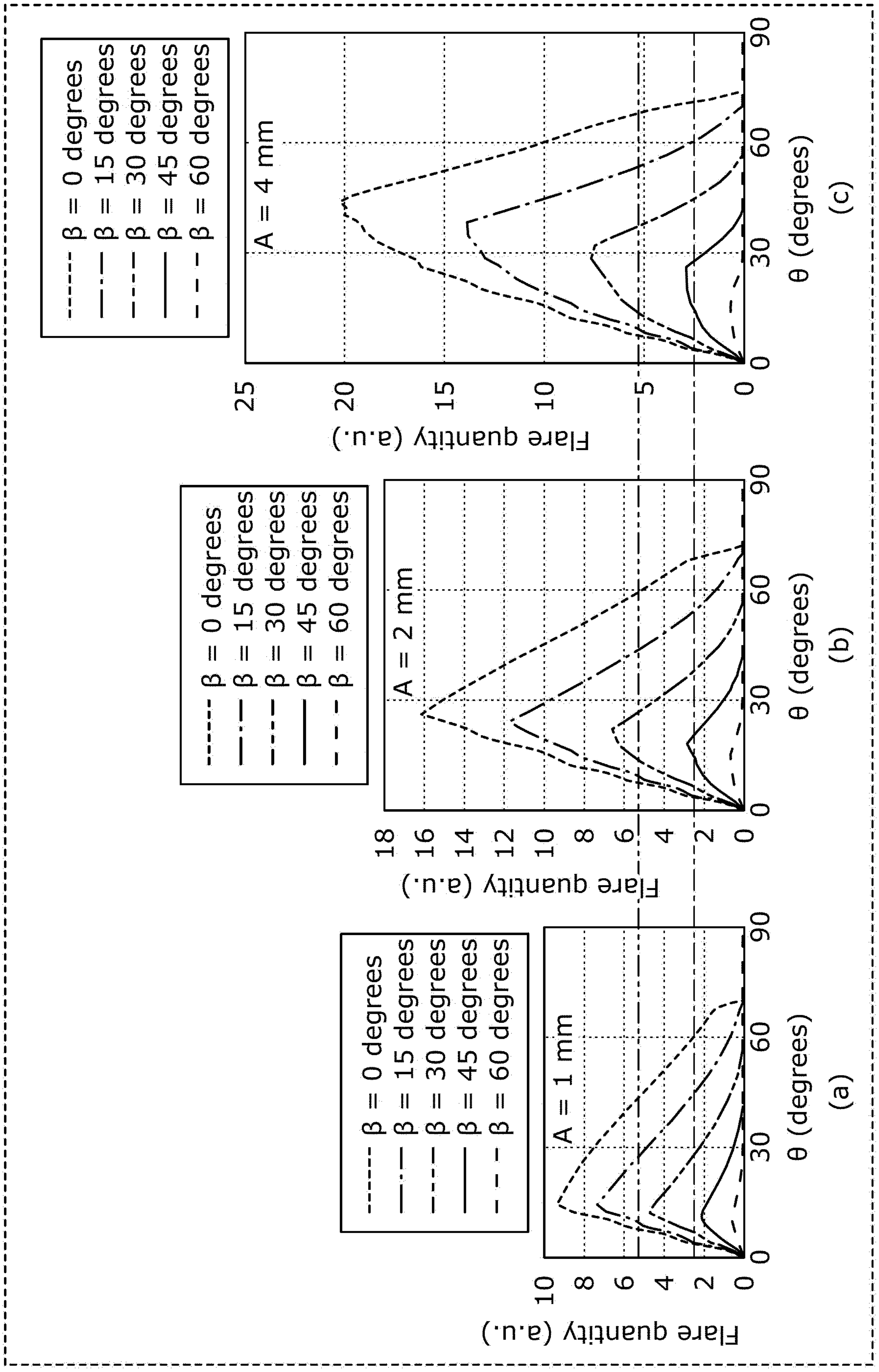
β = 0 degrees
β = 15 degrees
β = 30 degrees
β = 45 degrees
β = 60 degrees
A = 1 mm
A = 2 mm
A = 4 mm
Flare quantity (a.u.)
θ (degrees)
(a)
(b)
(c)

FIG. 14

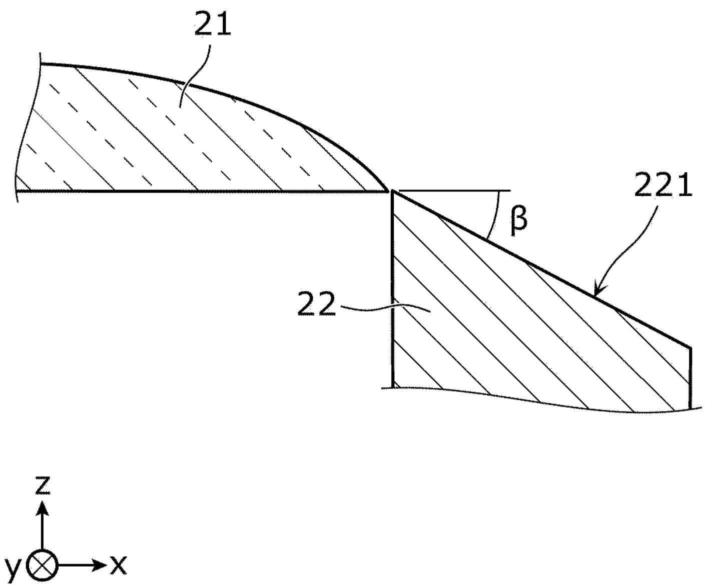
21
221
β
22
z
y
x

(a)

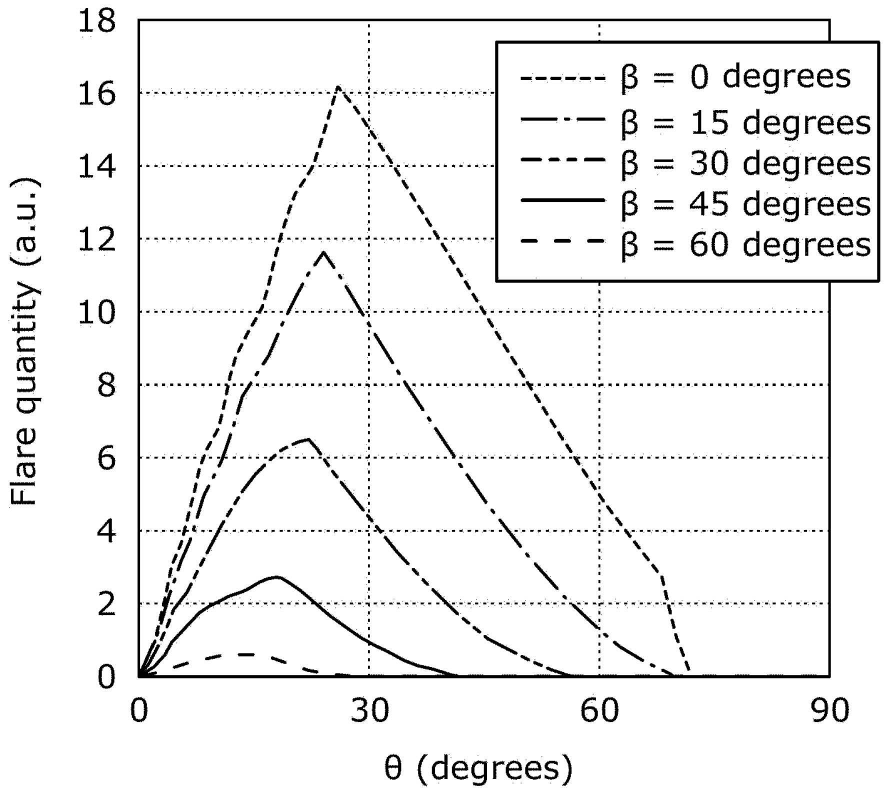
Flare quantity (a.u.)
θ (degrees)
β = 0 degrees
β = 15 degrees
β = 30 degrees
β = 45 degrees
β = 60 degrees
0
2
4
6
8
10
12
14
16
18
30
60
90

(b)

FIG. 15

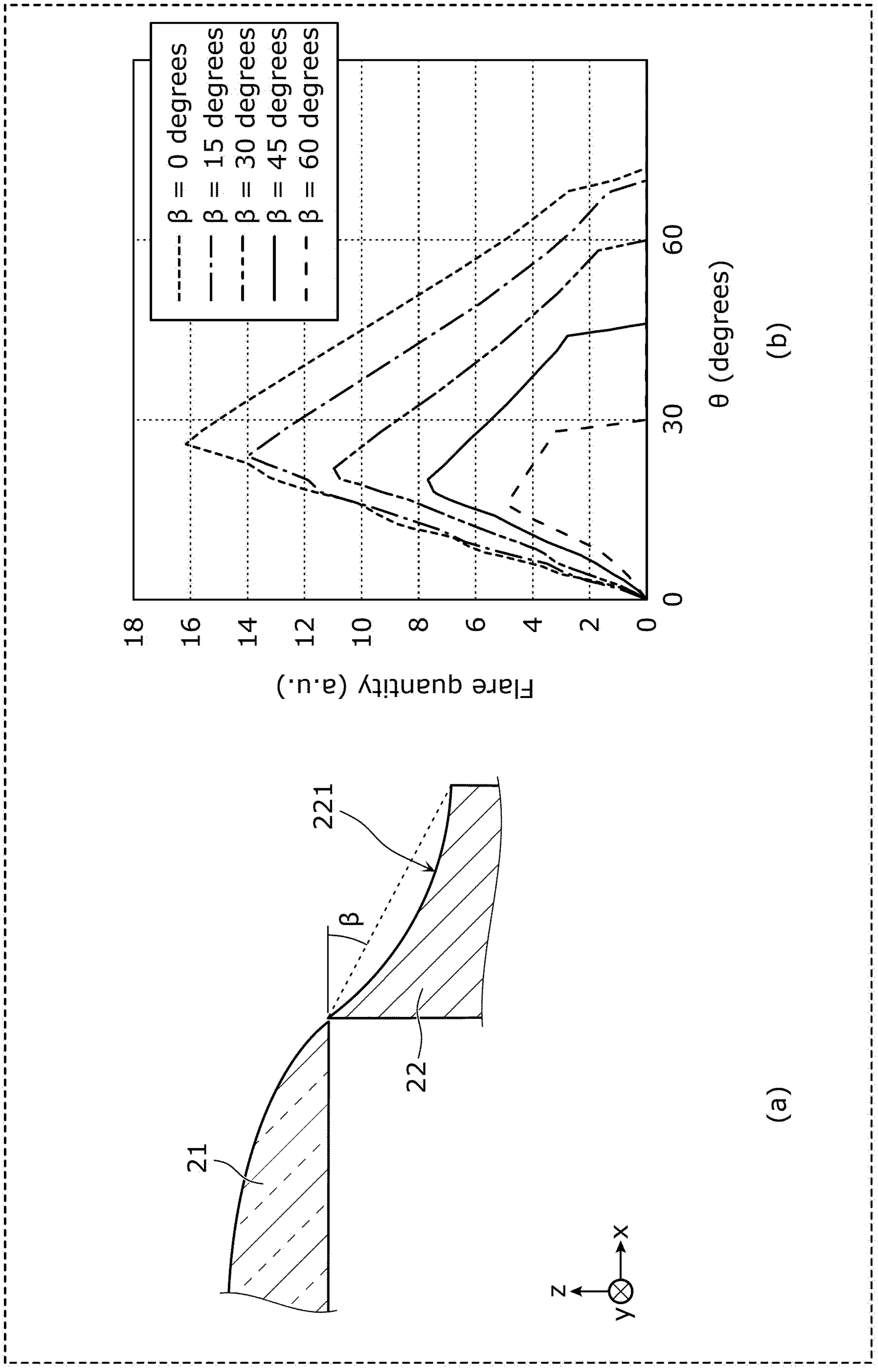
21
22
221
β
z
x
y
(a)
Flare quantity (a.u.)
18
16
14
12
10
8
6
4
2
0
0
30
60
θ (degrees)
β = 0 degrees
β = 15 degrees
β = 30 degrees
β = 45 degrees
β = 60 degrees
(b)

FIG. 16

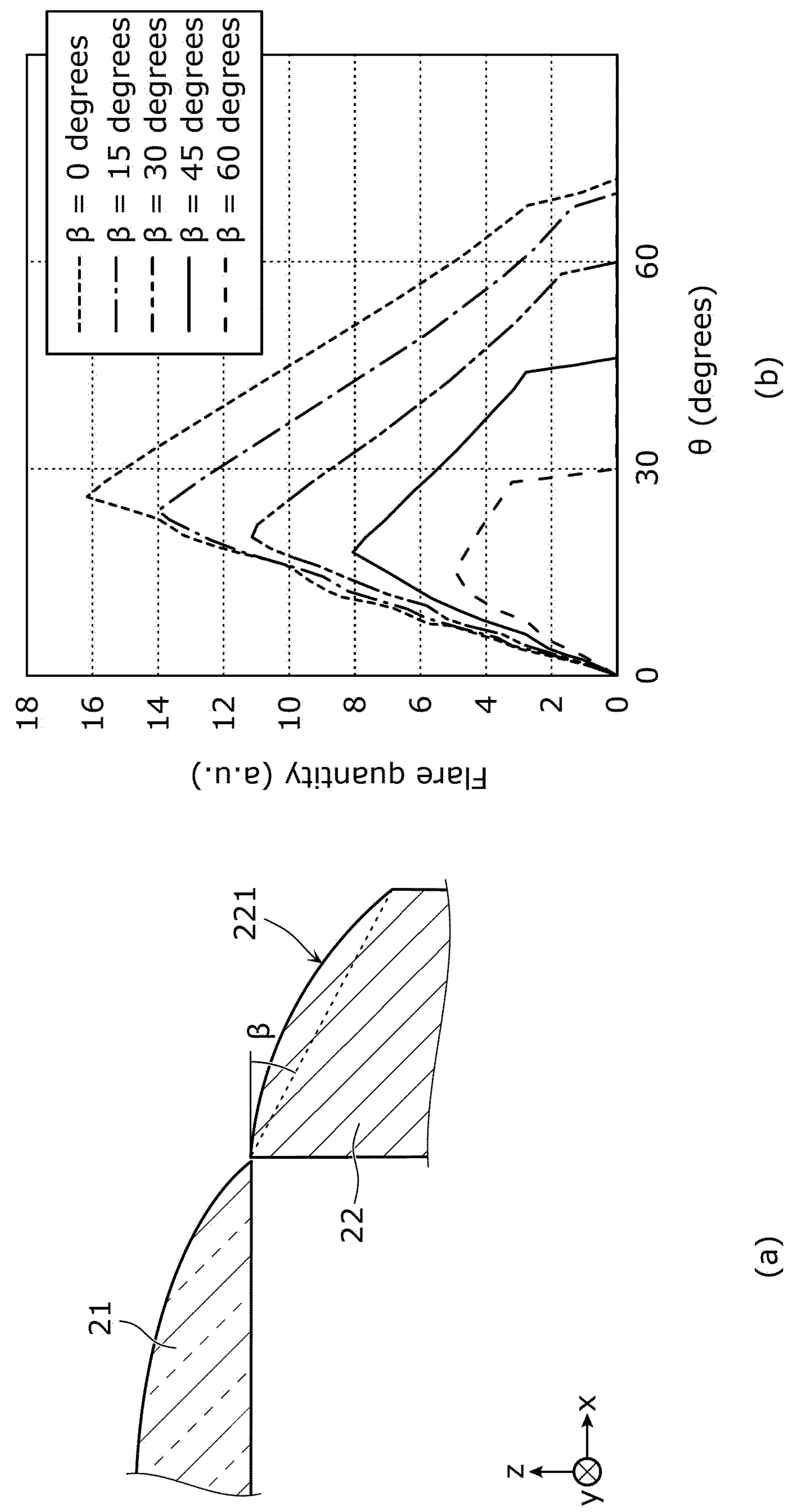
21
22
221
β
z
x
y
(a)
Flare quantity (a.u.)
18
16
14
12
10
8
6
4
2
0
0
30
60
θ (degrees)
β = 0 degrees
β = 15 degrees
β = 30 degrees
β = 45 degrees
β = 60 degrees
(b)

FIG. 17

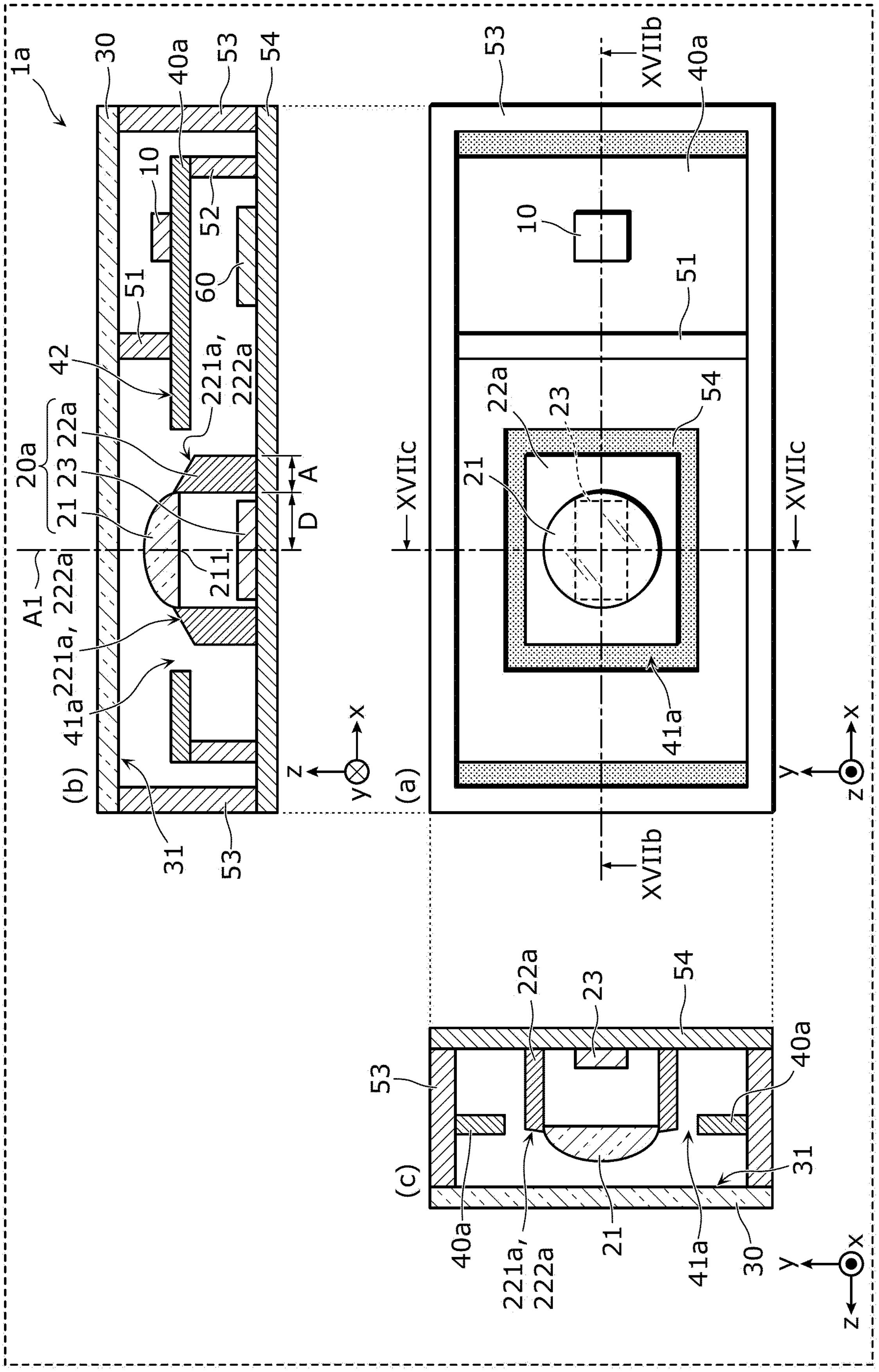
1a
(a)
(b)
(c)
10
20a
21
22a
23
30
31
40a
41a
42
51
52
53
54
60
211
221a, 222a
A1
A
D
XVIIb
XVIIc
x
y
z

FIG. 18

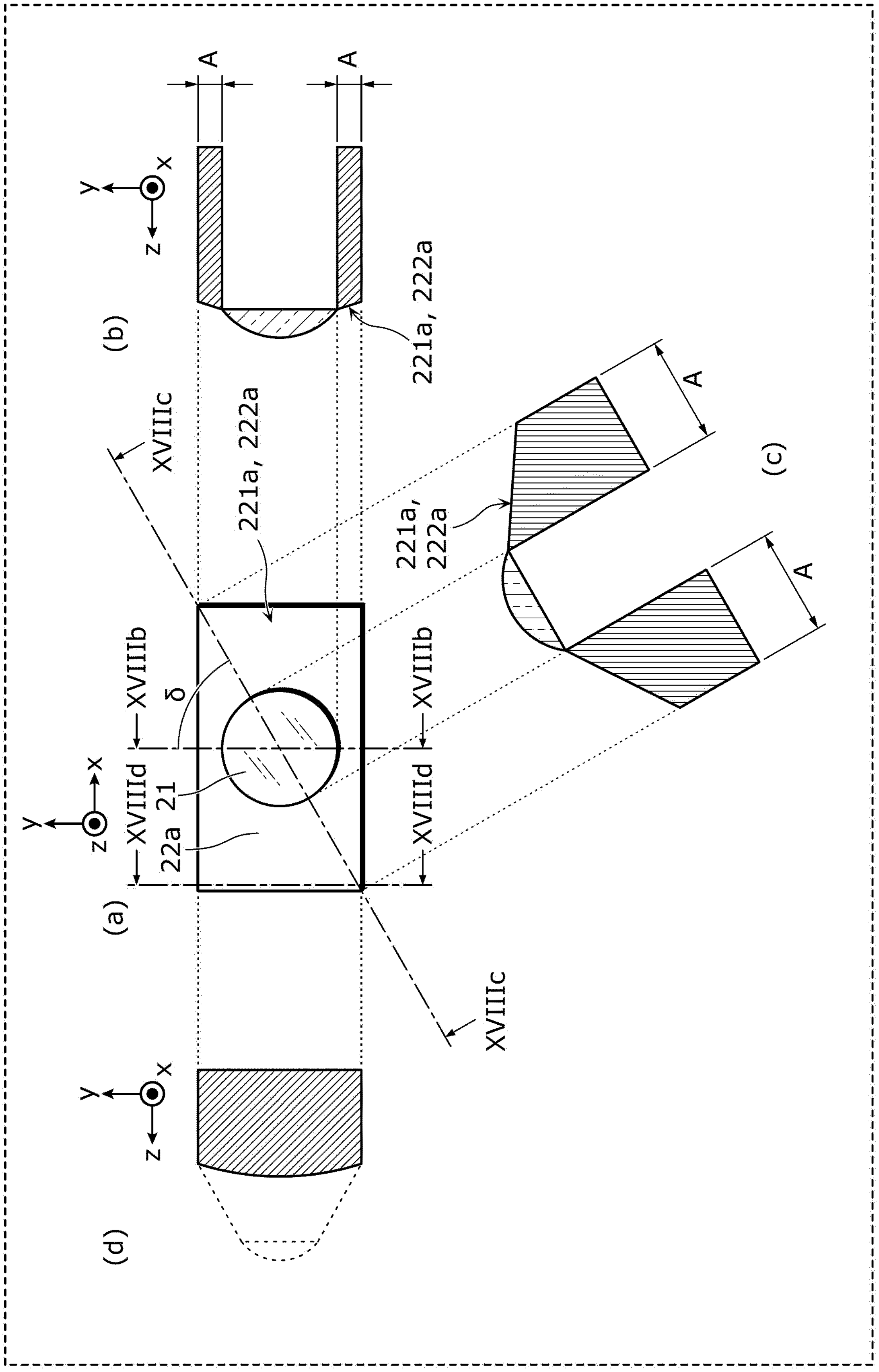

FIG. 19

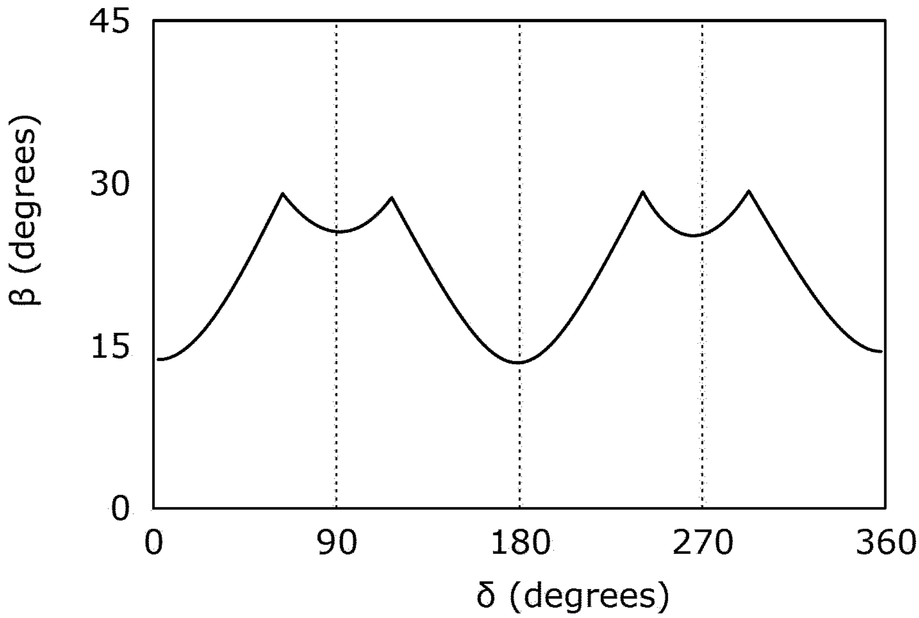

FIG. 20

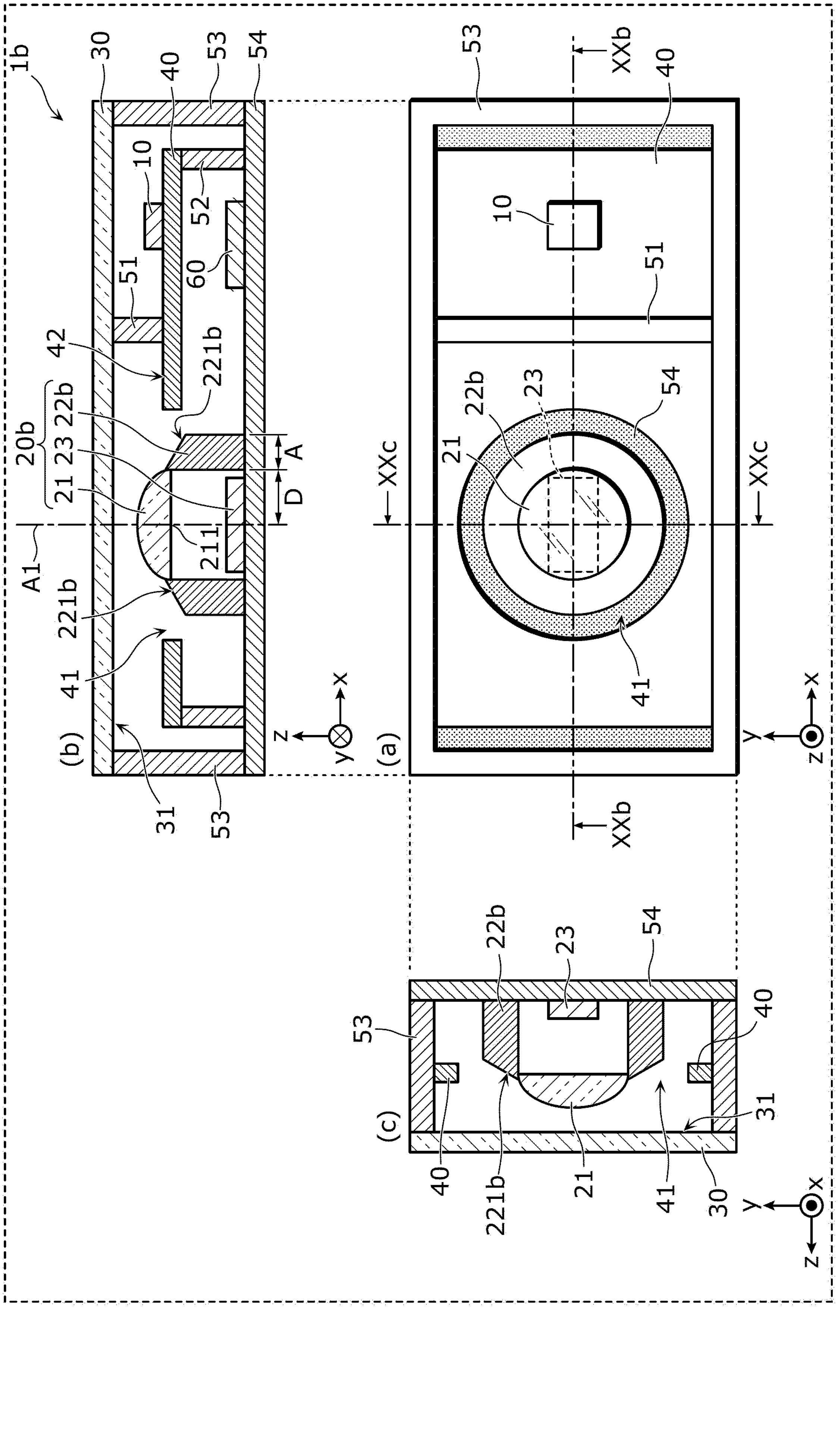
1b
30
53
54
40
10
52
51
60
42
221b
20b
21 23 22b
A
D
211
A1
41
(b)
31
z
x
y
(a)
XXb
XXc
22b
23
54
21
(c)

FIG. 21

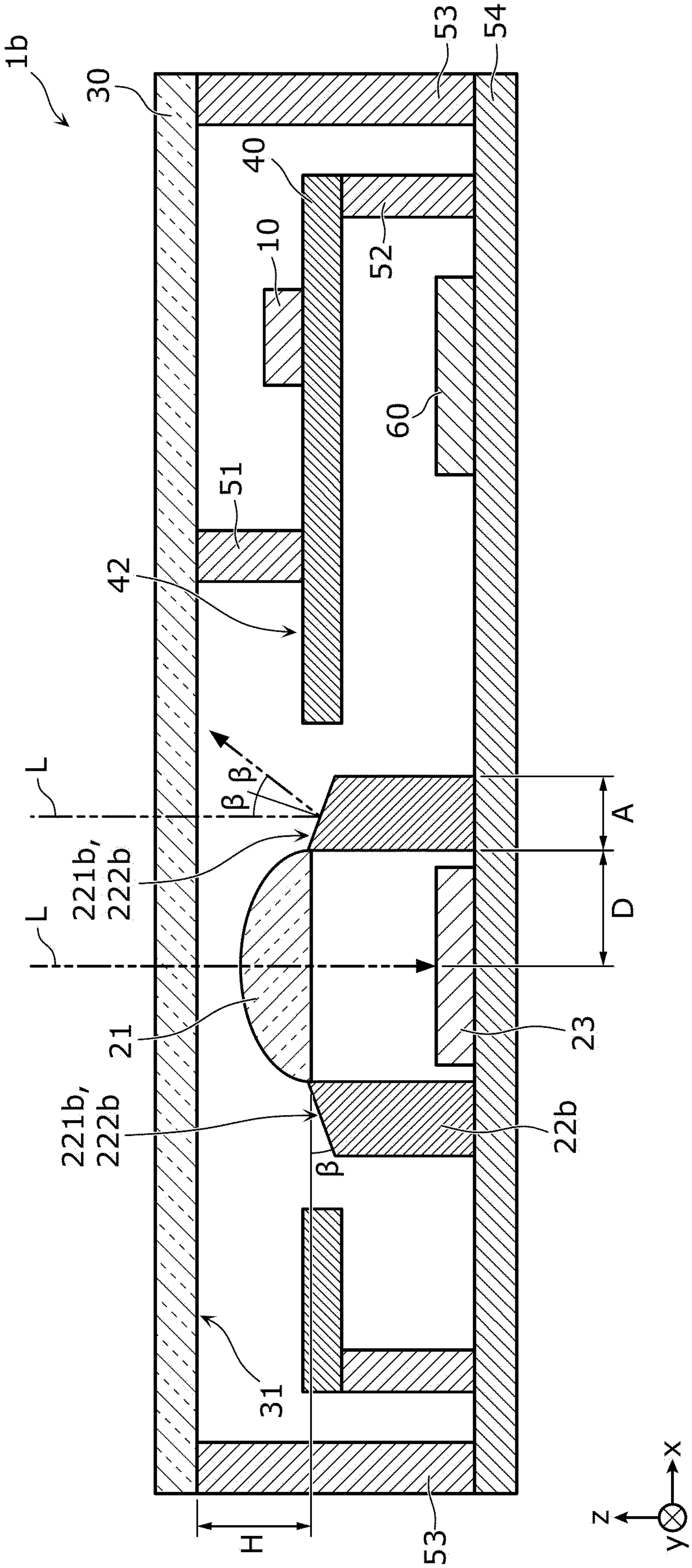

FIG. 22

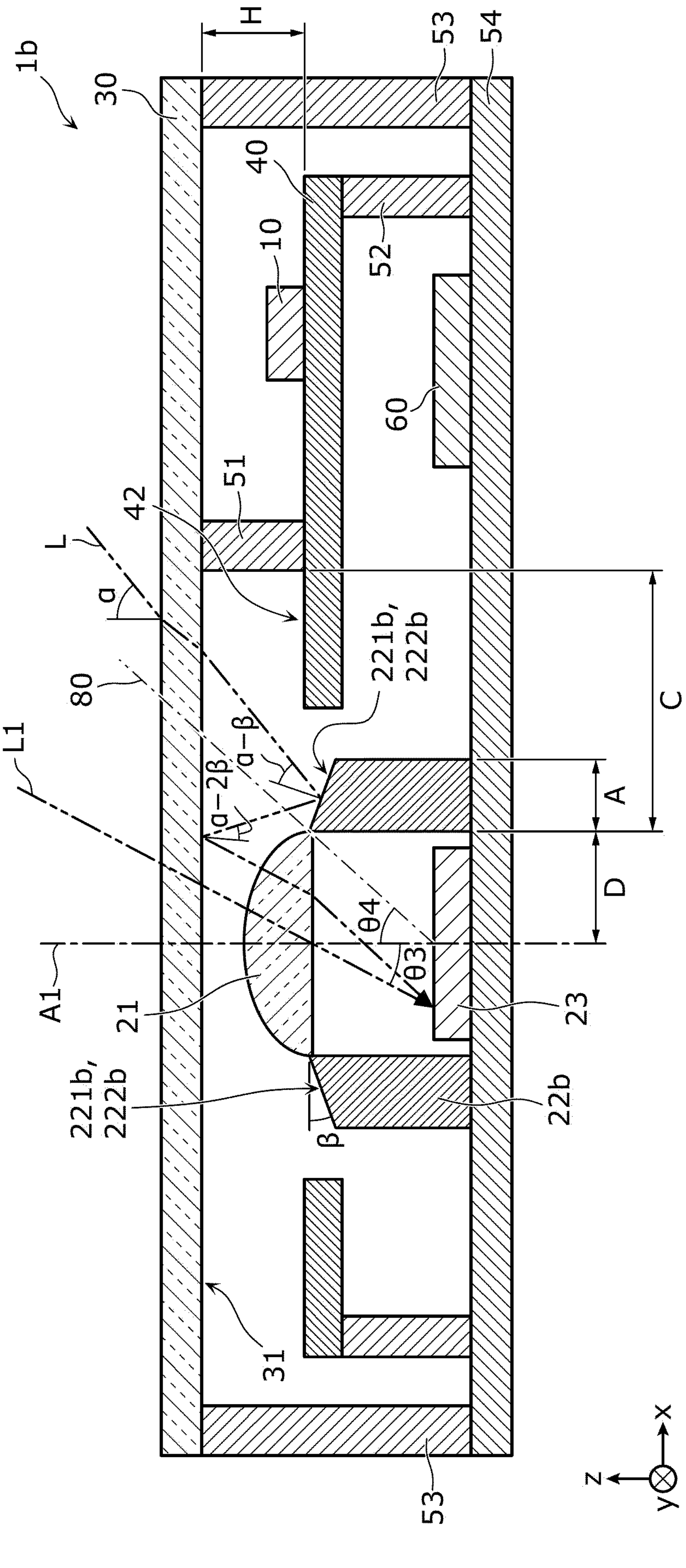

1b
30
H
53
54
40
10
52
60
51
42
L
α
80
L1
221b,
222b
C
α−β
α−2β
A
D
θ4
θ3
A1
21
23
22b
β
31
z
x
y

FIG. 23

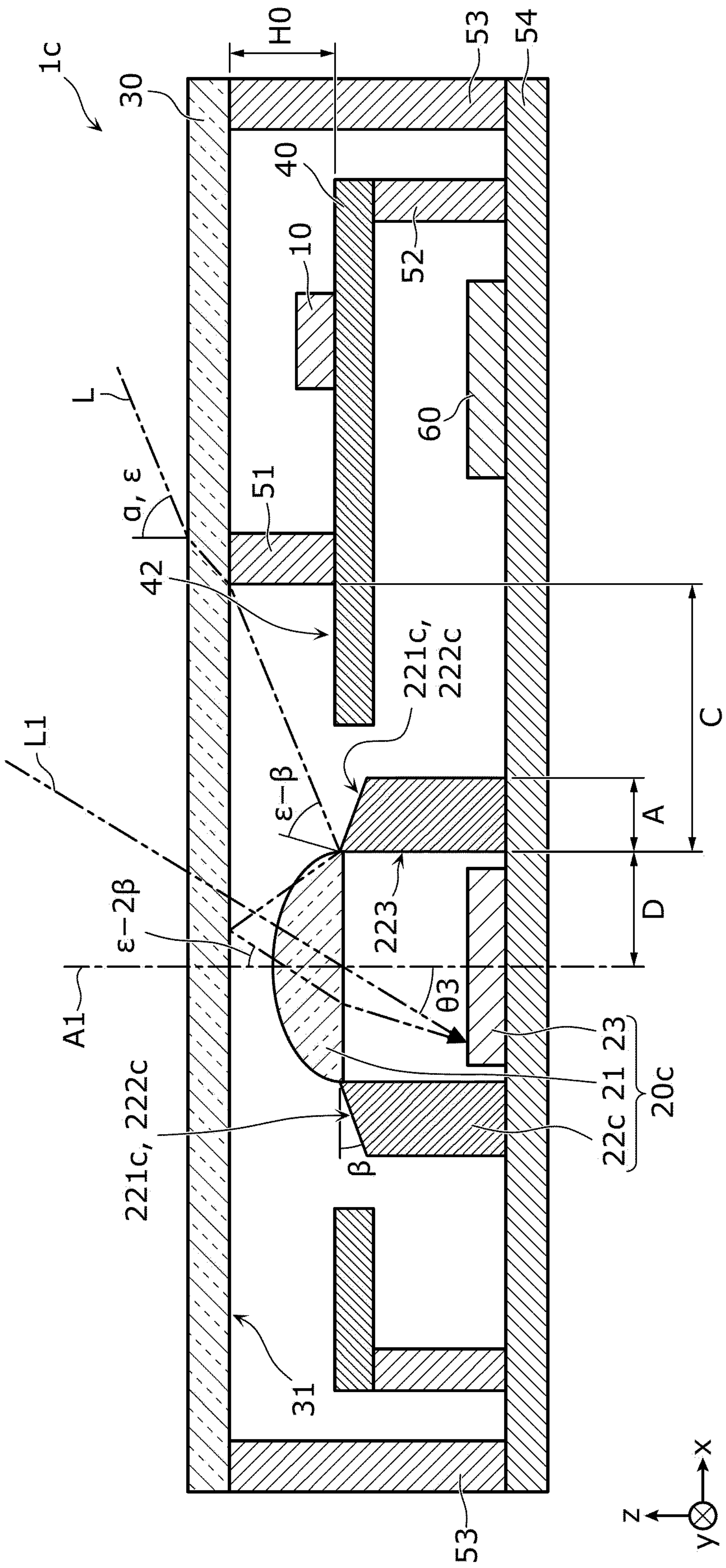
1c
30
H0
53
54
40
10
52
L
60
α, ε
51
42
221c,
222c
C
L1
ε−β
A
223
D
ε−2β
A1
θ3
23
21
20c
221c, 222c
β
22c
31
53
z
y
x

FIG. 24

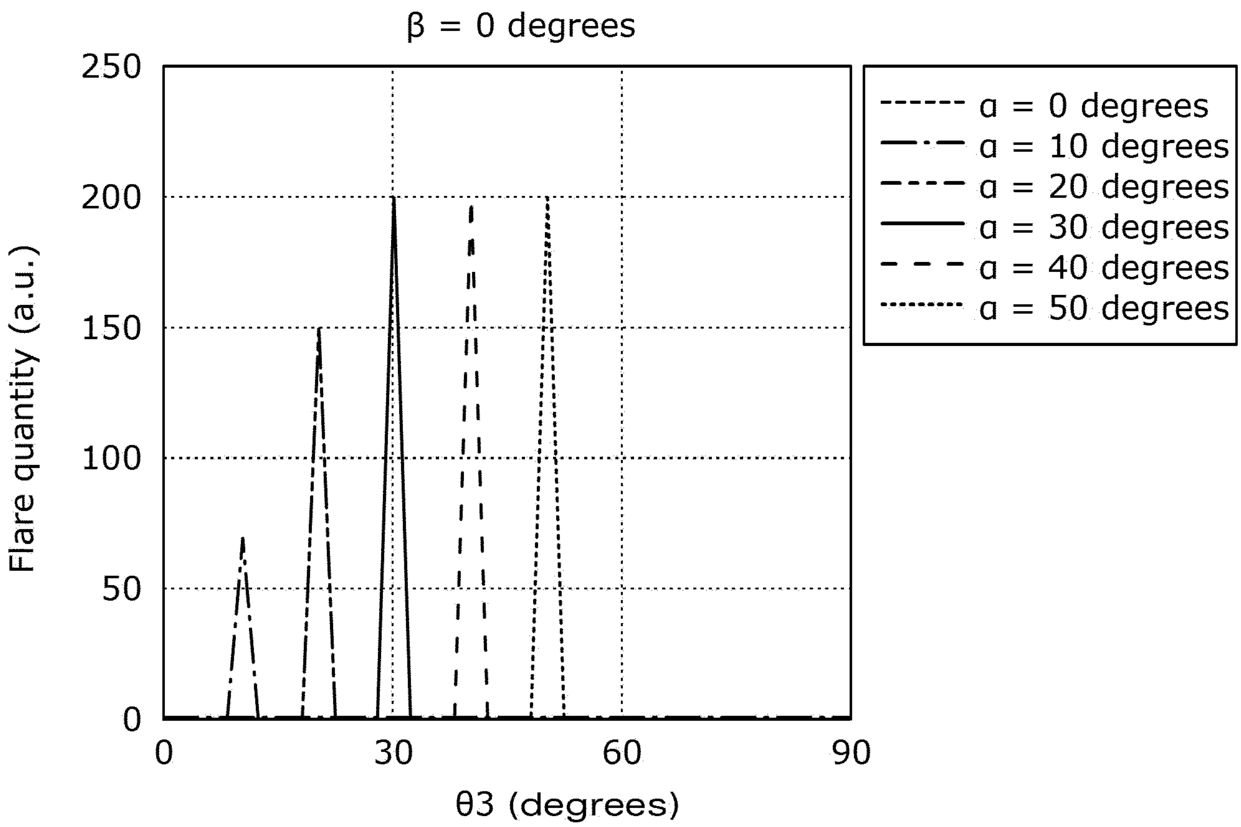
β = 0 degrees
250
200
150
100
50
0
Flare quantity (a.u.)
0
30
60
90
θ3 (degrees)
α = 0 degrees
α = 10 degrees
α = 20 degrees
α = 30 degrees
α = 40 degrees
α = 50 degrees

FIG. 25

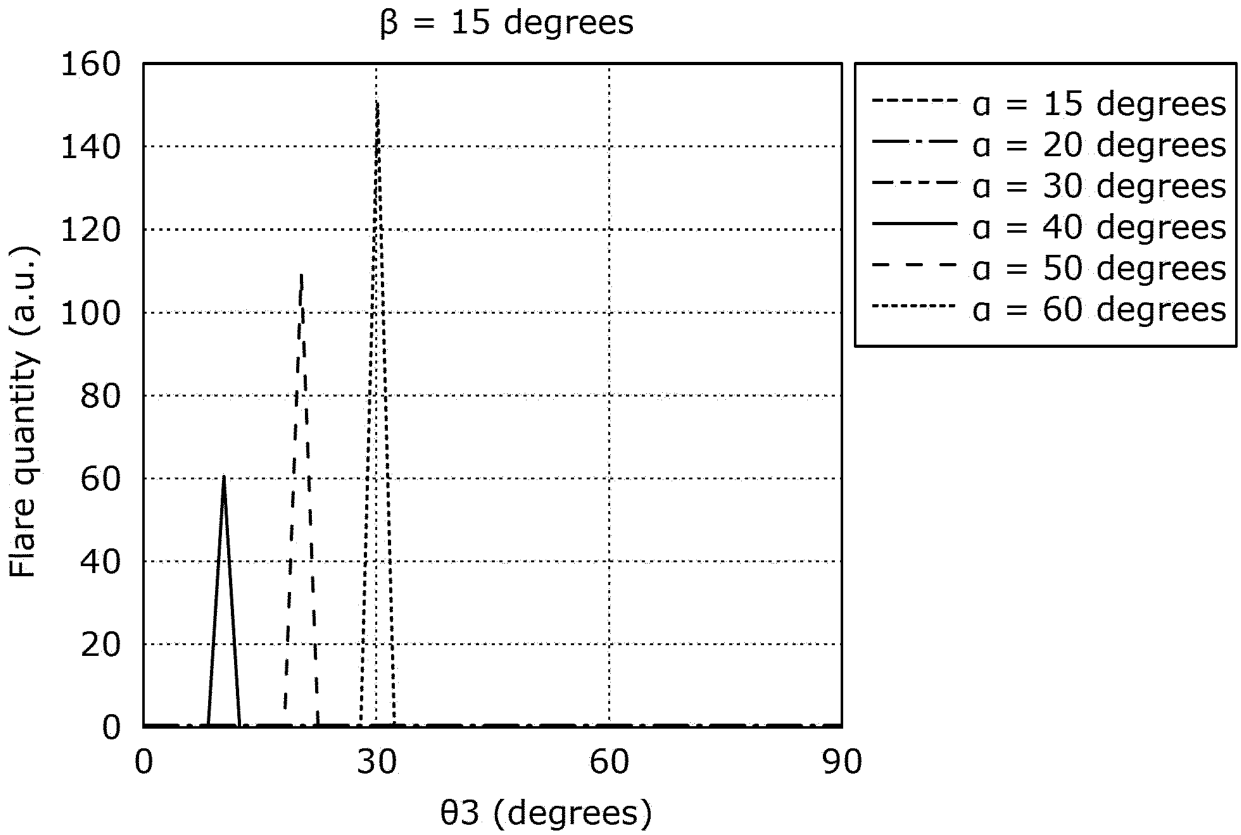
β = 15 degrees
160
140
120
100
80
60
40
20
0
Flare quantity (a.u.)
0
30
60
90
θ3 (degrees)
α = 15 degrees
α = 20 degrees
α = 30 degrees
α = 40 degrees
α = 50 degrees
α = 60 degrees

FIG. 26

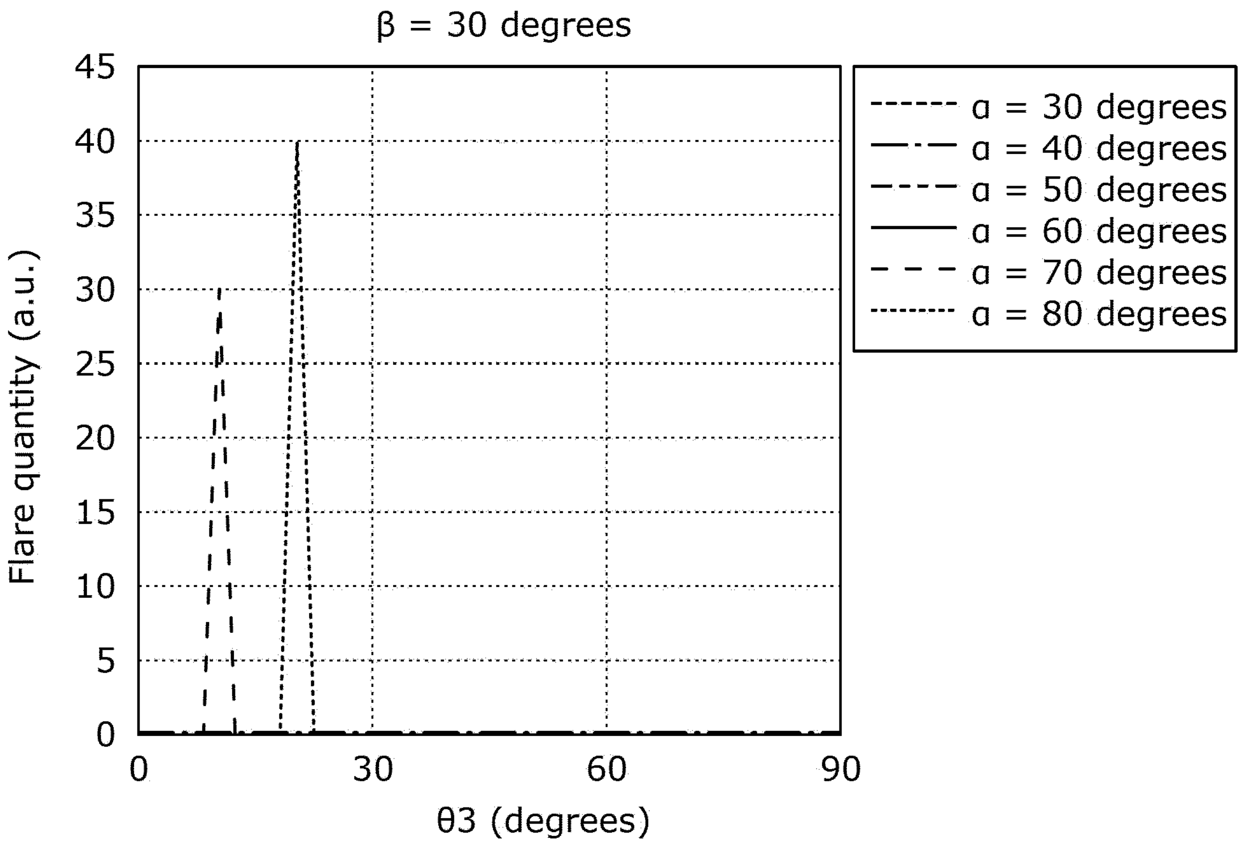
β = 30 degrees
45
40
35
30
25
20
15
10
5
0
Flare quantity (a.u.)
0
30
60
90
θ3 (degrees)
α = 30 degrees
α = 40 degrees
α = 50 degrees
α = 60 degrees
α = 70 degrees
α = 80 degrees

FIG. 27

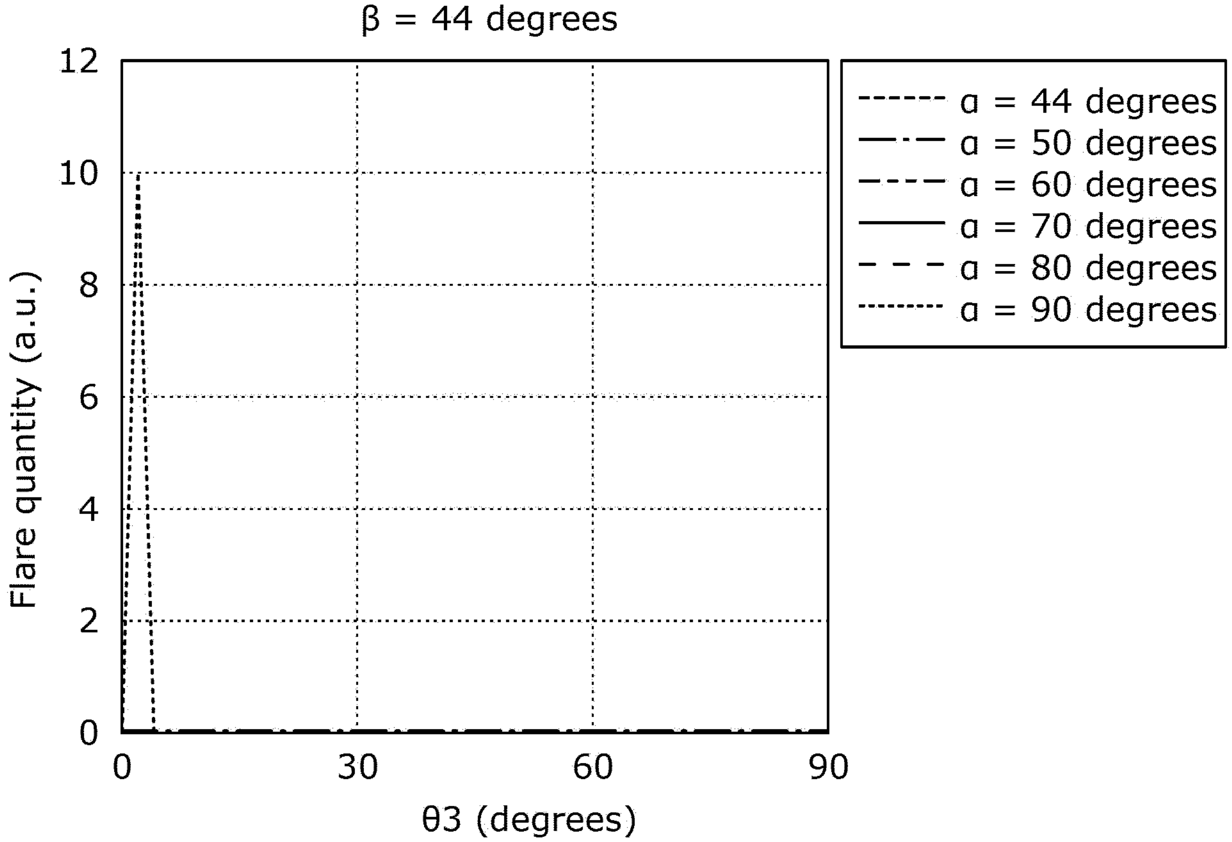
β = 44 degrees
12
10
8
6
4
2
0
0
30
60
90
Flare quantity (a.u.)
θ3 (degrees)
α = 44 degrees
α = 50 degrees
α = 60 degrees
α = 70 degrees
α = 80 degrees
α = 90 degrees

FIG. 28

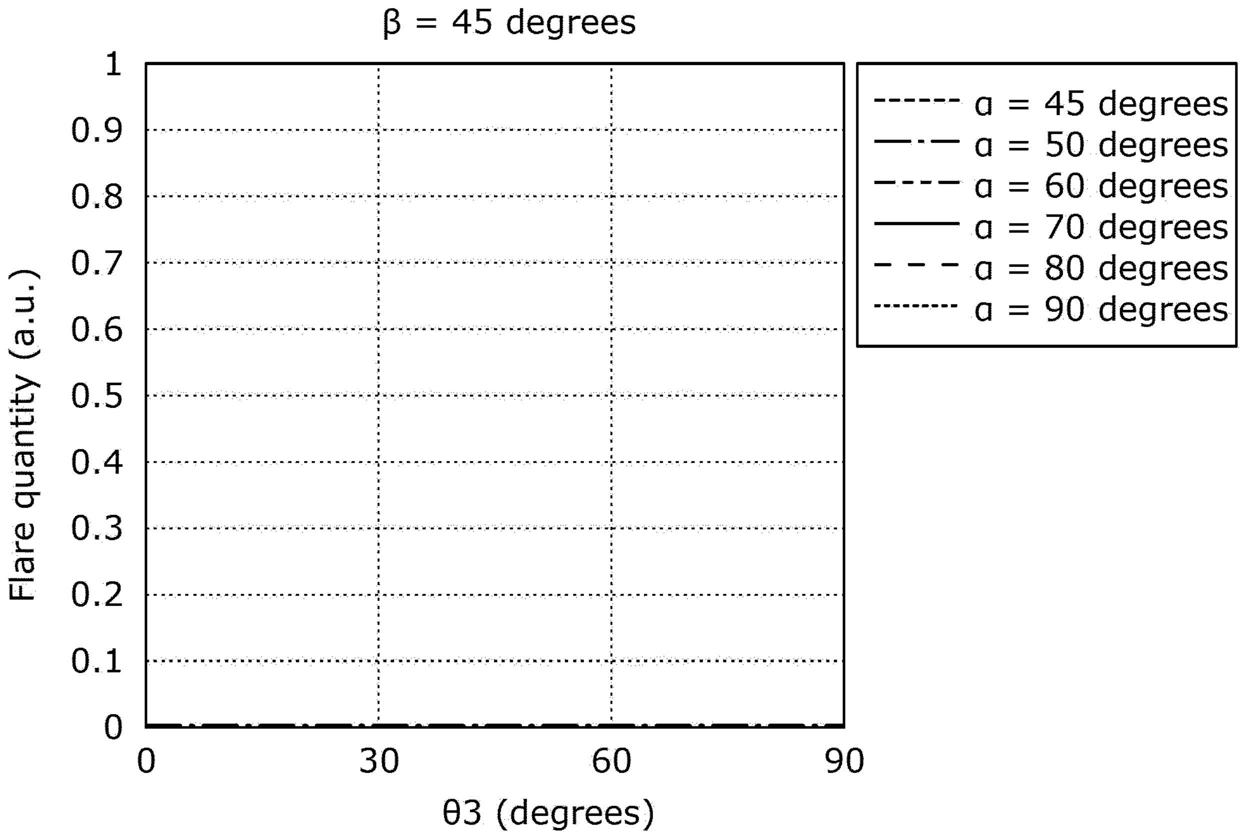
β = 45 degrees
1
0.9
0.8
0.7
0.6
0.5
0.4
0.3
0.2
0.1
0
Flare quantity (a.u.)
0
30
60
90
θ3 (degrees)
α = 45 degrees
α = 50 degrees
α = 60 degrees
α = 70 degrees
α = 80 degrees
α = 90 degrees

FIG. 29

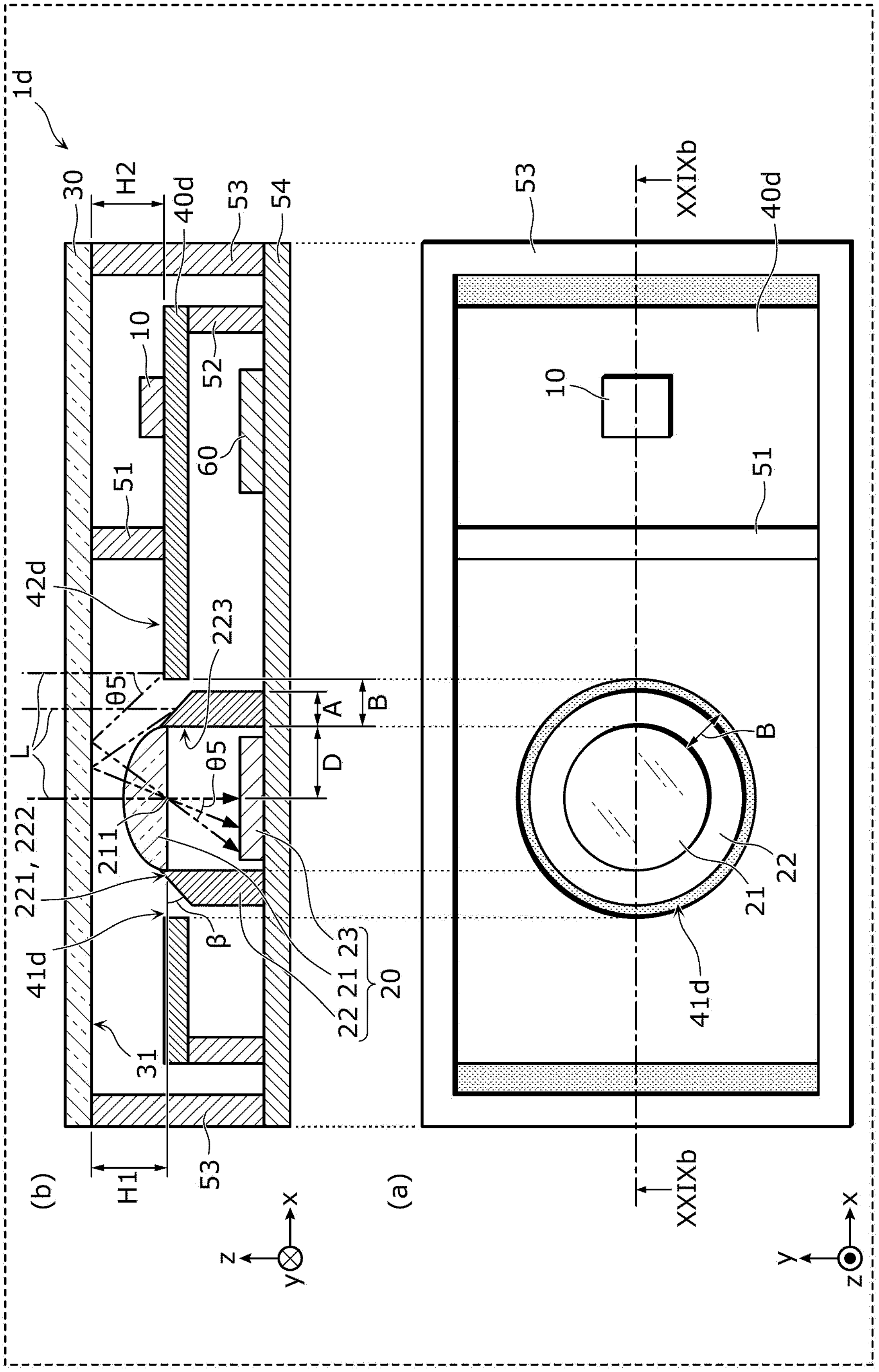
1d
30
H2
40d
53
54
10
52
51
60
42d
223
θ5
A
B
L
D
221, 222
211
41d
β
31
22 21 23
20
H1
(b)
(a)
XXIXb
21
22
41d
z
y
x

FIG. 30

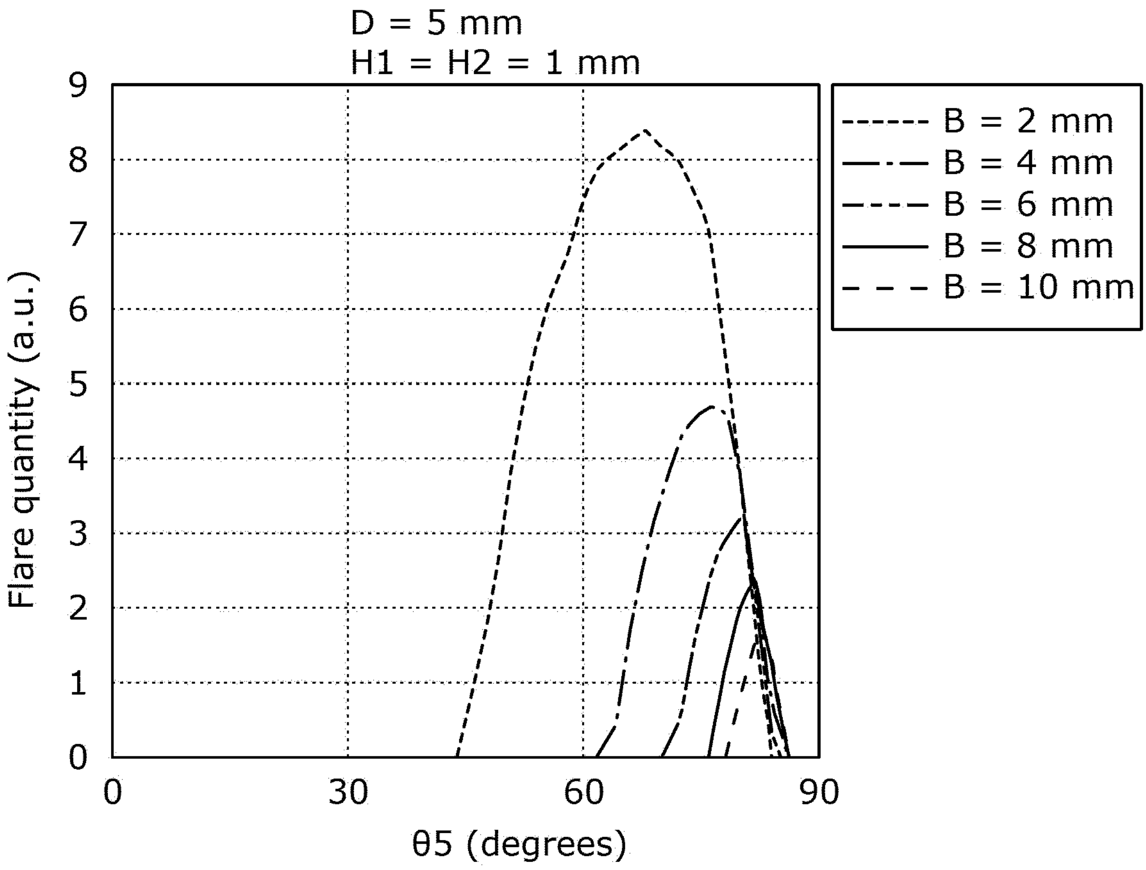
D = 5 mm
H1 = H2 = 1 mm
9
8
7
6
5
4
3
2
1
0
Flare quantity (a.u.)
0
30
60
90
θ5 (degrees)
B = 2 mm
B = 4 mm
B = 6 mm
B = 8 mm
B = 10 mm

FIG. 31

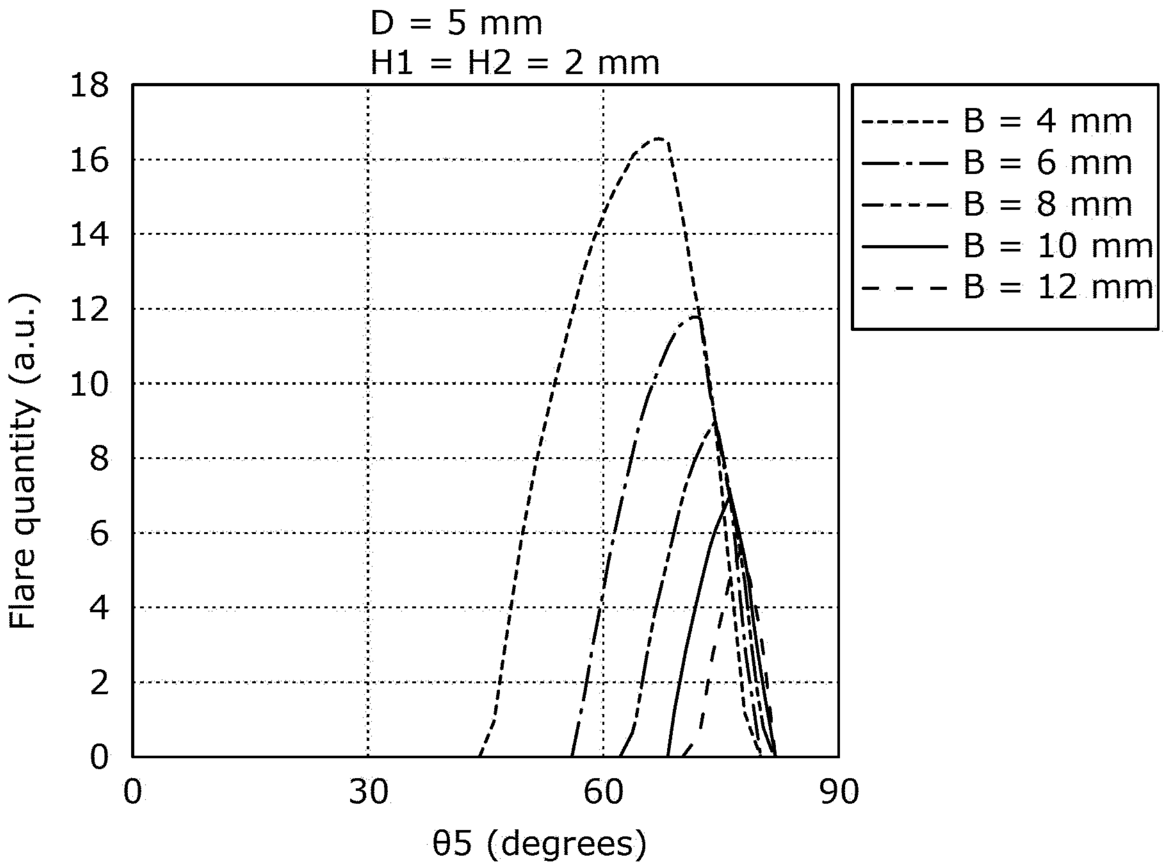
D = 5 mm
H1 = H2 = 2 mm
Flare quantity (a.u.)
0
2
4
6
8
10
12
14
16
18
0
30
60
90
θ5 (degrees)
B = 4 mm
B = 6 mm
B = 8 mm
B = 10 mm
B = 12 mm

FIG. 32

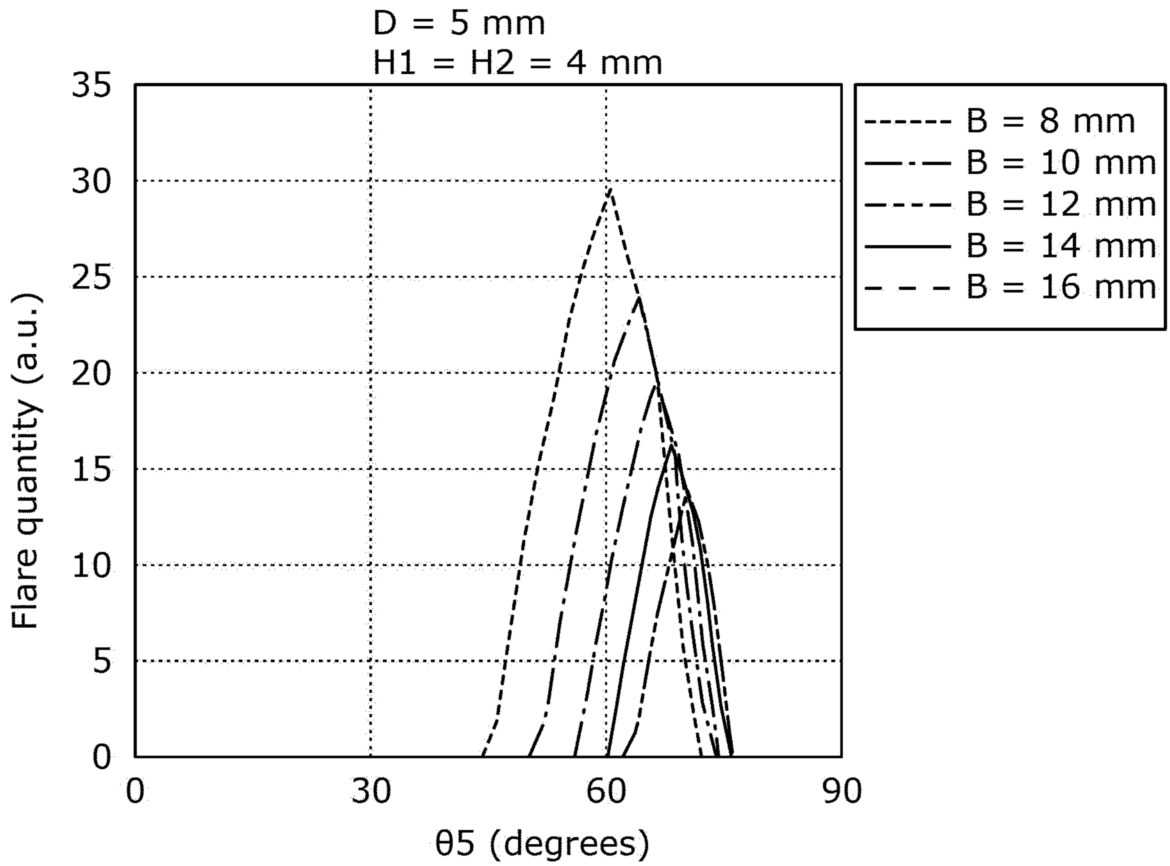
D = 5 mm
H1 = H2 = 4 mm
35
30
25
20
15
10
5
0
Flare quantity (a.u.)
0
30
60
90
θ5 (degrees)
B = 8 mm
B = 10 mm
B = 12 mm
B = 14 mm
B = 16 mm

FIG. 33

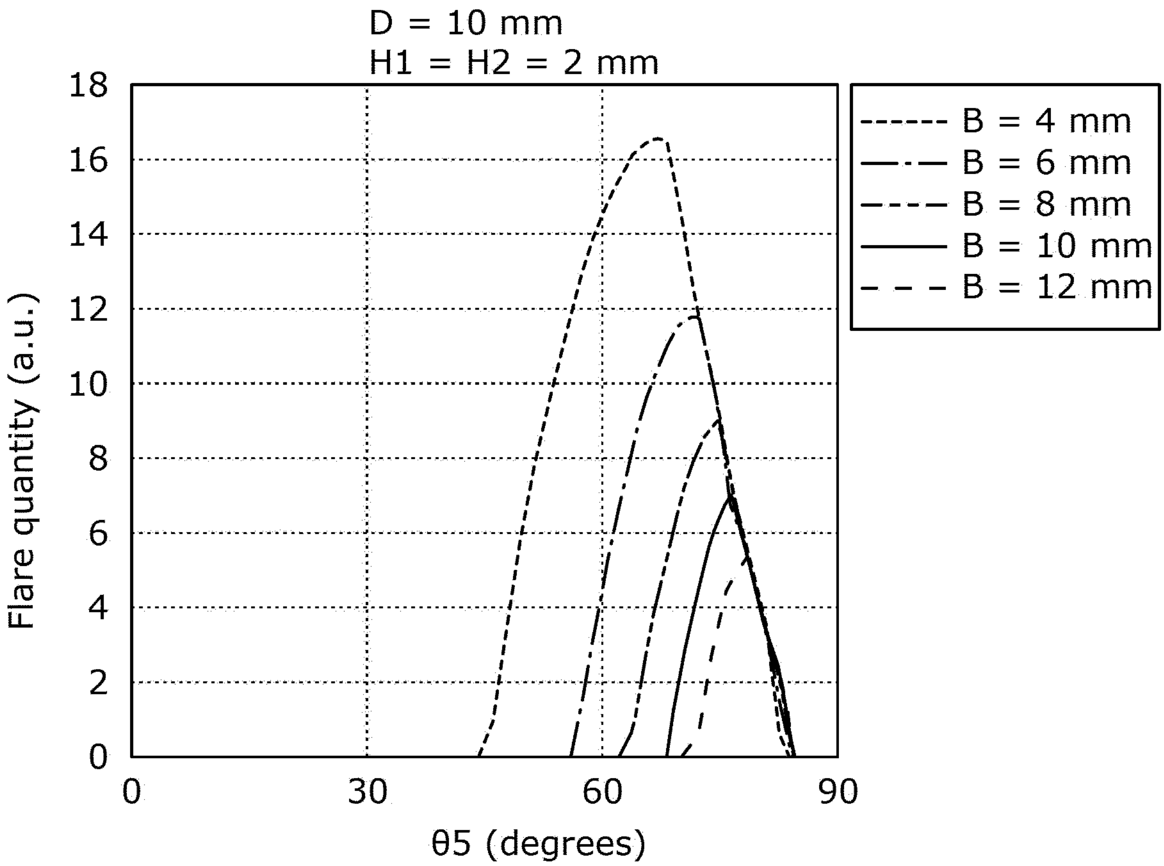
D = 10 mm
H1 = H2 = 2 mm
18
16
14
12
10
8
6
4
2
0
0
30
60
90
Flare quantity (a.u.)
θ5 (degrees)
B = 4 mm
B = 6 mm
B = 8 mm
B = 10 mm
B = 12 mm

FIG. 34

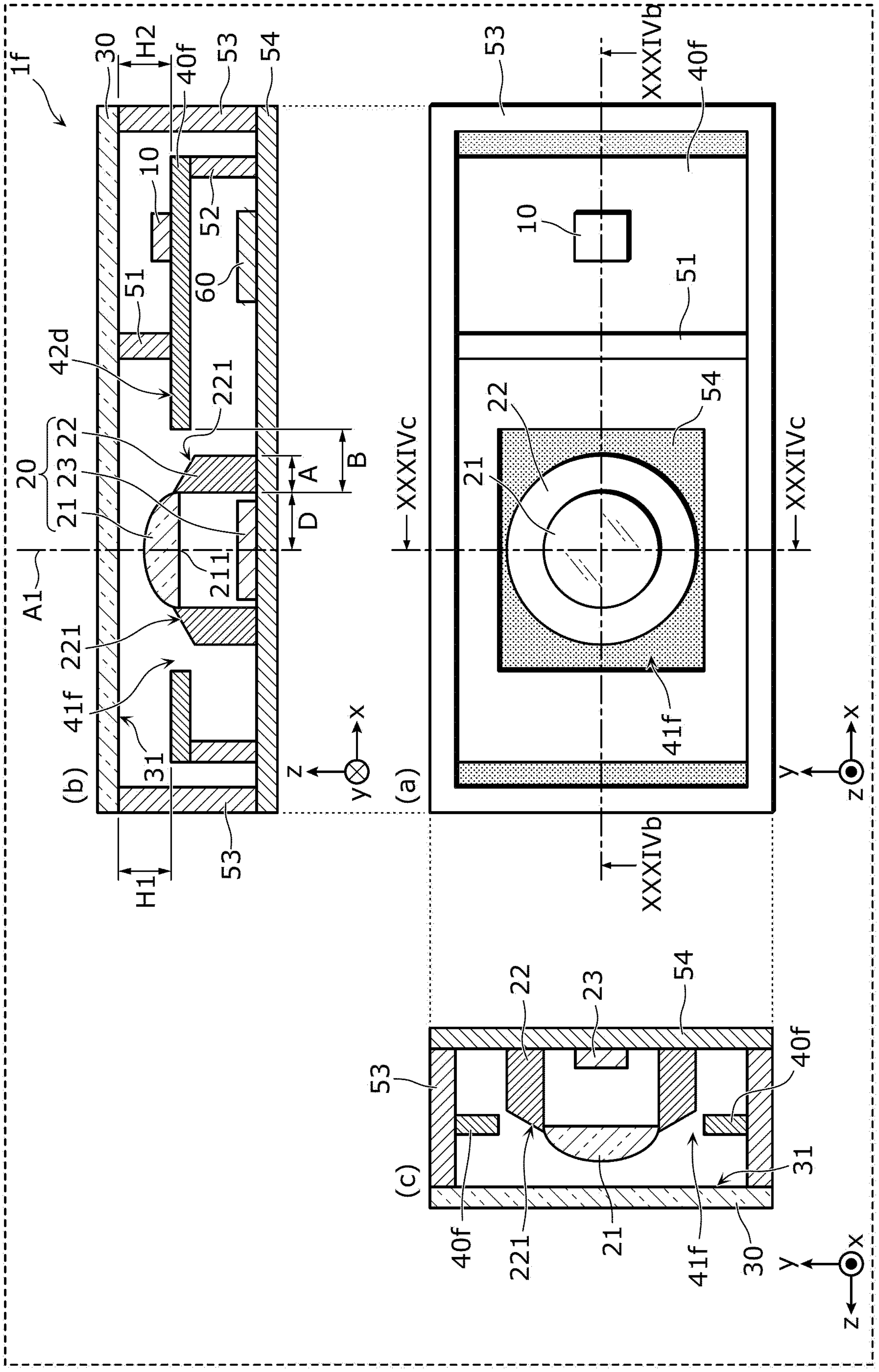
1f
(a)
(b)
(c)
XXXIVb
XXXIVc
10
20
21
22
23
30
31
40f
41f
42d
51
52
53
54
60
211
221
A1
A
B
D
H1
H2
x
y
z

FIG. 35

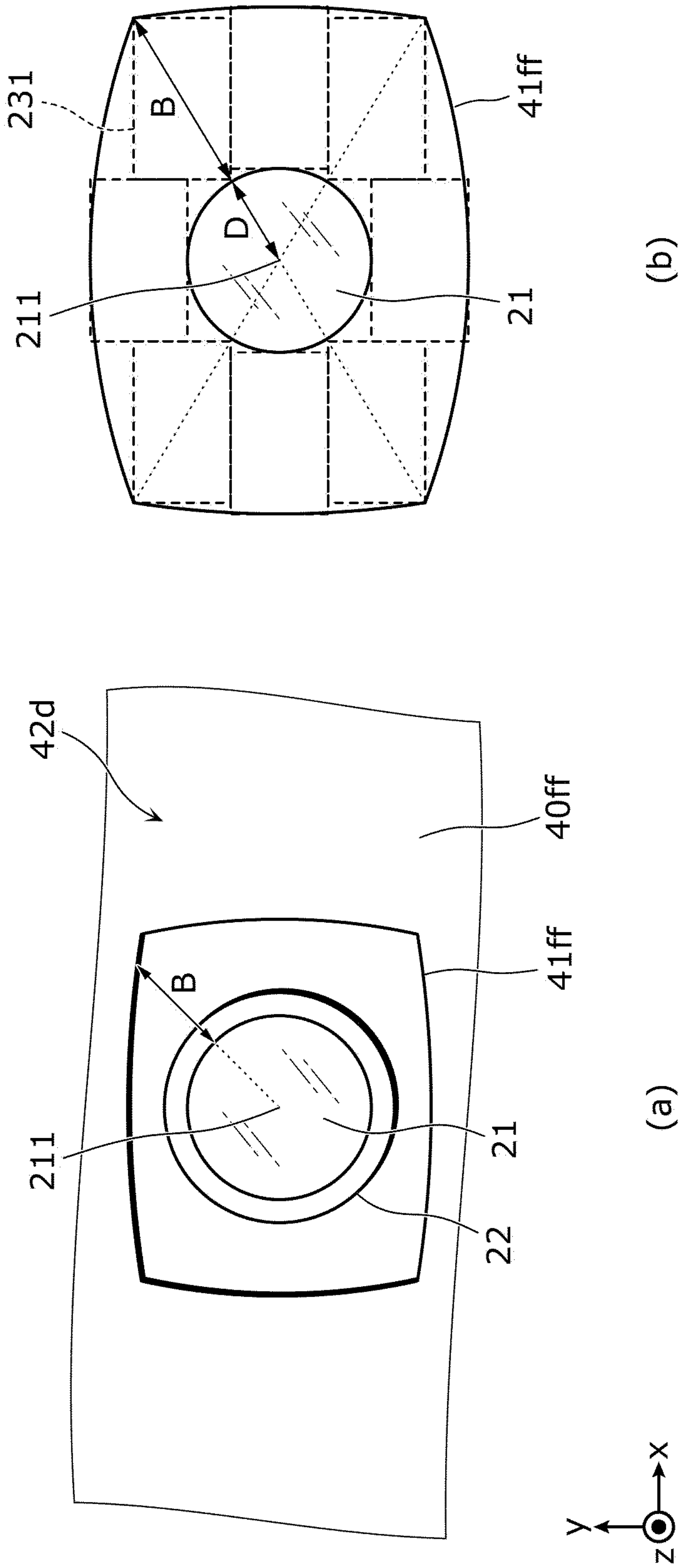

FIG. 36

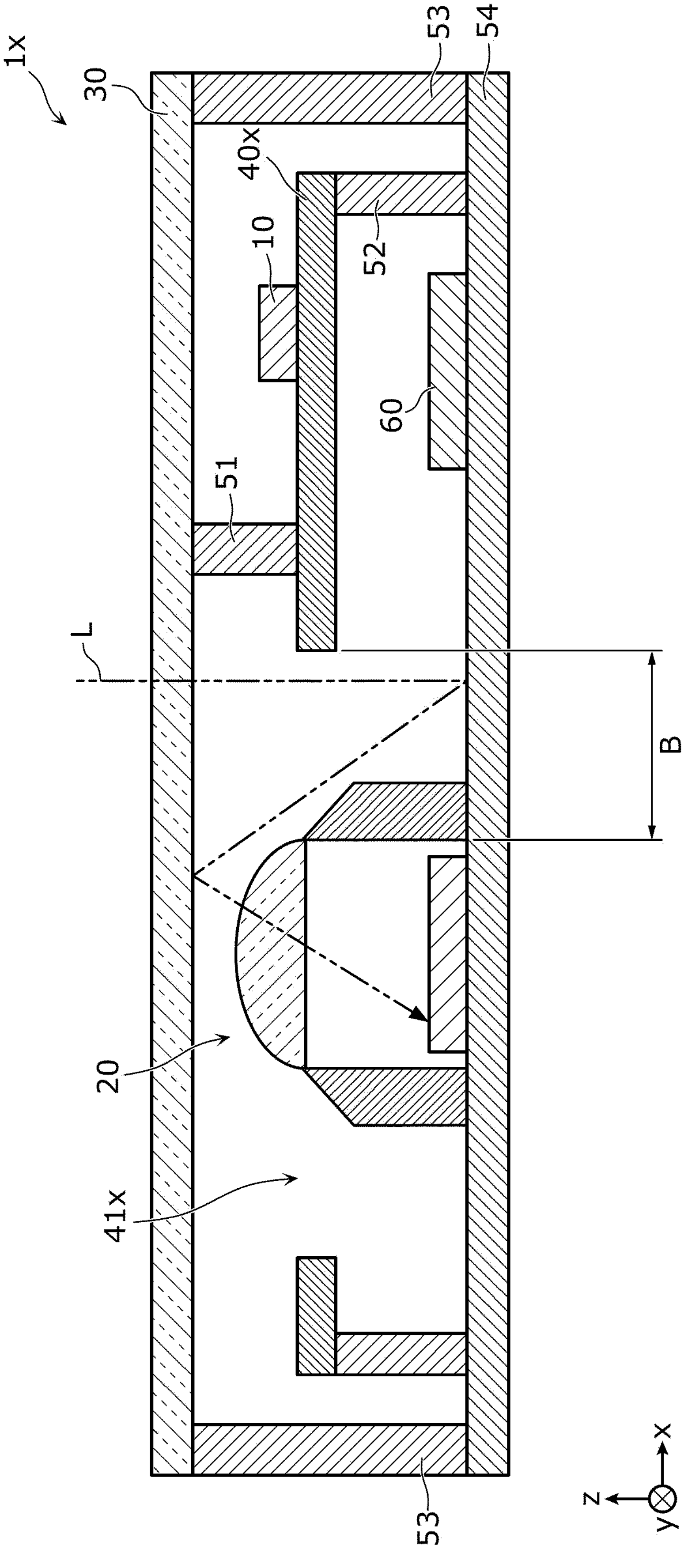

FIG. 37

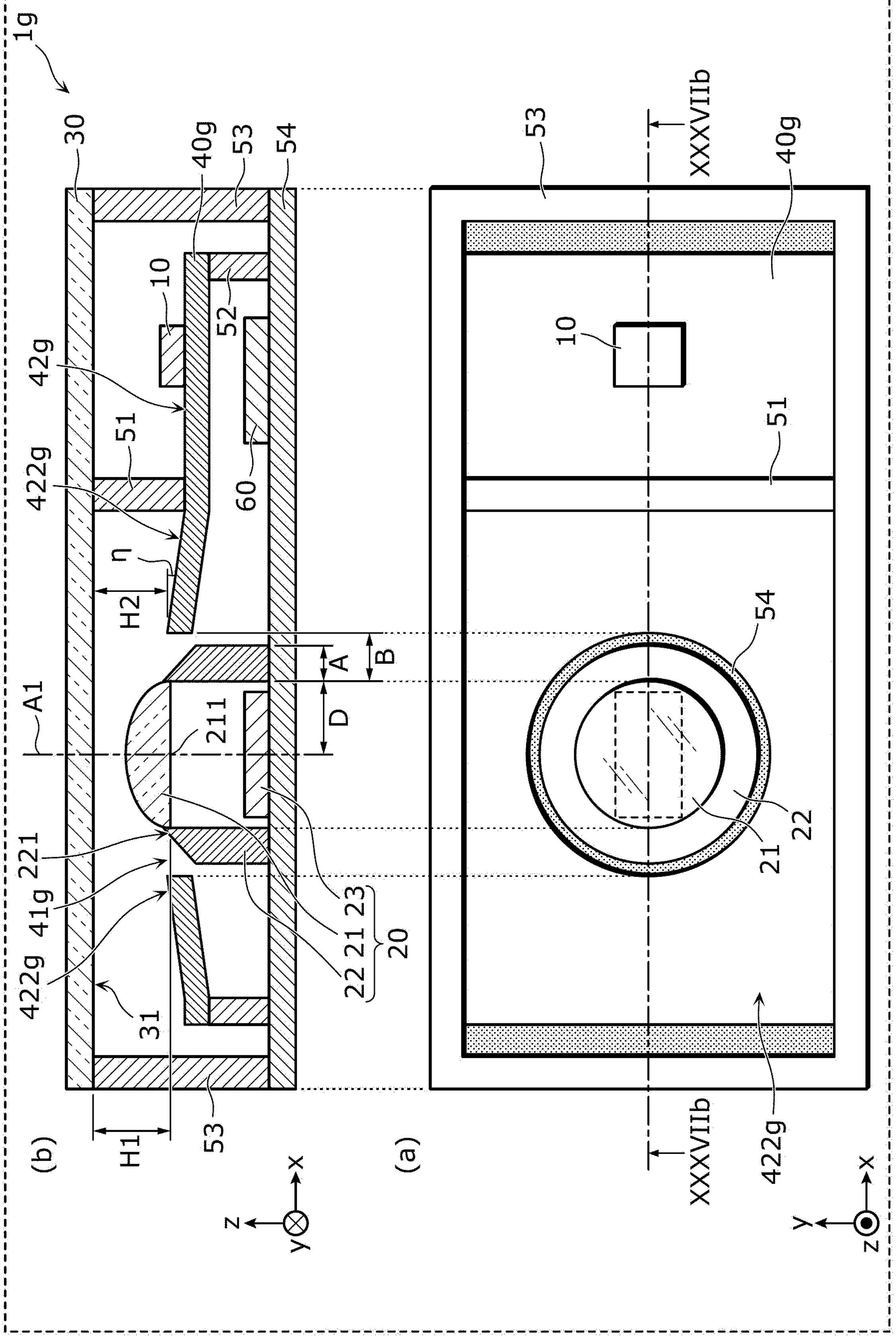
1g
(b)
(a)
30
31
40g
41g
42g
422g
51
52
53
54
60
10
20
21
22
23
211
221
A1
H1
H2
η
A
B
D
XXXVIIb
x
y
z

FIG. 38

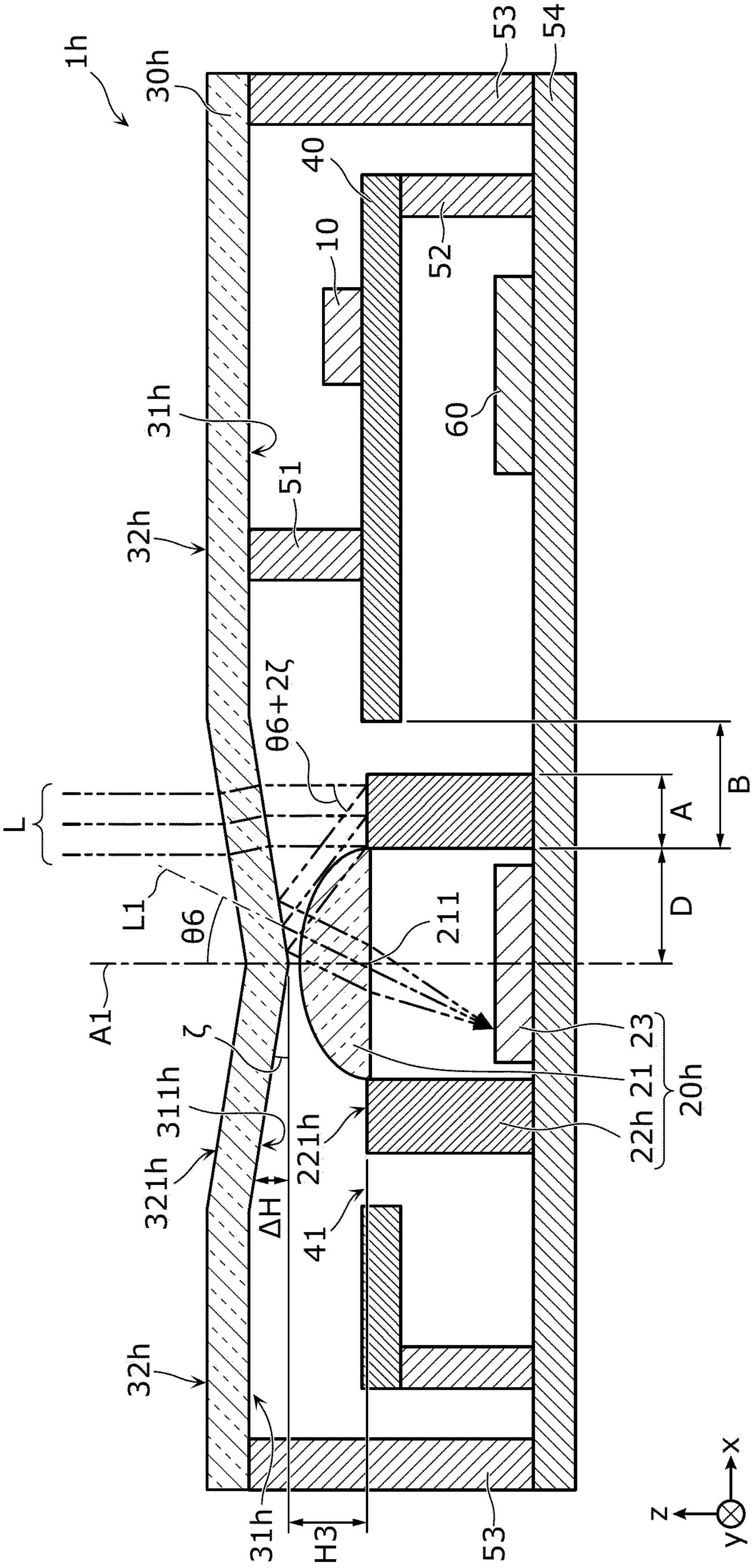
1h
30h
53
54
40
10
52
60
31h
51
32h
θ6+2ζ
L
L1
θ6
A1
ζ
311h
321h
221h
ΔH
41
211
A
B
D
23
21
20h
22h
32h
31h
H3
53
z
x
y

FIG. 39

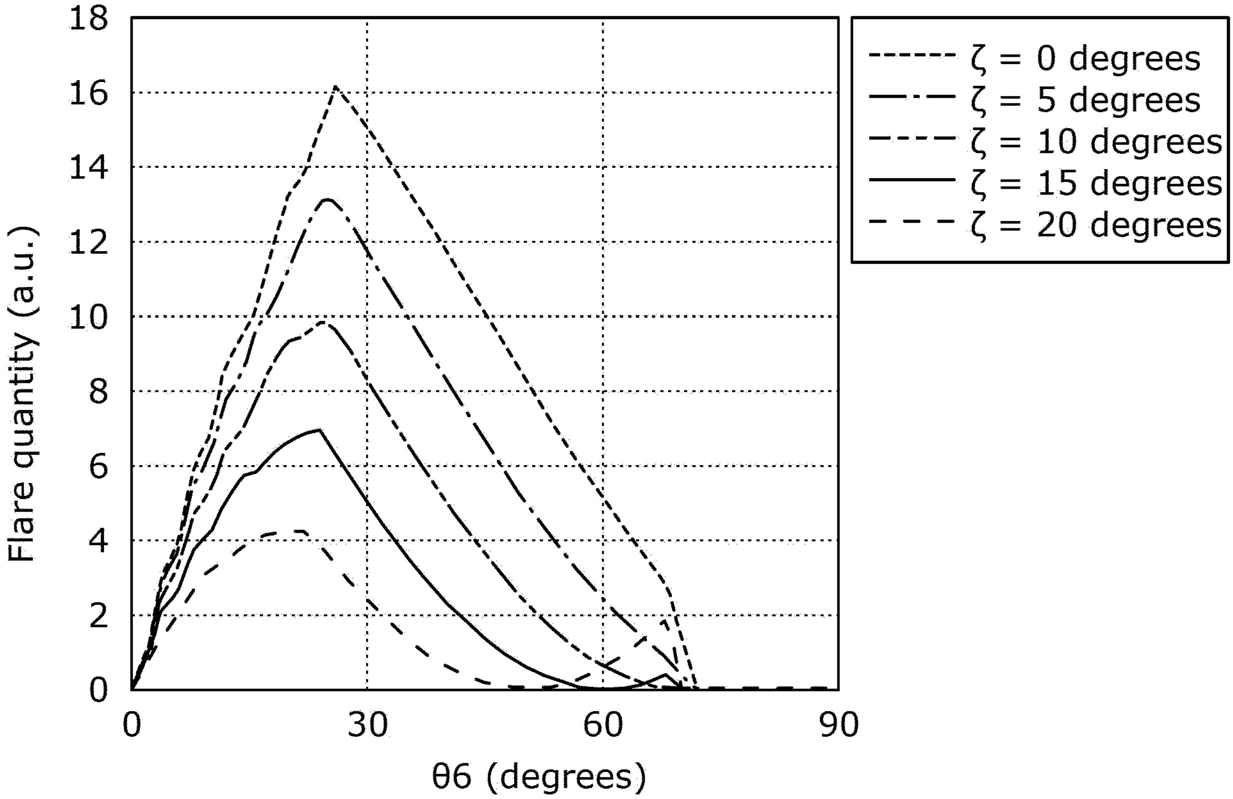
18
16
14
12
10
8
6
4
2
0
Flare quantity (a.u.)
0
30
60
90
θ6 (degrees)
ζ = 0 degrees
ζ = 5 degrees
ζ = 10 degrees
ζ = 15 degrees
ζ = 20 degrees

FIG. 40

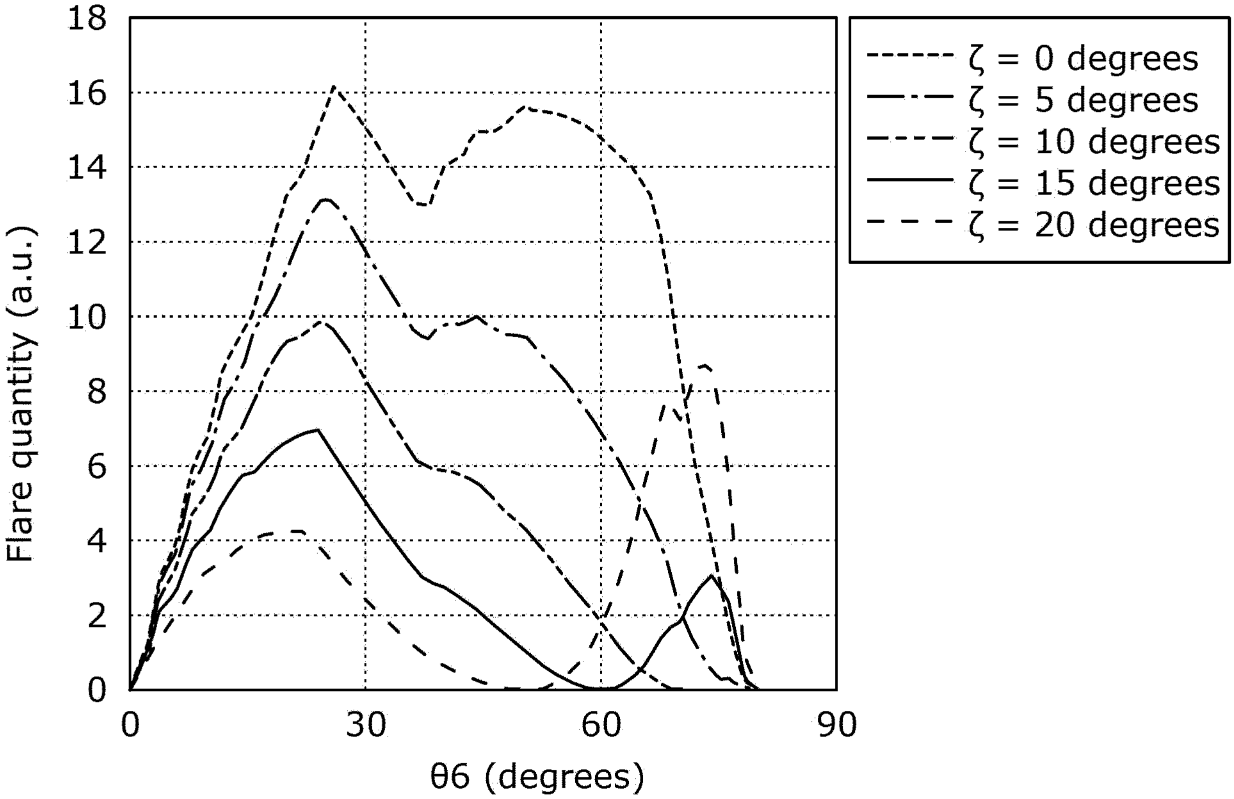

Flare quantity (a.u.)
18
16
14
12
10
8
6
4
2
0
0
30
60
90
θ6 (degrees)
ζ = 0 degrees
ζ = 5 degrees
ζ = 10 degrees
ζ = 15 degrees
ζ = 20 degrees

FIG. 41

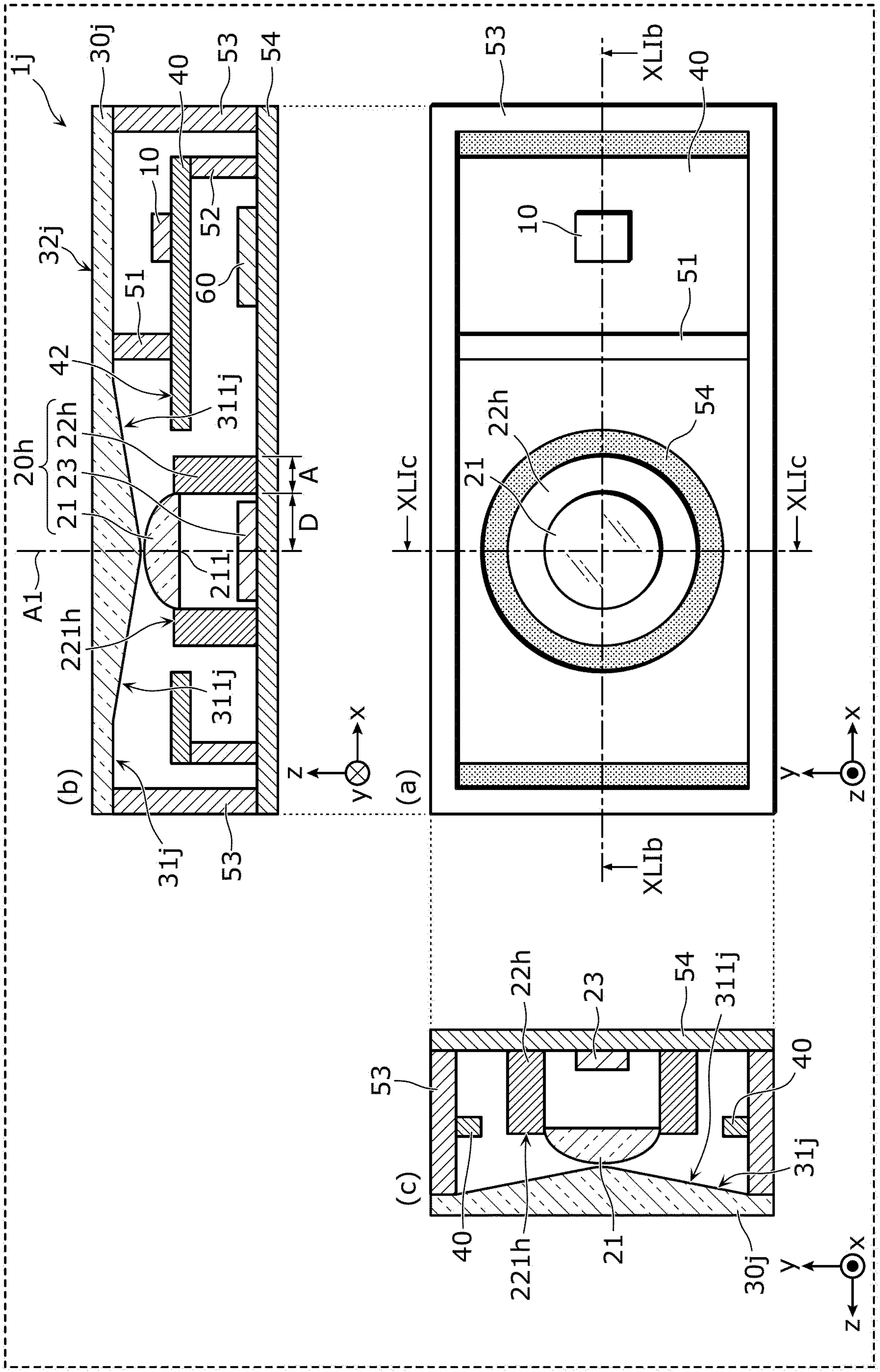
1j
30j
53
54
32j
40
10
52
60
51
42
311j
20h
22h
23
21
211
A
D
A1
221h
(b)
31j
z
x
y
(a)
XLIb
XLIc
(c)

FIG. 42

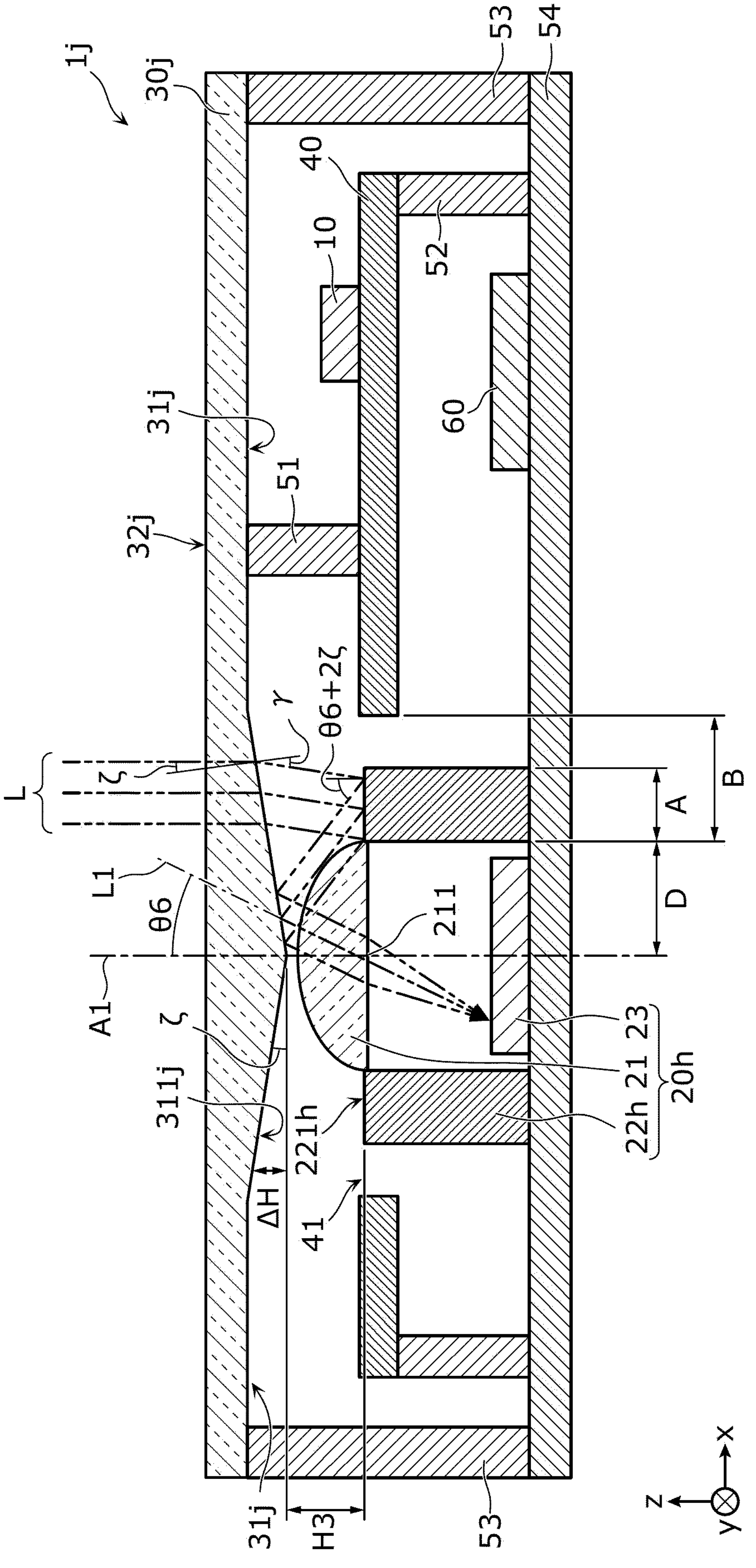
1j
30j
53
54
40
10
52
60
31j
51
32j
θ6+2ζ
γ
ζ
L
A
B
L1
θ6
D
211
A1
23
21
20h
ζ
311j
221h
22h
ΔH
41
31j
H3
53
z
x
y

FIG. 43

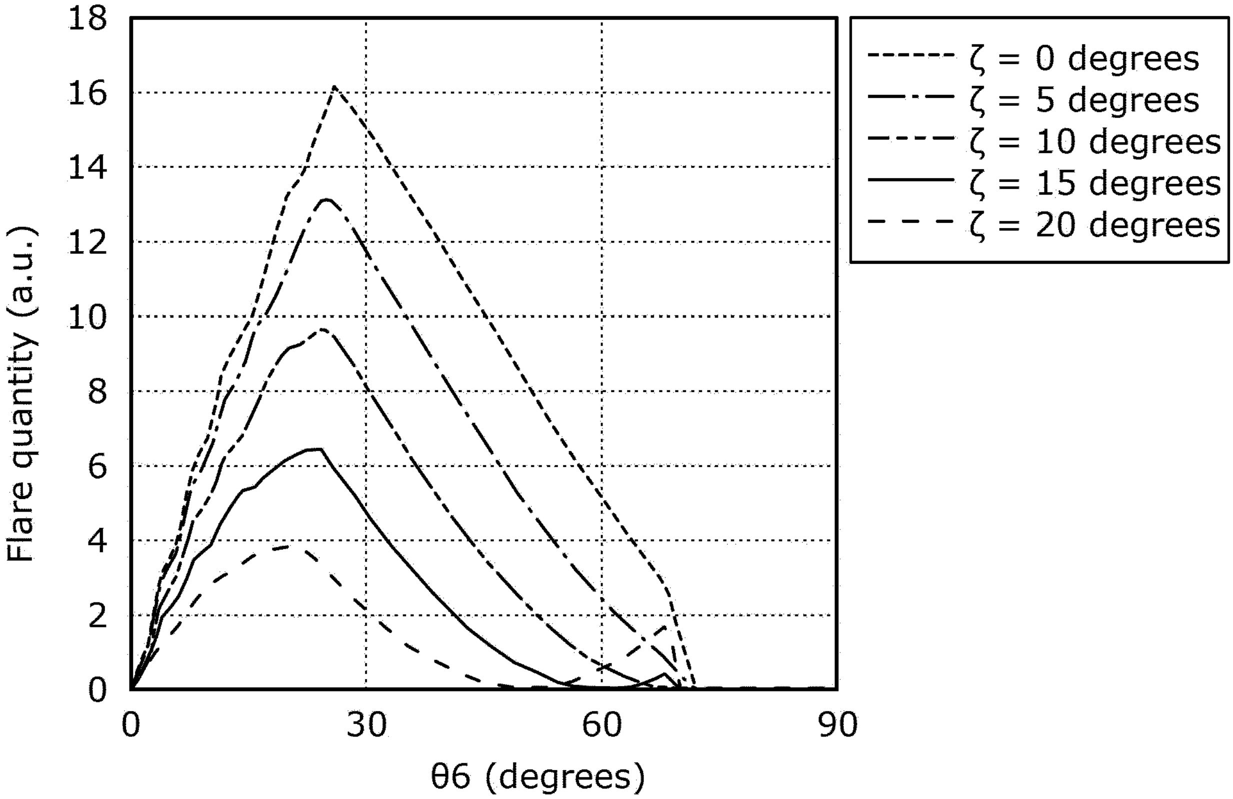
18
16
14
12
10
8
6
4
2
0
Flare quantity (a.u.)
0
30
60
90
θ6 (degrees)
ζ = 0 degrees
ζ = 5 degrees
ζ = 10 degrees
ζ = 15 degrees
ζ = 20 degrees

FIG. 44

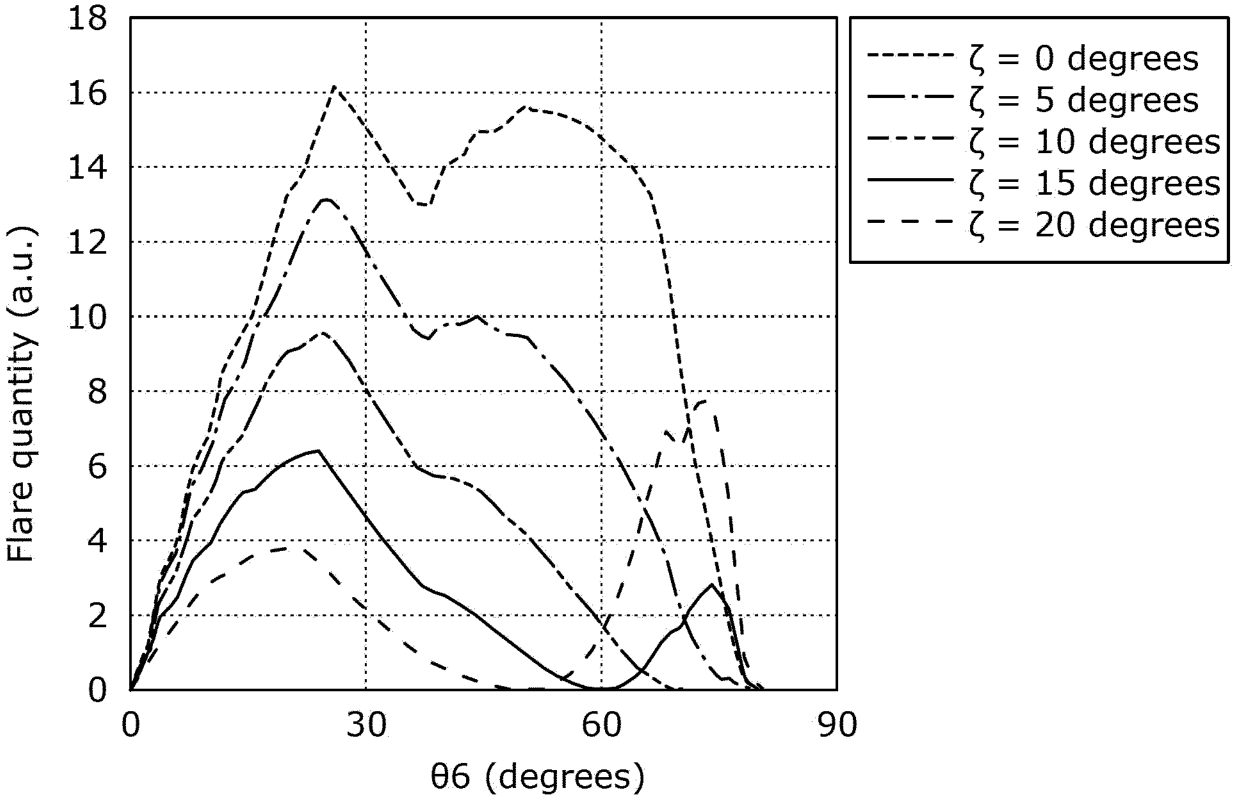
18
16
14
12
10
8
6
4
2
0
Flare quantity (a.u.)
0
30
60
90
θ6 (degrees)
ζ = 0 degrees
ζ = 5 degrees
ζ = 10 degrees
ζ = 15 degrees
ζ = 20 degrees

FIG. 45

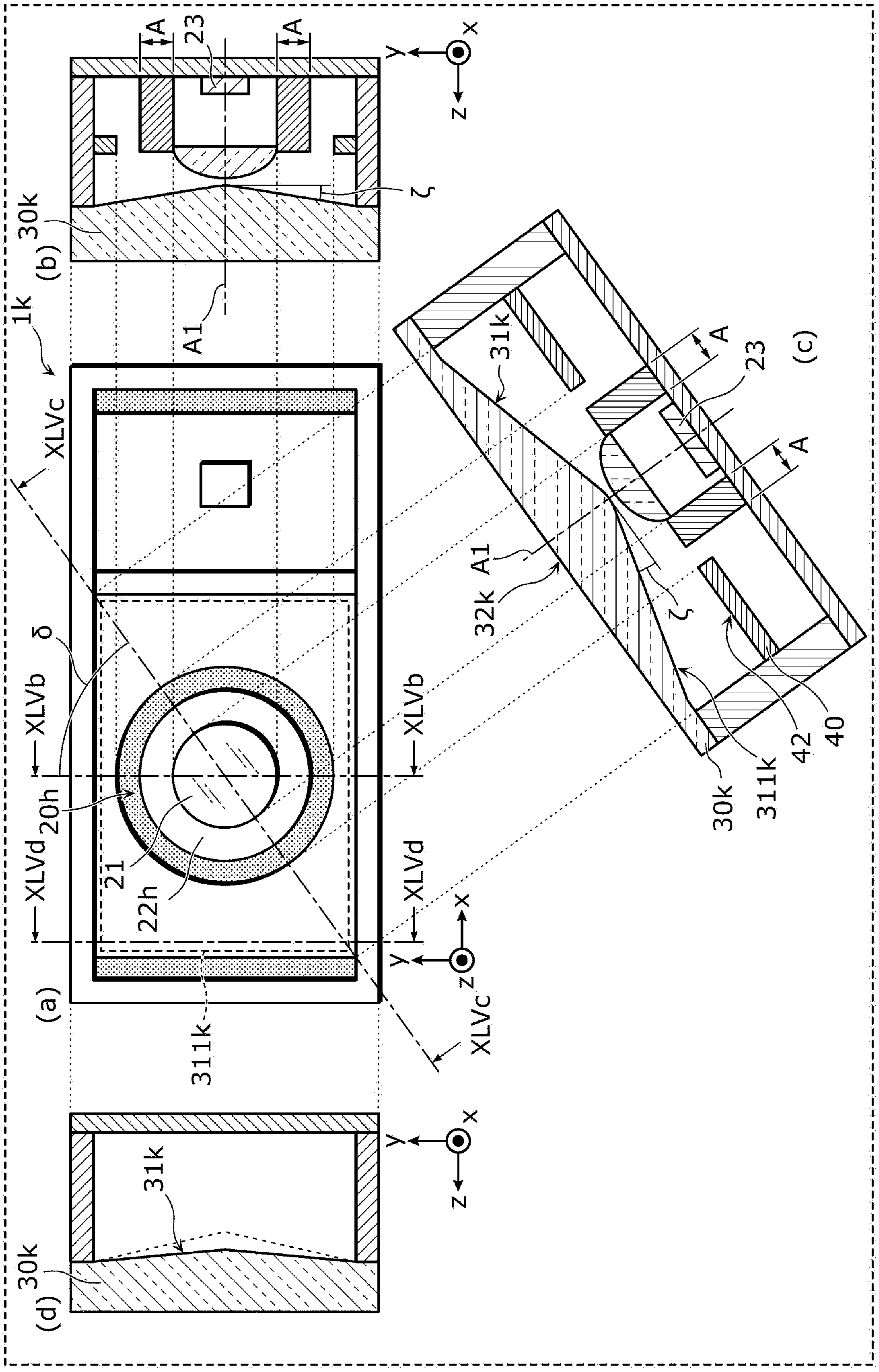

(a)
(b)
(c)
(d)
1k
30k
31k
32k
311k
20h
21
22h
23
A
A1
XLVb
XLVc
XLVd
δ
ζ
40
42
x
y
z

FIG. 46

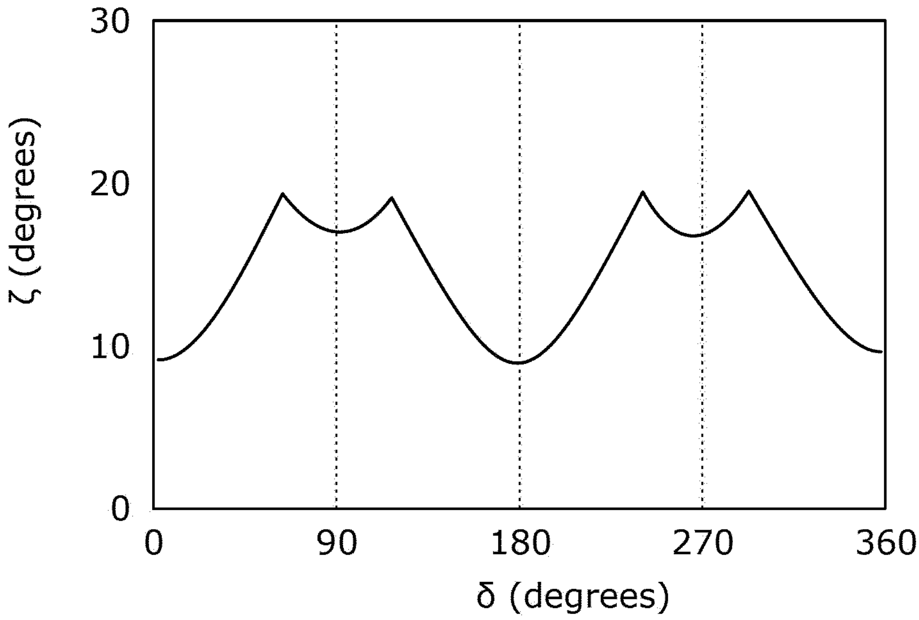

FIG. 47

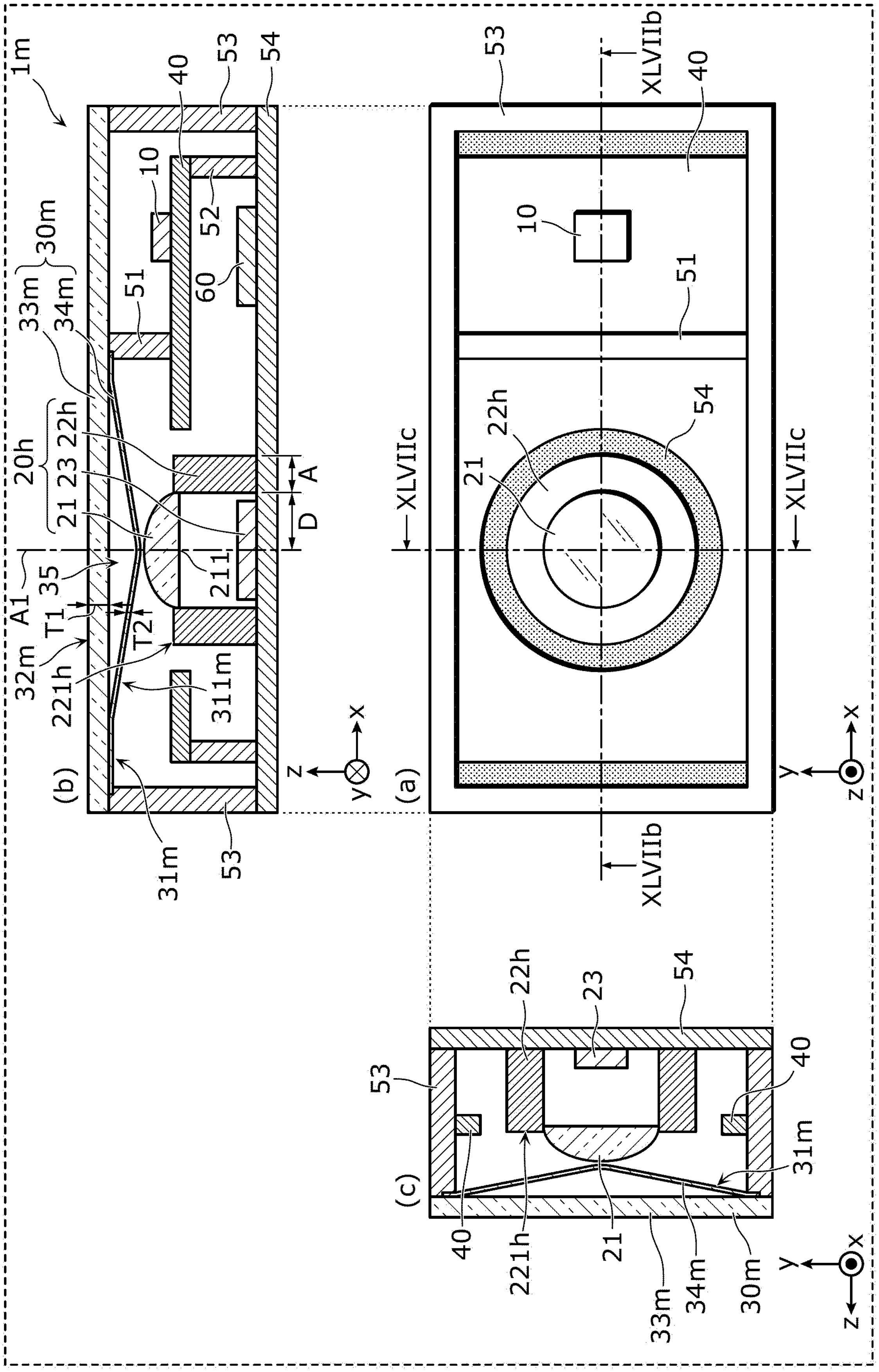
1m
(b)
(a)
(c)
30m
33m
34m
32m
31m
311m
35
A1
T1
T2
20h
21
23
22h
221h
211
10
40
51
52
53
54
60
A
D
XLVIIb
XLVIIc
x
y
z

FIG. 48

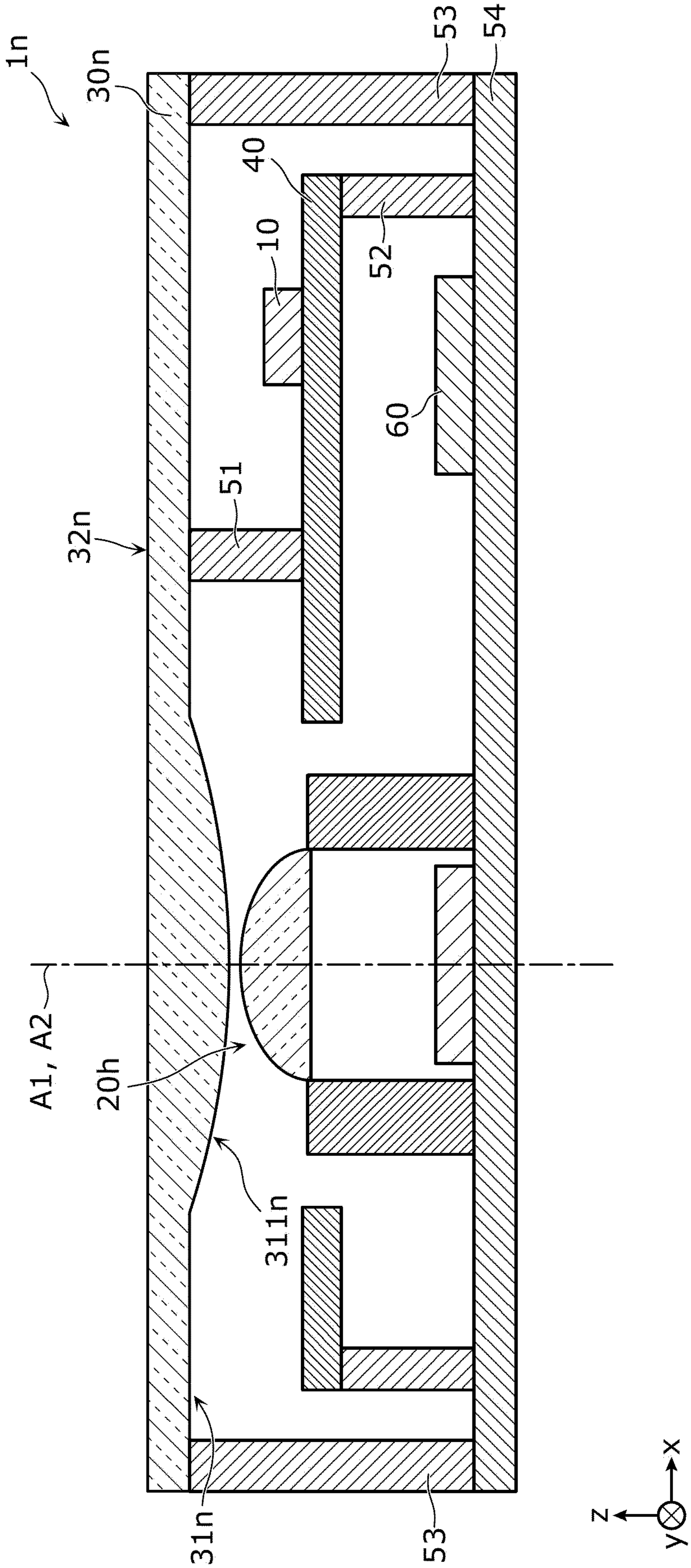

FIG. 49

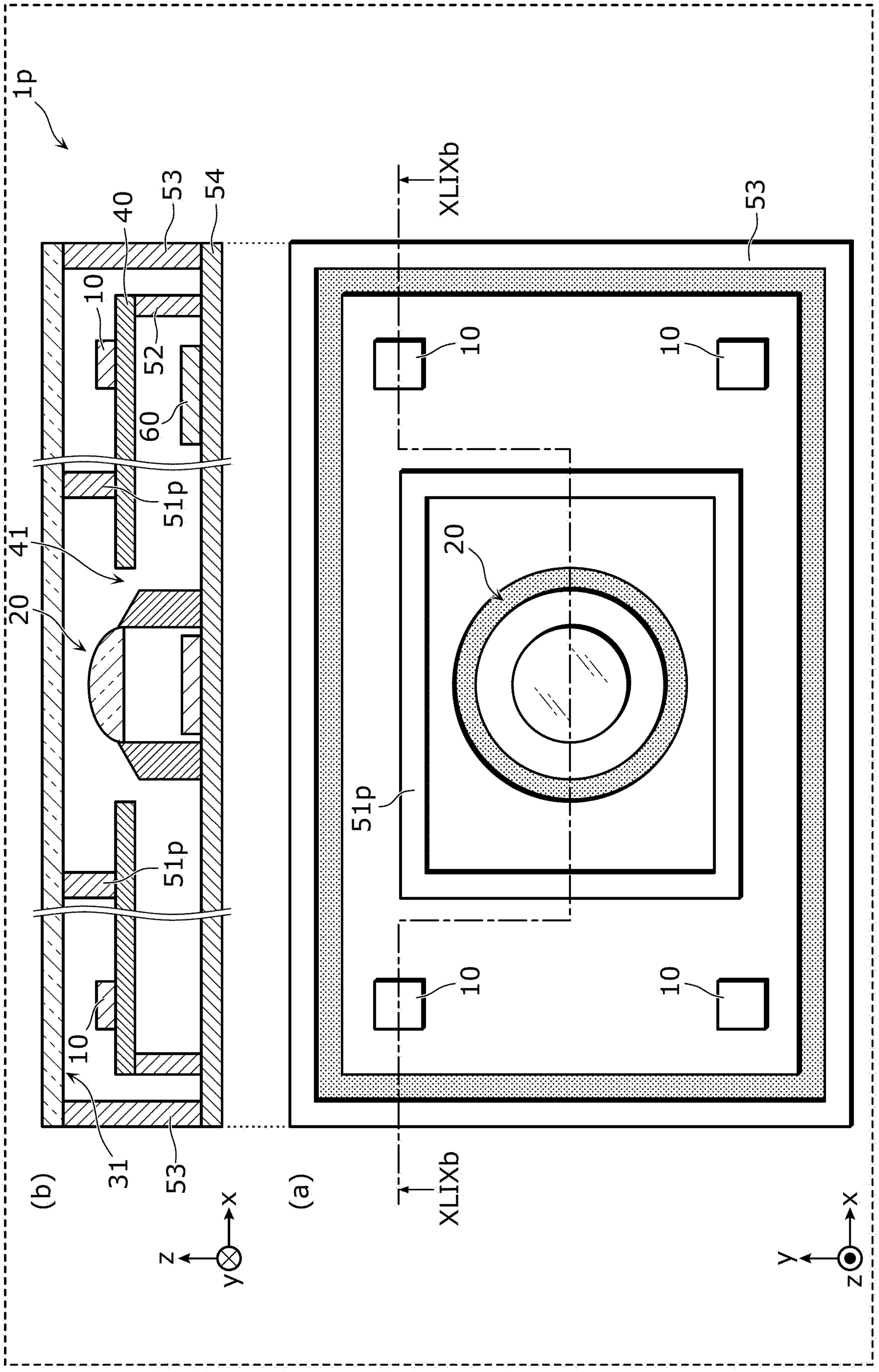

FIG. 50

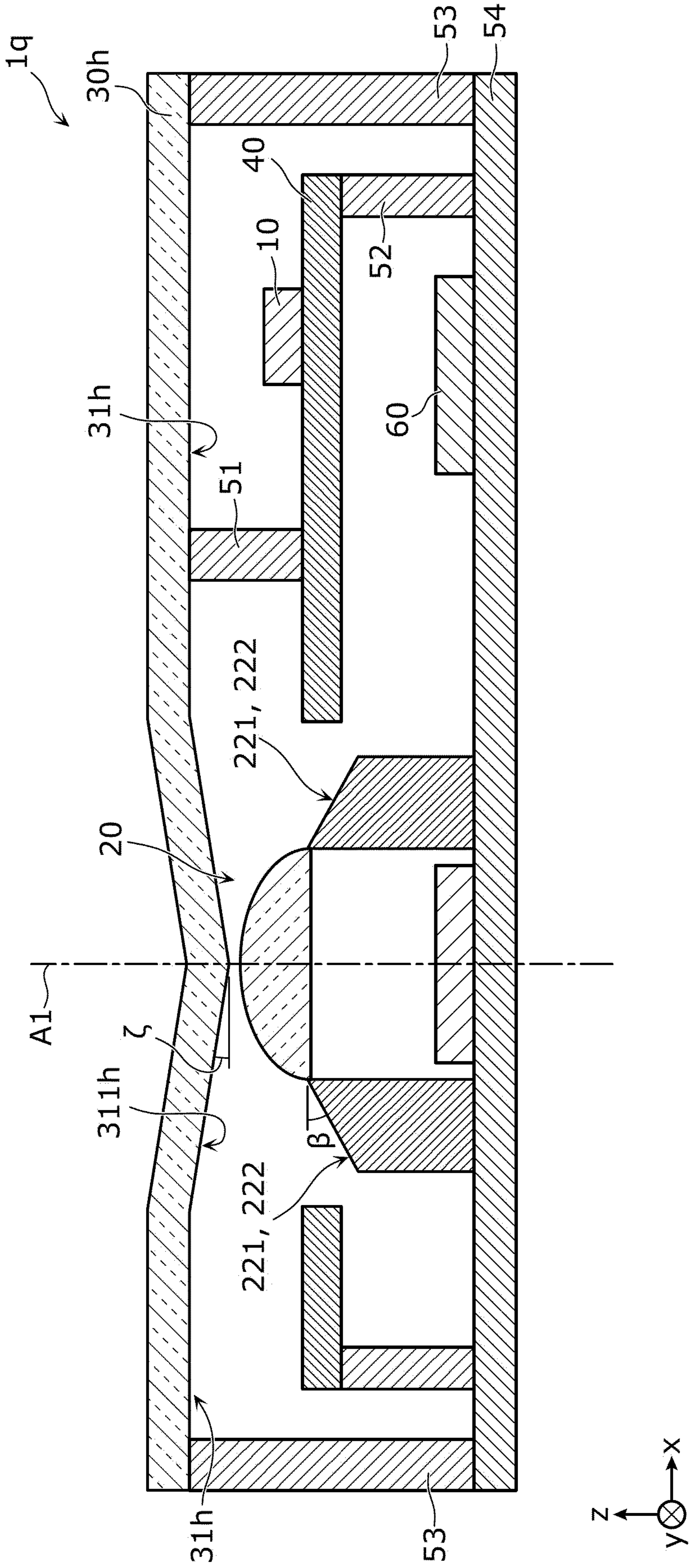
1q
30h
53
54
40
10
52
31h
51
60
221, 222
20
A1
ζ
311h
β
221, 222
31h
53
z
x
y

## INTERNATIONAL SEARCH REPORT

International application No.
**PCT/JP2022/027242**

**A. CLASSIFICATION OF SUBJECT MATTER**

***G01S 7/481***(2006.01)i; ***G01S 17/894***(2020.01)i
FI: G01S7/481 A; G01S17/894

According to International Patent Classification (IPC) or to both national classification and IPC

**B. FIELDS SEARCHED**

Minimum documentation searched (classification system followed by classification symbols)

G01S 7/48 - G01S 7/51; G01S 17/00 - G01S 17/95; G01B 11/00 - G01B 11/30; G01C 3/00 - G01C 3/32; G02B 7/02 - G02B 7/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2013-130422 A (SANYO ELECTRIC CO LTD) 04 July 2013 (2013-07-04) entire text, all drawings | 1-20 |
| A | JP 2012-256040 A (SHARP CORP) 27 December 2012 (2012-12-27) entire text, all drawings | 1-20 |
| A | JP 2018-158125 A (PIONEER ELECTRONIC CORP) 11 October 2018 (2018-10-11) entire text, all drawings | 1-20 |
| A | CN 208723309 U (LITE-ON OPTO TECHNOLOGY (CHANGZHOU) CO., LTD.) 09 April 2019 (2019-04-09) entire text, all drawings | 1-20 |
| A | CN 109031252 A (OPPO GUANGDONG MOBILE TELECOMMUNICATIONS CO., LTD.) 18 December 2018 (2018-12-18) entire text, all drawings | 1-20 |
| A | CN 206161862 U (HYPERSEN TECHNOLOGIES CO., LTD.) 10 May 2017 (2017-05-10) entire text, all drawings | 1-20 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 August 2022** | **06 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/027242**

| Patent document cited in search report | Publication date (day/month/year) | Patent family member(s) | Publication date (day/month/year) |
|---|---|---|---|
| JP 2013-130422 A | 04 July 2013 | (Family: none) | |
| JP 2012-256040 A | 27 December 2012 | US 2013/0314810 A1<br>WO 2012/108247 A1<br>CN 103348275 A | |
| JP 2018-158125 A | 11 October 2018 | (Family: none) | |
| CN 208723309 U | 09 April 2019 | US 2020/0051965 A1 | |
| CN 109031252 A | 18 December 2018 | US 2021/0173057 A1<br>WO 2020/038058 A1<br>EP 3839557 A1 | |
| CN 206161862 U | 10 May 2017 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019191173 A